# EUROPEAN PATENT APPLICATION

(11) **EP 4 852 381 A1**
(43) Date of publication of application: **09.12.2026**
(21) Application number: 24923456.8
(22) Date of filing: 15.11.2024
(51) Int. Cl.: H04L 27/26

(54) **COMMUNICATION METHOD AND APPARATUS**

(30) Priority: 05.02.2024 CN 202410167154
(71) Applicant: HUAWEI TECHNOLOGIES CO., LTD., Shenzhen, Guangdong 518129 (CN)
(72) Inventor: FENG, Qi, Shenzhen, Guangdong 518129 (CN); WANG, Fan, Shenzhen, Guangdong 518129 (CN)
(74) Representative: Pfenning, Meinig & Partner mbB
(86) International application number: PCT/CN2024/132378
(87) International publication number: WO 2025/167253

(57) **Abstract**

A communication method and apparatus are disclosed. The method includes: A transmit end determines a first sequence based on a cyclic shift of a root sequence; the transmit end performs frequency-domain comb mapping on the first sequence to obtain a first signal; the transmit end sends the first signal to a receive end; and the receive end demodulates the received first signal. Within the range of a maximum delay spread and a maximum Doppler spread, a cross-ambiguity function of the first signal is equal to zero, thereby minimizing interference from other signals on the first signal and improving transmission performance of the first signal.

## Description

### CROSS-REFERENCE TO RELATED APPLICATIONS

This application claims priority to Chinese Patent Application No. 202410167154.3, filed with the China National Intellectual Property Administration on February 5, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Communication sequences are widely present in long term evolution (long term evolution, LTE)/new radio (new radio, NR) standard protocols, and may be used to construct demodulation reference signals. Common evaluation indicators for sequences include autocorrelation, cross-correlation, sequence capacity, frequency offset tolerance, peak-to-average power ratio, dual-domain constant modulus, and the like. How to determine cyclic shifts of a root sequence based on the root sequence and further determine corresponding signals is a research direction.

### SUMMARY

Embodiments of this application provide a communication method and apparatus to determine a first signal based on a cyclic shift of a root sequence.

According to a first aspect, a communication method is provided. The method may be applied to a transmit end. For example, in uplink communication, the transmit end may be a terminal, a communication module in the terminal, or a circuit, a chip, or a chip system (for example, a modem (modem) chip, also referred to as a baseband (baseband) chip, or a system on chip (system on chip, SoC), a system in package (system in package, SIP), or the like that includes a modem core) that implements a communication function in the terminal. In downlink communication, the transmit end may be an access network side device, for example, may be an access network device, a module (for example, a chip, a chip system, or a circuit) in the access network device, or a logic node (for example, a CU, a DU, or an RU), a logic module, software, or the like that implements all or a part of functions of the access network device. The method includes: determining a first sequence based on a cyclic shift of a root sequence, where the cyclic shift is associated with a transmission comb index; and outputting a first signal, where the first signal is obtained by performing frequency-domain comb mapping on the first sequence, and a cross-ambiguity function of the first signal is equal to zero within a range of a maximum delay spread and a maximum Doppler spread.

In the foregoing design, the following can be satisfied: Within the range of the maximum delay spread and the maximum Doppler spread, the cross-ambiguity function of the first signal is equal to zero, thereby minimizing interference from other signals on the first signal and improving transmission performance of the first signal.

In a possible design, the first sequence *s_{u,v,m}*(*n*) determined based on the cyclic shift *C_{v,m}* of the root sequence satisfies: ${s}_{u , v , m} \left(n\right) = {e}^{- j \left[\frac{πun \left(n+1\right)}{P}+\frac{2 {πnC}_{v , m}}{N}\right]} , n = 0 , 1 , … , N - 1$

Herein, N represents a sequence length of the root sequence, *P* is a maximum prime number that does not exceed the sequence length *N, u* represents a root sequence number, *u* ∈ {1,2, *... , N -* 1}, *v* represents a cyclic shift index of the root sequence, *m* represents the transmission comb index, and *n* represents a symbol position of the first sequence.

In a possible design, the cyclic shift *C_{v,m}* of the root sequence is determined based on a delay-domain cyclic shift *τ_{v,m}* and a Doppler-domain cyclic shift *v_{v,m},* and satisfies: ${C}_{v , m} = \left({τ}_{v , m}-{uν}_{v , m}\right) mod P$

Herein, *P* is the maximum prime number that does not exceed the sequence length *N,* v represents the cyclic shift index of the root sequence, and *m* represents the transmission comb index.

In a possible design, the first signal *s̅_{u,v,m}*(*i*) is obtained by performing frequency-domain comb mapping on the first sequence *s_{u,v,m}*(*n*), and satisfies: ${\overline{s}}_{u , v , m} \left(i\right) = {\sum }_{n = 0}^{N - 1} {s}_{u , v , m} \left(n\right) δ \left(i-nM+m\right) , i = 1 - M , 2 - M , M \left(N-1\right)$

Herein, *N* represents the sequence length of the root sequence, *M* represents a quantity of transmission combs, *m* represents the transmission comb index, *m* ∈ {0,1, ... , *M* - 1}, *δ*(*i*) represents an impulse function, *n* represents the symbol position of the first sequence, and i represents a subcarrier number.

In a possible design, the first signal includes *s̅_{u,v₁,m₁}*(*i*) and *s̅_{u,v₂,m₂}*(*i*), and a cross-ambiguity function ${A}_{{\overline{s}}_{u , {v}_{1} , {m}_{1}} , {\overline{s}}_{u , {v}_{2} , {m}_{2}}} \left(τ, ν\right)$ of *s̅_{u,v₁,m₁}*(*i*) *and s̅_{u,v₂,m₂}*(*i*) is equal to zero within the range of the maximum delay spread Δ_{T} and the maximum Doppler spread Δ_{F}, and satisfies: $\left|{A}_{{\overline{s}}_{u , {v}_{1} , {m}_{1}} , {\overline{s}}_{u , {v}_{2} , {m}_{2}}}\left(τ, ν\right)\right| = 0 , \left({v}_{1}\neq {v}_{2}\right) ∨ \left({m}_{1}\neq {m}_{2}\right) ∨ \left(τ\neq 0\right) ∨ \left(ν\neq 0\right)$

Herein, u represents the root sequence number, *v*₁ and *v₂* represent cyclic shift indexes of the root sequence, *m*₁ and *m*₂ represent transmission comb indexes, *τ* represents a delay coordinate of an ambiguity function, a value range of *τ* is 0 ≤ *τ* ≤ Δ_{T} - 1, *ν* represents a Doppler coordinate of the ambiguity function, a value range of *ν* is 0 ≤ *v* ≤ Δ_{F} - 1, and an operator V represents a condition OR.

In a possible design, the method further includes: determining a cyclic shift reference point of the root sequence based on a delay-domain cyclic shift reference point and a Doppler-domain cyclic shift reference point; determining the delay-domain cyclic shift and the Doppler-domain cyclic shift based on the cyclic shift reference point of the root sequence; and determining the cyclic shift of the root sequence based on the delay-domain cyclic shift and the Doppler-domain cyclic shift.

In a possible design, the cyclic shift reference point of the root sequence is the delay-domain cyclic shift reference point.

When the cyclic shift index of the root sequence is *v* = 0,1, ... , | 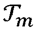 | - 1, and the transmission comb index is *m* = 0,1, *... , M -* 1, the delay-domain cyclic shift *τ_{v,m}* and the Doppler-domain cyclic shift *v_{v,m}* satisfy: $\left\{\begin{matrix}{τ}_{v , m} = k {Δ}_{T} - \left⌊\frac{l}{\left⌈min\left\{{ν}_{⋆}^{T},P-{ν}_{⋆}^{T}\right\}/{Δ}_{F}\right⌉}\right⌋ ⋅ {τ}_{⋆}^{T} mod {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Alternatively, when the cyclic shift index of the root sequence is *v* = | 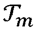 |, | 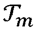 | + 1, ..., | 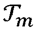 | + | 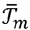 | - 1, and the transmission comb index is *m* = 0,1, *... , M -* 1, the delay-domain cyclic shift *τ_{v,m}* and the Doppler-domain cyclic shift *ν_{v,m}* satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Alternatively, when the cyclic shift index of the root sequence is $v = \left|{T}_{m}\right| + \left|{\overline{T}}_{m}\right| , \left|{T}_{m}\right| + \left|{\overline{T}}_{m}\right| + 1 , … , \left|{T}_{m}\right| + \left|{\overline{T}}_{m}\right| + \left|{\overline{T}}_{m}\right| + \left|{\overline{\overline{T}}}_{m}\right| - 1$ , and the transmission comb index is *m* = 0, 1, ..., *M* - 1, the delay-domain cyclic shift *τ_{v,m}* and the Doppler-domain cyclic shift *v_{v,m}* satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Herein, *P* is the maximum prime number that does not exceed the sequence length *N, M* represents the quantity of transmission combs, Δ_{T} represents the maximum delay spread, Δ_{F} represents the maximum Doppler spread, $\left〈{τ}_{⋆}^{T}, {ν}_{⋆}^{T}\right〉$ represents coordinates of the cyclic shift reference point of the root sequence, ${k}_{⋆}^{T}$ represents a quantity of delay-domain full cyclic shifts, ${l}_{⋆}^{T}$ represents a quantity of Doppler-domain full cyclic shifts, ${\overline{k}}_{⋆}^{T}$ represents a quantity of delay-domain near-end residual cyclic shifts, ${\overline{l}}_{⋆}^{T}$ represents a quantity of Doppler-domain near-end residual cyclic shifts, ${\overline{\overline{k}}}_{⋆}^{T}$ represents a quantity of delay-domain far-end residual cyclic shifts, ${\overline{\overline{l}}}_{⋆}^{T}$ represents a quantity of Doppler-domain far-end residual cyclic shifts, an operator *sgn*(·) represents a sign function, an operator $\left⌊⋅\right⌋$ represents rounding down, an operator $\left⌈⋅\right⌉$ represents rounding up, an operator |·| represents a cardinality of a set, and 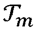 *,* 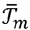 *,* ${\overline{\overline{T}}}_{m}$ are respectively as follows: ${T}_{m} = \left\{\left.\left〈k, l\right〉\right|0\leq k<{k}_{⋆}^{T},0\leq l<{l}_{⋆}^{T},m=l mod M\right\} ;$ ${\overline{T}}_{m} = \left\{\left.\left〈k, l\right〉\right|0<k\leq {\overline{k}}_{⋆}^{T},-{\overline{l}}_{⋆}^{T}\leq l<0,m=l mod M\right\} ;$ and ${\overline{\overline{T}}}_{m} = \left\{\left.\left〈k, l\right〉\right|0<k\leq {\overline{\overline{k}}}_{⋆}^{T},-{\overline{l}}_{⋆}^{T}-{\overline{\overline{l}}}_{⋆}^{T}\leq l<{\overline{l}}_{⋆}^{T},m=l mod M\right\} .$

In a possible design, the cyclic shift reference point of the root sequence is the Doppler-domain cyclic shift reference point.

When the cyclic shift index of the root sequence is *v* = 0,1, ..., | 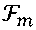 | - 1, and the transmission comb index is *m* = 0,1, *... , M -* 1, the delay-domain cyclic shift *τ_{v,m}* and the Doppler-domain cyclic shift *v_{v,m}* satisfy: $\left\{\begin{matrix}{τ}_{v , m} = sgn \left({τ}_{⋆}^{F}-P/2\right) ⋅ k {Δ}_{T} \\ {ν}_{v , m} = \left[\left(lM+m\right){Δ}_{F}-m-\left⌊\frac{k}{\left⌈min\left\{{τ}_{⋆}^{F},P-{τ}_{⋆}^{F}\right\}/{Δ}_{T}\right⌉}\right⌋⋅{ν}_{⋆}^{F} mod {Δ}_{F}\right] / M\end{matrix}\right.$

Alternatively, when the cyclic shift index of the root sequence is *v* = | 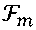 |, | 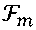 | + 1, ... , | 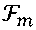 | + | 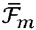 | - 1, and the transmission comb index is *m* = 0*,*1, *... , M* - 1, the delay-domain cyclic shift *τ_{v,m}* and the Doppler-domain cyclic shift *v_{v,m}* satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix}\right.$

Alternatively, when the cyclic shift index of the root sequence is $v = \left|{F}_{m}\right| + \left|{\overline{F}}_{m}\right| , \left|{F}_{m}\right| + \left|{\overline{F}}_{m}\right| + 1 , … , \left|{F}_{m}\right| + \left|{\overline{F}}_{m}\right| + \left|{\overline{\overline{F}}}_{m}\right| - 1$ , and the transmission comb index is *m* = 0, 1, ... , *M* - 1, the delay-domain cyclic shift *τ_{v,m}* and the Doppler-domain cyclic shift *v_{v,m}* satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix}\right.$

Herein, *P* is the maximum prime number that does not exceed the sequence length *N, M* represents the quantity of transmission combs, Δ_{T} represents the maximum delay spread, Δ_{F} represents the maximum Doppler spread, $\left〈{τ}_{⋆}^{F}, {ν}_{⋆}^{F}\right〉$ represents coordinates of the cyclic shift reference point of the root sequence, ${k}_{⋆}^{F}$ represents a quantity of delay-domain full cyclic shifts, ${l}_{⋆}^{F}$ represents a quantity of Doppler-domain full cyclic shifts, ${\overline{k}}_{⋆}^{F}$ represents a quantity of delay-domain near-end residual cyclic shifts, ${\overline{l}}_{⋆}^{F}$ represents a quantity of Doppler-domain near-end residual cyclic shifts, ${\overline{\overline{k}}}_{⋆}^{F}$ represents a quantity of delay-domain far-end residual cyclic shifts, ${\overline{\overline{l}}}_{⋆}^{F}$ represents a quantity of Doppler-domain far-end residual cyclic shifts, an operator sgn(·) represents a sign function, an operator $\left⌊⋅\right⌋$ represents rounding down, an operator $\left⌈⋅\right⌉$ represents rounding up, an operator |·| represents a cardinality of a set, and 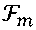 , 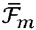 , ${\overline{\overline{F}}}_{m}$ are respectively as follows: ${F}_{m} = \left\{\left.\left〈k, l\right〉\right|0\leq k<{k}_{⋆}^{F},0\leq l<{l}_{⋆}^{F},m=\left(\left⌊\frac{k}{\left⌈min\left\{{τ}_{⋆}^{F},P-{τ}_{⋆}^{F}\right\}/{Δ}_{T}\right⌉}\right⌋{l}_{⋆}^{F}+l\right)mod M\right\} ;$ ${\overline{F}}_{m} = \left\{\left.\left〈k, l\right〉\right|-{\overline{k}}_{⋆}^{F}\leq k<0,0<l\leq {\overline{l}}_{⋆}^{F},m=\left(-l\right)mod M\right\} ;$ and ${\overline{\overline{F}}}_{m} = \left\{\left.\left〈k, l\right〉\right|-{\overline{k}}_{⋆}^{F}-{\overline{\overline{k}}}_{⋆}^{F}\leq k<-{\overline{k}}_{⋆}^{F},0<l\leq {\overline{\overline{l}}}_{⋆}^{F},m=\left(-l\right)mod M\right\} .$

In a possible design, a set 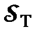 including coordinates of the delay-domain cyclic shift reference point satisfies: ${S}_{T} = \left\{\left.\left〈τ,M⋅{u}^{- 1}τ mod P\right〉\right|\begin{matrix}min \left\{\left(\pm {u}^{- 1}τ\right)modP\right\} < {min}_{n = 1 , 2 , … , τ - 1} \left\{\left(\pm {u}^{- 1}n\right)modP\right\} , \\ τ ∈ \left\{{Δ}_{T},{Δ}_{T}+1,…,{min}_{ν ∈ \left\{\pm 1,\pm 2,…,\pm \left(\left⌈{Δ}_{F}/M\right⌉-1\right)\right\}}\left\{uvmodP\right\}\right\}\end{matrix}\right\}$

Herein, ***P*** is the maximum prime number that does not exceed the sequence length ***N**, **M*** represents the quantity of transmission combs, ***u*** represents the root sequence number, Δ_{T} represents the maximum delay spread, Δ_{F} represents the maximum Doppler spread, $\left〈{τ}_{i}^{T}, {ν}_{i}^{T}\right〉$ represents coordinates of an ***i***^{th} delay-domain cyclic shift reference point, a value range of ***i*** is **1** ≤ ***i*** ≤ | 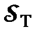 | , an operator (·)⁻¹ represents a multiplicative inverse, and the operator |·| represents a cardinality of the set.

In a possible design, a set 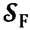 including coordinates of the Doppler-domain cyclic shift reference point satisfies: ${S}_{F} = \left\{\left〈uν modP,M⋅ν\right〉\left|\begin{matrix}min \left\{\left(\pm uν\right)mod P\right\} < {min}_{n = 1 , 2 , … , ν - 1} \left\{\left(\pm un\right)mod P\right\} , \\ ν ∈ \left\{\left⌈{Δ}_{F}/M\right⌉,\left⌈{Δ}_{F}/M\right⌉+1, …,{min}_{τ ∈ \left\{\pm 1,\pm 2,…,\pm \left({Δ}_{T}-1\right)\right\}}\left\{{u}^{- 1}τ mod P\right\}\right\}\end{matrix}\right.\right\}$

Herein, ***P*** is the maximum prime number that does not exceed the sequence length ***N**, **M*** represents the quantity of transmission combs, ***u*** represents the root sequence number, Δ_{T} represents the maximum delay spread, Δ_{F} represents the maximum Doppler spread, $\left〈{τ}_{i}^{F}, {ν}_{i}^{F}\right〉$ represents coordinates of an ***i***^{th} Doppler-domain cyclic shift reference point, a value range of ***i*** is **1** ≤ ***i*** ≤ | 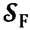 |, the operator (·)⁻¹ represents a multiplicative inverse, and the operator |·| represents a cardinality of the set.

In a possible design, determining the cyclic shift reference point of the root sequence based on the delay-domain cyclic shift reference point and the Doppler-domain cyclic shift reference point includes: determining the cyclic shift reference point of the root sequence based on a quantity of cyclic shifts corresponding to the delay-domain cyclic shift reference point and a quantity of cyclic shifts corresponding to the Doppler-domain cyclic shift reference point.

In a possible design, determining the cyclic shift reference point of the root sequence based on the quantity of cyclic shifts corresponding to the delay-domain cyclic shift reference point and the quantity of cyclic shifts corresponding to the Doppler-domain cyclic shift reference point includes: determining, from the quantity of cyclic shifts corresponding to the delay-domain cyclic shift reference point and the quantity of cyclic shifts corresponding to the Doppler-domain cyclic shift reference point, a reference point with a largest quantity of cyclic shifts as the cyclic shift reference point of the root sequence.

In the foregoing design, a quantity of cyclic shifts of the determined root sequence can be maximized, so that zero ambiguity cross-correlation of the root sequence is maximized.

In a possible design, a quantity ${Ω}_{⋆}^{†}$ of cyclic shifts corresponding to the cyclic shift reference point $\left〈{τ}_{⋆}^{†}, {ν}_{⋆}^{†}\right〉$ of the root sequence satisfies: ${Ω}_{⋆}^{†} = max \left\{{Ω}_{1}^{T},{Ω}_{2}^{T}, …{Ω}_{\left|{S}_{T}\right|}^{T},{Ω}_{1}^{F},{Ω}_{2}^{F},…,{Ω}_{\left|{S}_{F}\right|}^{F}\right\}$

Herein, ${Ω}_{1}^{T} , {Ω}_{2}^{T} , … {Ω}_{\left|{S}_{T}\right|}^{T}$, represent quantities of cyclic shifts corresponding to delay-domain cyclic shift reference points, ${Ω}_{1}^{F} , {Ω}_{2}^{F} , … , {Ω}_{\left|{S}_{F}\right|}^{F}$ represent quantities of cyclic shifts corresponding to Doppler-domain cyclic shift reference points, and ${Ω}_{⋆}^{†}$ represents the quantity of cyclic shifts corresponding to the cyclic shift reference point of the root sequence.

In a possible design, a quantity ${Ω}_{i}^{T}$ of cyclic shifts corresponding to the delay-domain cyclic shift reference point $\left〈{τ}_{i}^{T}, {ν}_{i}^{T}\right〉$ satisfies: ${Ω}_{i}^{T} = {k}_{i}^{T} ⋅ {l}_{i}^{T} + {\overline{k}}_{i}^{T} ⋅ {\overline{l}}_{i}^{T} + {\overline{\overline{k}}}_{i}^{T} ⋅ {\overline{\overline{l}}}_{i}^{T}$

Herein, ${k}_{i}^{T}$ represents a quantity of delay-domain full cyclic shifts, ${l}_{i}^{T}$ represents a quantity of Doppler-domain full cyclic shifts, ${\overline{k}}_{i}^{T}$ represents a quantity of delay-domain near-end residual cyclic shifts, ${\overline{l}}_{i}^{T}$ represents a quantity of Doppler-domain near-end residual cyclic shifts, ${\overline{\overline{k}}}_{i}^{T}$ represents a quantity of delay-domain far-end residual cyclic shifts, ${\overline{\overline{l}}}_{i}^{T}$ represents a quantity of Doppler-domain far-end residual cyclic shifts, and the value range of ***i*** is **1** ≤ ***i*** ≤ | 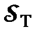 |.

In a possible design, the quantity ${k}_{i}^{T}$ of delay-domain full cyclic shifts satisfies: ${k}_{i}^{T} = \left⌊{τ}_{i}^{T}/{Δ}_{T}\right⌋$

Herein, Δ_{T} represents the maximum delay spread, $\left〈{τ}_{i}^{T}, {ν}_{i}^{T}\right〉$ represents the coordinates of the delay-domain cyclic shift reference point, and the operator $\left⌊⋅\right⌋$ represents rounding down.

In a possible design, the quantity ${l}_{i}^{T}$ of Doppler-domain full cyclic shifts satisfies:

Restricted coordinates $\left〈{\overline{τ}}_{i}^{T}, {\overline{ν}}_{i}^{T}\right〉$ are determined based on the coordinates $\left〈{τ}_{i}^{T}, {ν}_{i}^{T}\right〉$ of the delay-domain cyclic shift reference point, and satisfy: $\left\{\begin{matrix}{\overline{τ}}_{i}^{T} = {min}_{ν ∈ \left\{1,2,…,max\left\{\left⌈{Δ}_{F}/M\right⌉-1,min\left\{{ν}_{i}^{T}/M,P-{ν}_{i}^{T}/M\right\}-1\right\}\right\}} \left\{sgn\left({ν}_{i}^{T}-P/2\right)uν mod P\right\} \\ {\overline{ν}}_{i}^{T} = M ⋅ {u}^{- 1} {\overline{τ}}_{i}^{T} mod P\end{matrix}\right.$

Herein, ***P*** represents the maximum prime number that does not exceed the sequence length ***N**, **u*** represents the root sequence number, Δ_{F} represents the maximum Doppler spread, ***M*** represents the quantity of transmission combs, and the operator (·)⁻¹ represents a multiplicative inverse.

A Doppler spacing ${d}_{i}^{T}$ is determined based on the coordinates $\left〈{τ}_{i}^{T}, {ν}_{i}^{T}\right〉$ of the delay-domain cyclic shift reference point and the restricted coordinates $\left〈{\overline{τ}}_{i}^{T}, {\overline{ν}}_{i}^{T}\right〉$, and satisfies: ${d}_{i}^{T} = min \left\{d\left|{τ}_{i}^{T}-\left(\left⌊\frac{d / {Δ}_{F}}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\geq {\overline{τ}}_{i}^{T}-\left⌊\frac{d - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}\right.\right\}$

Herein, ***P*** represents the maximum prime number that does not exceed the sequence length ***N**, **M*** represents the quantity of transmission combs, Δ_{T} represents the maximum delay spread, Δ_{F} represents the maximum Doppler spread, the operator $\left⌊⋅\right⌋$ represents rounding down, and the operator $\left⌈⋅\right⌉$ represents rounding up.

The quantity ${l}_{i}^{T}$ of Doppler-domain full cyclic shifts is determined based on the Doppler spacing ${d}_{i}^{T}$, and satisfies: ${l}_{i}^{T} = \left⌊{d}_{i}^{T}/{Δ}_{F}\right⌋$

Herein, Δ_{F} represents the maximum Doppler spread, ${d}_{i}^{T}$ represents the Doppler spacing, and $\left⌊⋅\right⌋$ represents rounding down.

In a possible design, the quantity ${\overline{k}}_{i}^{T}$ of delay-domain near-end residual cyclic shifts satisfies: ${\overline{k}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{{l}_{i}^{T} - 1}{\left⌈min\left\{{ν}_{i}^{T},MP-{ν}_{i}^{T}\right\}/{Δ}_{F}\right⌉}\right⌋+1\right)⋅{τ}_{i}^{T}mod{Δ}_{T}\right)/{Δ}_{T}\right⌋, 0\right\}$

Herein, ***P*** represents the maximum prime number that does not exceed the sequence length ***N**, **M*** represents the quantity of transmission combs, Δ_{T} represents the maximum delay spread, Δ_{F} represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible design, the quantity ${\overline{l}}_{i}^{T}$ of Doppler-domain near-end residual cyclic shifts satisfies: ${\overline{l}}_{i}^{T} = {l}_{i}^{T} - \left⌈min\left\{{ν}_{i}^{T},MP-{ν}_{i}^{T}\right\}/{Δ}_{F}\right⌉ ⋅ \left⌊\frac{{l}_{i}^{T}}{\left⌈min\left\{{ν}_{i}^{T},MP-{ν}_{i}^{T}\right\}/{Δ}_{F}\right⌉}\right⌋$

Herein, ***P*** represents the maximum prime number that does not exceed the sequence length ***N**, **M*** represents the quantity of transmission combs, Δ_{F} represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible design, the quantity ${\overline{\overline{k}}}_{i}^{T}$ of delay-domain far-end residual cyclic shifts satisfies: ${\overline{\overline{k}}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{2 {l}_{i}^{T} - \left⌊\left({d}_{i}^{T}+min\left\{{ν}_{i}^{T},MP-{ν}_{i}^{T}\right\}\right)/{Δ}_{F}\right⌋}{\left⌈min\left\{{ν}_{i}^{T},MP-{ν}_{i}^{T}\right\}/{Δ}_{F}\right⌉}\right⌋+1\right)⋅{τ}_{i}^{T}mod{Δ}_{T}\right)/{Δ}_{T}\right⌋, 0\right\}$

Herein, ***P*** represents the maximum prime number that does not exceed the sequence length ***N**, **M*** represents the quantity of transmission combs, Δ_{T} represents the maximum delay spread, Δ_{F} represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible design, the quantity ${\overline{\overline{l}}}_{i}^{T}$ of Doppler-domain far-end residual cyclic shifts satisfies: ${\overline{\overline{l}}}_{i}^{T} = \left⌊\left({d}_{i}^{T}+min\left\{{ν}_{i}^{T},MP-{ν}_{i}^{T}\right\}\right)/{Δ}_{F}\right⌋ - {l}_{i}^{T} - {\overline{l}}_{i}^{T}$

Herein, ***P*** represents the maximum prime number that does not exceed the sequence length ***N, M*** represents the quantity of transmission combs, Δ_{F} represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, ${\overline{l}}_{i}^{T}$ represents the quantity of Doppler-domain near-end residual cyclic shifts, and the operator $\left⌊⋅\right⌋$ represents rounding down.

In a possible design, a quantity ${Ω}_{i}^{F}$ of cyclic shifts corresponding to the Doppler-domain cyclic shift reference point $\left〈{τ}_{i}^{F}, {ν}_{i}^{F}\right〉$ satisfies: ${Ω}_{i}^{F} = {l}_{i}^{F} ⋅ {k}_{i}^{F} + {\overline{l}}_{i}^{F} ⋅ {\overline{k}}_{i}^{F} + {\overline{\overline{l}}}_{i}^{F} ⋅ {\overline{\overline{k}}}_{i}^{F}$

Herein, ${l}_{i}^{F}$ represents a quantity of Doppler-domain full cyclic shifts, ${k}_{i}^{F}$ represents a quantity of delay-domain full cyclic shifts, ${\overline{l}}_{i}^{F}$ represents a quantity of Doppler-domain near-end residual cyclic shifts, ${\overline{k}}_{i}^{F}$ represents a quantity of delay-domain near-end residual cyclic shifts, ${\overline{\overline{l}}}_{i}^{F}$ represents a quantity of Doppler-domain far-end residual cyclic shifts, ${\overline{\overline{k}}}_{i}^{F}$ represents a quantity of delay-domain far-end residual cyclic shifts, and the value range of ***i*** is **1** ≤ ***i*** ≤ | 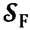 |.

In a possible design, the quantity ${l}_{i}^{F}$ of Doppler-domain full cyclic shifts satisfies: ${l}_{i}^{F} = \left⌊{ν}_{i}^{F}/{Δ}_{F}\right⌋$

Herein, Δ_{F} represents the maximum Doppler spread, $\left〈{τ}_{i}^{F}, {ν}_{i}^{F}\right〉$ represents the coordinates of the Doppler-domain cyclic shift reference point, and the operator $\left⌊⋅\right⌋$ represents rounding down.

In a possible design, the quantity ${k}_{i}^{F}$ of delay-domain full cyclic shifts satisfies:

Restricted coordinates $\left〈{\overline{τ}}_{i}^{F}, {\overline{ν}}_{i}^{F}\right〉$ are determined based on the coordinates $\left〈{τ}_{i}^{F}, {ν}_{i}^{F}\right〉$ of the Doppler-domain cyclic shift reference point, and satisfy: $\left\{\begin{matrix}{\overline{τ}}_{i}^{F} = u {ν}_{i}^{F} / M mod P \\ {ν}_{i}^{F} = {min}_{τ ∈ \left\{1,2,…,max\left\{{Δ}_{T}-1,min\left\{{τ}_{i}^{F},P-{τ}_{i}^{F}\right\}-1\right\}\right\}} \left\{M⋅sgn\left({τ}_{i}^{F}-P/2\right){u}^{- 1}τmodP\right\}\end{matrix}\right.$

Herein, ***P*** represents the maximum prime number that does not exceed the sequence length ***N**, **M*** represents the quantity of transmission combs, ***u*** represents the root sequence number, Δ_{T} represents the maximum delay spread, $\left〈{τ}_{i}^{F}, {ν}_{i}^{F}\right〉$ represents the coordinates of the Doppler-domain cyclic shift reference point, and the operator (·)⁻¹ represents a multiplicative inverse.

A delay spacing ${d}_{i}^{F}$ is determined based on the coordinates $\left〈{τ}_{i}^{F}, {ν}_{i}^{F}\right〉$ of the Doppler-domain cyclic shift reference point and the restricted coordinates $\left〈{\overline{τ}}_{i}^{F}, {\overline{ν}}_{i}^{F}\right〉$, and satisfies: ${d}_{i}^{F} = min \left\{d\left|{ν}_{i}^{F}-\left(\left⌊\frac{d / {Δ}_{T}}{\left⌈min\left\{{τ}_{i}^{F},P-{τ}_{i}^{F}\right\}/{Δ}_{T}\right⌉}\right⌋+1\right)⋅{ν}_{i}^{F} mod {Δ}_{F}\geq {\overline{ν}}_{i}^{F}-\left⌊\frac{d - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}\right.\right\}$

Herein, ***P*** represents the maximum prime number that does not exceed the sequence length ***N**,* Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$represents the restricted coordinates, the operator $\left⌊⋅\right⌋$ represents rounding down, and the operator $\left⌈⋅\right⌉$ represents rounding up.

The quantity ${k}_{i}^{F}$ of delay-domain full cyclic shifts is determined based on the delay spacing ${d}_{i}^{F}$, and satisfies: ${k}_{i}^{F} = \left⌊{d}_{i}^{F}/{Δ}_{T}\right⌋$

Herein, Δ_{T} represents the maximum delay spread, ${d}_{i}^{F}$ represents the delay spacing, and the operator $\left⌊⋅\right⌋$ represents rounding down.

In a possible design, the quantity ${\overline{l}}_{i}^{F}$ of Doppler-domain near-end residual cyclic shifts satisfies: ${\overline{l}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{{k}_{i}^{F} - 1}{\left⌈min\left\{{τ}_{i}^{F},P-{τ}_{i}^{F}\right\}/{Δ}_{T}\right⌉}\right⌋+1\right)⋅{ν}_{i}^{F}mod{Δ}_{F}\right)/{Δ}_{F}\right⌋, 0\right\}$

Herein, ***P*** represents the maximum prime number that does not exceed the sequence length ***N**,* Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{T}, {\overline{ν}}_{i}^{T}\right〉$represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible design, the quantity ${\overline{k}}_{i}^{F}$ of delay-domain near-end residual cyclic shifts satisfies: ${\overline{k}}_{i}^{F} = {k}_{i}^{F} - \left⌈min\left\{{τ}_{i}^{F},P-{τ}_{i}^{F}\right\}/{Δ}_{T}\right⌉ ⋅ \left⌊\frac{{k}_{i}^{F}}{\left⌈min\left\{{τ}_{i}^{F},P-{τ}_{i}^{F}\right\}/{Δ}_{T}\right⌉}\right⌋$

Herein, ***P*** represents the maximum prime number that does not exceed the sequence length ***N**,* Δ_{T} represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible design, the quantity ${\overline{\overline{l}}}_{i}^{F}$ of Doppler-domain far-end residual cyclic shifts satisfies: ${\overline{\overline{l}}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{2 {k}_{i}^{F} - \left⌊\left({d}_{i}^{F}+min\left\{{τ}_{i}^{F},P-{τ}_{i}^{F}\right\}\right)/{Δ}_{T}\right⌋}{\left⌈min\left\{{τ}_{i}^{F},P-{τ}_{i}^{F}\right\}/{Δ}_{T}\right⌉}\right⌋+1\right)⋅{ν}_{i}^{F}mod{Δ}_{F}\right)/{Δ}_{F}\right⌋, 0\right\}$

Herein, ***P*** represents the maximum prime number that does not exceed the sequence length ***N**,* Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible design, the quantity ${\overline{\overline{k}}}_{i}^{F}$ of delay-domain far-end residual cyclic shifts satisfies: ${\overline{\overline{k}}}_{i}^{F} = \left⌊\left({d}_{i}^{F}+min\left\{{τ}_{i}^{F},P-{τ}_{i}^{F}\right\}\right)/{Δ}_{T}\right⌋ - {k}_{i}^{F} - {\overline{k}}_{i}^{F}$

Herein, ***P*** represents the maximum prime number that does not exceed the sequence length ***N**,* Δ_{T} represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, ${\overline{k}}_{i}^{F}$ represents the quantity of delay-domain near-end residual cyclic shifts, and the operator $\left⌊⋅\right⌋$ represents rounding down.

According to a second aspect, an apparatus is provided. The apparatus can implement the method in the first aspect. For example, the apparatus includes a corresponding means (means) for implementing the first aspect. The apparatus may be implemented by hardware, software, or hardware executing corresponding software. The apparatus may be a first communication apparatus, for example, may be a terminal, a communication module in the terminal, or a chip or a chip system that is in the terminal and that implements a communication function, for example, a modem chip (also referred to as a baseband chip), or an SoC or a SIP that includes a modem module.

In a design, the apparatus includes a unit for implementing the first aspect.

In a design, the apparatus includes a processor. The processor is configured to execute a computer program or instructions stored in a memory, to enable the apparatus to implement the method in the first aspect. Optionally, the apparatus further includes the memory.

In a design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method in the first aspect through a logic circuit or by executing code instructions.

In a design, the apparatus may be a first communication apparatus, or may be a module or unit (for example, a chip, a chip system, or a circuit) that is in the first communication apparatus and that is in a one-to-one correspondence with the method/operation/step/action described in the first aspect, or may be used in cooperation with the first communication apparatus.

According to a third aspect, a computer-readable storage medium is provided, storing a computer program or instructions. When the computer program or the instructions are run on a computer, the computer is enabled to implement the method in the first aspect.

According to a fourth aspect, a computer program product is provided, including a computer program or instructions. When the computer program or the instructions are run by a computer, the method in the first aspect is performed.

According to a fifth aspect, a chip system is provided, including a processor. The processor is configured to execute a computer program or instructions stored in a memory, to enable the chip system to implement the method in the first aspect. Optionally, the processor is coupled to the memory.

According to a sixth aspect, a communication system is provided, including a first communication apparatus and a second communication apparatus. The first communication apparatus is configured to perform the method in the first aspect, and the second communication apparatus is configured to perform the method at the receive end corresponding to the first aspect.

### BRIEF DESCRIPTION OF DRAWINGS

FIG. 1 is a diagram of an architecture of a communication system according to an embodiment of this application;
FIG. 2 is a diagram of mapping of a DMRS sequence according to an embodiment of this application;
FIG. 3 is a schematic flowchart of a communication method according to an embodiment of this application;
FIG. 4 is a diagram of a first sequence according to an embodiment of this application;
FIG. 5a is a diagram of a delay-domain cyclic shift reference point according to an embodiment of this application;
FIG. 5b is a diagram of a Doppler-domain cyclic shift reference point according to an embodiment of this application;
FIG. 6a is a diagram of a quantity of cyclic shifts corresponding to a delay-domain cyclic shift reference point according to an embodiment of this application;
FIG. 6b is a diagram of a quantity of cyclic shifts corresponding to a Doppler-domain cyclic shift reference point according to an embodiment of this application;
FIG. 7a is another diagram of a delay-domain cyclic shift reference point according to an embodiment of this application;
FIG. 7b is another diagram of a Doppler-domain cyclic shift reference point according to an embodiment of this application;
FIG. 8a is another diagram of a quantity of cyclic shifts corresponding to a delay-domain cyclic shift reference point according to an embodiment of this application;
FIG. 8b is another diagram of a quantity of cyclic shifts corresponding to a Doppler-domain cyclic shift reference point according to an embodiment of this application;
FIG. 9a is a diagram of a cyclic shift of a root sequence according to an embodiment of this application;
FIG. 9b is another diagram of a cyclic shift of a root sequence according to an embodiment of this application;
FIG. 10 is a diagram of a structure of an apparatus according to an embodiment of this application; and
FIG. 11 is a diagram of another structure of an apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method, a function description, and the like in a method embodiment may also be applied to an apparatus embodiment or a system embodiment.

Various numbers and terms such as "first" and "second" in embodiments of this application are merely used for differentiation for ease of description, but are not intended to limit the scope of embodiments of this application. Sequence numbers of the foregoing processes do not mean an execution sequence, and the execution sequence of the processes should be determined based on functions and internal logic of the processes.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. "Including at least one of A, B, or C" may represent: including A; including B; including C; including A and B; including A and C; including B and C; and including A, B, and C.

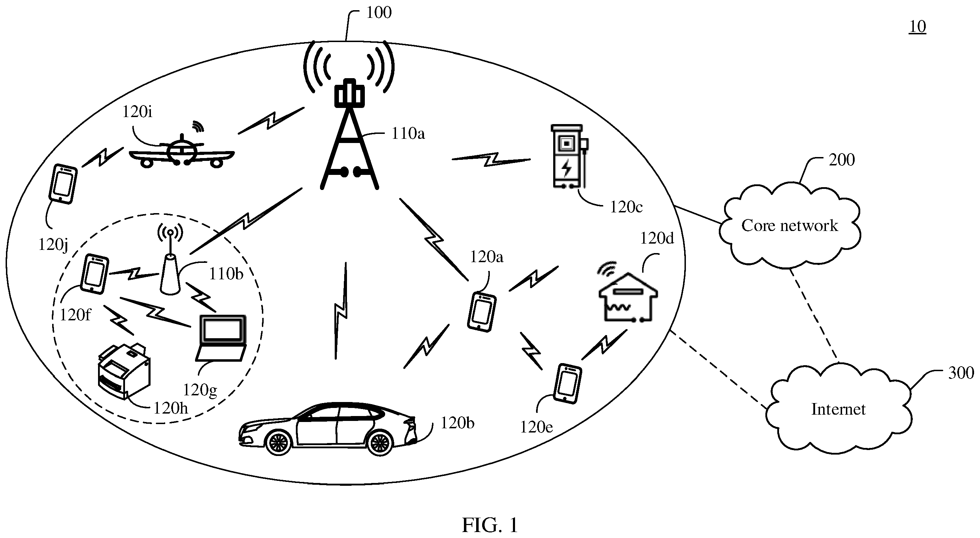

FIG. 1 is a diagram of a possible and non-limiting system. As shown in FIG. 1, a communication system 10 includes a radio access network (radio access network, RAN) 100 and a core network (core network, CN) 200. Optionally, the communication system 10 further includes an internet 300.

### 1. RAN

The RAN 100 includes at least one RAN node (for example, 110a and 110b in FIG. 1, which may be collectively referred to as 110) and at least one terminal (for example, 120a to 120j in FIG. 1, which may be collectively referred to as 120). The RAN 100 may further include another RAN node, for example, a wireless relay device and/or a wireless backhaul device (not shown in FIG. 1).

The terminal 120 may be connected to the RAN node 110 in a wireless manner. The RAN node 110 is connected to the core network 200 in a wireless or wired manner. A core network element in the core network 200 and the RAN node 110 in the RAN 100 may be different physical devices, or may be a same physical device that integrates a logical function of the core network element and a logical function of the radio access network.

A plurality of RAN nodes 110 in the communication system 10 may be nodes of a same type, or may be nodes of different types. In some scenarios, roles of the RAN node 110 and the terminal 120 are relative. For example, a network element 120₁ in FIG. 1 may be a helicopter or an uncrewed aerial vehicle, and may be configured as a mobile base station. For the terminal 120j that accesses the RAN 100 via the network element 120i, the network element 120i is a base station. However, for a base station 110a, the network element 120i is a terminal.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 100 may alternatively be an open access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates two or more of the foregoing systems.

### 1.1. RAN-side node

In a possible scenario, the RAN-side node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation NodeB in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in embodiments of this application may alternatively be implemented by using a software function running on hardware, or may be implemented by using a virtualization function instantiated on a platform (for example, a cloud platform). The RAN node in embodiments of this application may alternatively be a logic node, a logic module, or software that can implement all or a part of functions of the RAN node.

In another possible scenario, a plurality of RAN nodes collaborate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, or the RU in this application may be implemented by using a software module, a hardware module, or a combination of a software module and a hardware module.

The RAN node may also be sometimes referred to as an access network device, a RAN entity, an access node, or the like, and constitutes a part of the communication system, to help a terminal implement radio access. In subsequent descriptions of this application, unless otherwise specified, the "access network device" is used for description.

It may be understood that the access network device may be referred to as a communication apparatus. For example, the access network device may be understood as an apparatus having a function of the access network device. For example, an apparatus configured to implement a function of the access network device may be an access network device, or some elements in the access network device, for example, a CU or a DU, or may be an apparatus that can support the access network device in implementing the function, for example, a chip system, a hardware circuit, a software module, or a combination of a hardware circuit and a software module. The apparatus may be installed in the access network device or may be used in cooperation with the access network device. In embodiments of this application, the chip system may include a chip, or may include a chip and another discrete component.

### 1.2. Terminal

The terminal (terminal) is a device or module that may access the communication system 10 and has a corresponding communication function. The terminal may also be referred to as user equipment (user equipment, UE), a terminal, a user apparatus, an access terminal, a subscriber unit, a subscriber station, a mobile console, a mobile station (mobile station, MS), a remote station, a remote terminal, a mobile device, a user terminal, a terminal unit, a terminal station, a terminal apparatus, a wireless communication device, a user agent, or a user apparatus. A communication module, a circuit, or a chip that performs a corresponding communication function is usually disposed in the terminal. Program instructions for performing a corresponding communication function is further configured in the terminal.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer having a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a transportation vehicle having a wireless communication function, a communication module, a road side unit (road side unit, RSU) having a terminal function, or the like. The terminal may be widely used in various scenarios, for example, device-to-device (device-to-device, D2D), V2X communication, MTC, IOT, VR, AR, industrial control, autonomous driving, telemedicine, smart grid, smart furniture, smart office, smart wearable, smart transportation, and smart city. A device form of the terminal is not limited in embodiments of this application.

It may be understood that the terminal may be referred to as a communication apparatus. For example, the terminal may be understood as an apparatus having a function of the terminal. For example, an apparatus configured to implement a function of the terminal may be a terminal, or may be an apparatus that can support a terminal in implementing the function, for example, a chip system, a hardware circuit, a software module, or a combination of a hardware circuit and a software module. The apparatus may be mounted in the terminal or may be used in combination with the terminal.

### 2. CN

The CN 200 includes at least one core network element. A 5G communication system is used as an example. The CN 200 includes an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The solutions provided in embodiments of this application may be applied to a 5G communication system, a 6G communication system, an integrated sensing and communication system, or even another communication system in future evolution. This is not limited. In the following descriptions, communication between an access network device and a terminal is mainly used as an example for description. The solutions in embodiments of this application may also be applied to another application scenario, for example, communication between base stations, communication between terminals, and communication in an internet of vehicles, an internet of things, or an industrial internet. This is not limited.

In the communication system shown in FIG. 1, during downlink communication, when sending downlink data to a terminal, an access network device further sends a demodulation reference signal (demodulation reference signal, DMRS) to the terminal. The terminal performs downlink channel estimation and downlink data demodulation based on the DMRS sent by the access network device. During uplink communication, when sending uplink data to the access network device, the terminal further sends a DMRS to the access network device. The access network device performs uplink channel estimation and uplink data demodulation based on the DMRS sent by the terminal.

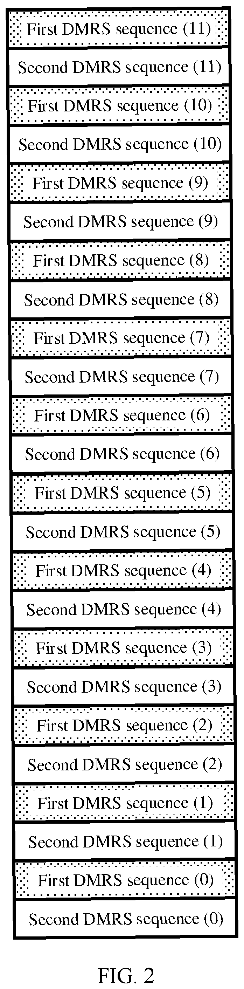

A transmit end (for example, the terminal or the access network device) may map a DMRS sequence to a frequency domain resource based on a comb (comb) structure, to generate a DMRS signal. For example, as shown in FIG. 2, if a quantity of transmission combs is ***M*** = **2**, 24 frequency domain resources may be divided into two groups: a first group of frequency domain resources and a second group of frequency domain resources. A comb index corresponding to the first group of frequency domain resources is ***m*** = **0**, and the first group of frequency domain resources includes 12 frequency domain resources that correspond to "gray-filled boxes" in FIG. 2. A comb index corresponding to the second group of frequency domain resources is ***m*** = **1**, and the second group of frequency domain resources includes 12 frequency domain resources that correspond to "white-filled boxes" in FIG. 2. The transmit end obtains two DMRS sequences, which may be respectively referred to as a first DMRS sequence and a second DMRS sequence. For example, the transmit end may map the first DMRS sequence to the first group of frequency domain resources to generate a first DMRS signal. The transmit end maps the second DMRS sequence to the second group of frequency domain resources, to generate a second DMRS signal. Specifically, a sequence length of each DMRS sequence is 12, and the transmit end may sequentially map the 12 sequences to 12 frequency domain resources included in the first group of frequency domain resources or the second group of frequency domain resources.

In a solution, the transmit end may construct a DMRS sequence by using a Zadoff-Chu (ZC) sequence. For example, the transmit end constructs the first DMRS sequence and the second DMRS sequence based on the ZC sequence. Because a cross-ambiguity function of a DMRS sequence constructed by using the ZC sequence is not equal to zero, mutual interference between DMRS signals may be caused, resulting in low channel estimation precision.

In view of the foregoing content, an embodiment of this application provides a communication method. In the method, a transmit end determines a first sequence based on a cyclic shift of a root sequence; the transmit end performs frequency-domain comb mapping on the first sequence to obtain a first signal; the transmit end sends the first signal to a receive end; and the receive end demodulates the received first signal. Within the range of a maximum delay spread and a maximum Doppler spread, a cross-ambiguity function of the first signal is equal to zero, thereby minimizing interference from other signals on the first signal and improving channel estimation performance of a DMRS signal.

In the following procedure descriptions, an example in which a "first communication apparatus" and a "second communication apparatus" are execution bodies is used for description. The "first communication apparatus" may be understood as an apparatus having a function of the transmit end, and the "second communication apparatus" may be understood as an apparatus having a function of the receive end. For example, in downlink communication, the transmit end is an access network device, and the first communication apparatus may be an apparatus having a function of the access network device. For example, the first communication apparatus may be an access network device, or may be a module (for example, a chip, a chip system, or a circuit) in the access network device, or may be a logic node (for example, a CU, a DU, or an RU), a logic module, software, or the like that implements all or a part of functions of the access network device. Correspondingly, the receive end is a terminal, and the second communication apparatus may be an apparatus having a function of the terminal. Alternatively, in uplink communication, the transmit end is a terminal, and the first communication apparatus may be an apparatus having a function of the terminal. For example, the first communication apparatus may be a terminal, or a module (for example, a chip, a chip system, or a circuit) in the terminal. Correspondingly, the receive end is an access network device, and the second communication apparatus may be an apparatus having a function of the access network device.

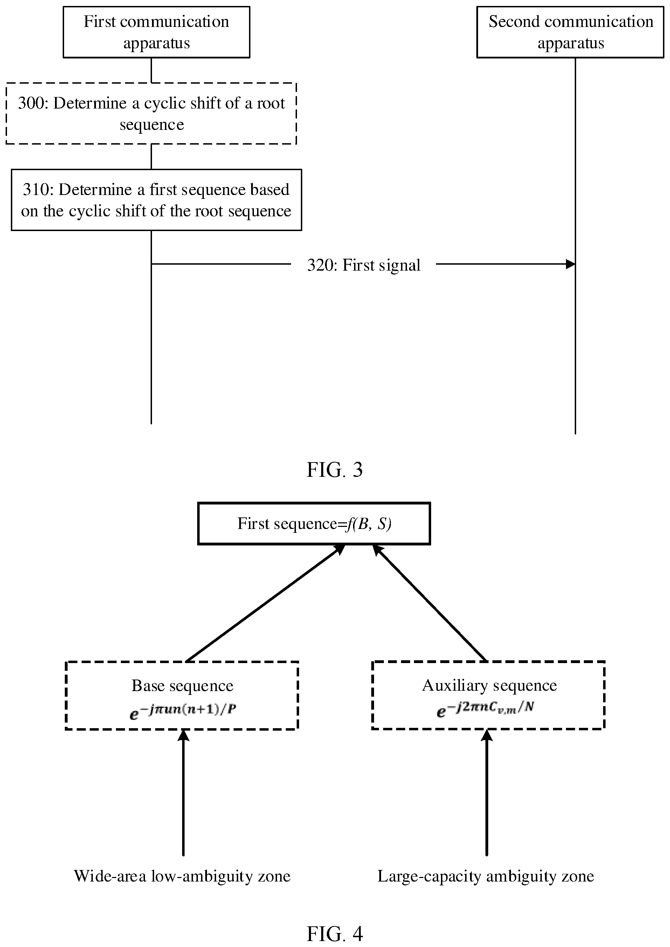

FIG. 3 is a schematic flowchart according to this embodiment of this application, including:
Step 310: The first communication apparatus determines the first sequence based on the cyclic shift of the root sequence.

The first sequence is associated with a transmission comb index m in a transmission comb structure.

For example, the cyclic shift of the root sequence is represented as ***C_{v,m}*** the first sequence is represented as ***s_{u,v,m}*(*n*),** and the first sequence ***s_{u,v,m}*(*n*)** satisfies: ${s}_{u , v , m} \left(n\right) = {e}^{- j \left[\frac{π un \left(n+1\right)}{P}+\frac{2 π n {C}_{v , m}}{N}\right]} , n = 0 , 1 , … , N - 1$

Herein, ***N*** represents a sequence length of the root sequence, ***P*** is a maximum prime number that does not exceed the sequence length ***N, u*** represents a root sequence number, ***u*** ∈ {**1, 2, *... , N* - 1**}, ***v*** represents a cyclic shift index of the root sequence, ***m*** represents the transmission comb index, and ***n*** represents a symbol position of the first sequence. The symbol position of the first sequence may be understood as a symbol index of the first sequence.

It may be understood that when a value of the cyclic shift ***C_{v,m}*** of the root sequence is equal to zero, the first sequence is the root sequence. In other words, the root sequence in this embodiment of this application satisfies the following: ${s}_{u , 0,0} \left(n\right) = {e}^{- j π un \left(n+1\right) / P} , n = 0 , 1 , … , N - 1$

In a possible implementation, an implementation process of step 310 may include: The first communication apparatus may obtain the root sequence; determines the cyclic shift ***C_{v,m}*** of the root sequence; and determines the first sequence based on the root sequence and the cyclic shift ***C_{v,m}*** of the root sequence. It may be understood that, in the foregoing descriptions, in a process of determining the cyclic shift of the root sequence, in frequency domain, the root sequence is multiplied by a phase ***e*^{*-j2πnC^{v,m}*/*N*}** corresponding to the cyclic shift ***C_{v,m}.*** Because the first communication apparatus serves as the transmit end, before sending the first signal, the first communication apparatus needs to perform orthogonal frequency division multiplexing (orthogonal frequency division multiplexing, OFDM) transformation on the first signal. During OFDM transformation, the first signal is transformed from frequency domain to time domain. Multiplying the root sequence by a linear phase in frequency domain is equivalent to performing a cyclic shift on the root sequence in time domain. The following descriptions focus on a process of determining the cyclic shift ***C_{v,m}*** of the root sequence.

Optionally, the root sequence is also referred to as a base sequence. The first sequence may be determined based on the base sequence and an auxiliary sequence. It may be understood that, in the foregoing expression of the first sequence, a sequence other than the root sequence is the auxiliary sequence. For example, as shown in FIG. 4, the first sequence may be represented as *f*(*B, S*), where *B* represents a base sequence, and an expression corresponding to *B* is: ***e*^{*-jπun(n+1)*/}*^{P},*** corresponding to a wide-area low-ambiguity zone; and *S* represents an auxiliary sequence, and an expression corresponding to *S* is: ***e*^{*-j2πnC^{v,m}*/}*^{N},*** corresponding to a large-capacity ambiguity zone. It may be understood that, in this embodiment of this application, the expression of the root sequence or the base sequence is specifically: ***e*^{*-jπun(n+1)*/*P*}**, and a difference between the expression and that of the ZC sequence lies in that a denominator of the expression is changed from "*N"* to *"P".*

Step 320: The first communication apparatus sends the first signal, and the second communication apparatus receives the first signal.

For example, the first communication apparatus maps the first sequence to a frequency domain resource based on a comb structure, to generate the first signal. For example, the first sequence includes 12 sequences. As shown in FIG. 2, based on the comb structure, the 12 sequences are mapped to 12 frequency domain resources included in a first group of frequency domain resources in a case in which the transmission comb index is ***m* = 0,** to generate the first signal. Alternatively, the 12 sequences are mapped to 12 frequency domain resources included in a second group of frequency domain resources in a case in which the transmission comb index is ***m* = 1,** to generate the first signal. The foregoing process may be described as follows: The first signal is obtained by performing frequency-domain comb mapping on the first sequence. For example, the first sequence is represented as ***s_{u,v,m}*(*n*),** and the first signal is represented as ***s̅_{u,v,m}*(*i*)*.*** The first signal ***s̅_{u,v,m}*(*i*)** satisfies the following: ${\overline{s}}_{u , v , m} \left(i\right) = {\sum }_{n = 0}^{N - 1} {s}_{u , v , m} \left(n\right) δ \left(i-nM+m\right) , i = 1 - M , 2 - M , … , M \left(N-1\right)$

A meaning expressed by the formula is: The first sequence is mapped to a subcarrier based on the comb structure. In the formula, ***N*** represents the sequence length of the root sequence, ***M*** represents a quantity of transmission combs, ***m*** represents the transmission comb index, ***m*** ∈ {**0, 1, *M* - 1**}, ***δ***(***i***) represents an impulse function, ***n*** represents the symbol position of the first sequence, and ***i*** represents a subcarrier number.

In a possible implementation, the cross-ambiguity function of the first signal is equal to zero within the range of the maximum delay spread and the maximum Doppler spread. For example, the first signal includes one signal, and a cross-ambiguity function of the first signal and another signal is equal to zero within a maximum delay spread and a maximum Doppler range. Alternatively, the first signal includes a plurality of signals. In this case, the first signal simultaneously sends a plurality of signals to the access network device, and a cross-ambiguity function of any two of the plurality of signals is equal to zero within the range of the maximum delay spread and the maximum Doppler spread. For example, one signal is represented as ***s̅_{u,v₁,m₁}*(*i*),** and another signal is represented as ***s̅_{u,v₂,m₂}*(*i*).** A cross-ambiguity function ${A}_{{\overline{s}}_{u , {v}_{1} , {m}_{1} ,} {\overline{s}}_{u , {v}_{2} , {m}_{2}}} \left(τ, ν\right)$ of the two signals is equal to zero within the range of the maximum delay spread **Δ_{T}** and the maximum Doppler spread Δ_{F}, and satisfies: $\left|{A}_{{\overline{s}}_{u , {v}_{1} , {m}_{1} ,} {\overline{s}}_{u , {v}_{2} , {m}_{2}}}\left(τ, ν\right)\right| = 0 , \left({v}_{1}\neq {v}_{2}\right) ∨ \left({m}_{1}\neq {m}_{2}\right) ∨ \left(τ\neq 0\right) ∨ \left(ν\neq 0\right)$

Herein, ***u*** represents the root sequence number, ***v*₁** and ***v*₂** represent cyclic shift indexes of the root sequence, ***m*₁** and ***m*₂** represent transmission comb indexes, ***τ*** represents a delay coordinate of an ambiguity function, a value range of ***τ*** is **0** ≤ ***τ*** ≤ Δ_{T} - **1, *ν*** represents a Doppler coordinate of the ambiguity function, a value range of ***ν*** is **0** ≤ ***ν*** ≤ **Δ_{F}** - **1,** and an operator V represents a condition OR.

A meaning of the foregoing formula is as follows: A cross-ambiguity function of two signals is equal to zero within the range of the maximum delay spread and the maximum Doppler spread when at least one of the following conditions is satisfied:

Cyclic shift indexes of the root sequence are different, that is, ***v*₁** ≠ ***v*₂;** in other words, in this embodiment of this application, when two sequences are generated, if cyclic shift indexes of the root sequence that correspond to the two sequences are different, a cross-ambiguity function of two signals corresponding to the two sequences is equal to zero;
transmission comb indexes of the root sequence are different, that is, ***m*₁** ≠ ***m₂*;** in other words, in this embodiment of this application, when two sequences are generated, if transmission comb indexes of the root sequence that correspond to the two sequences are different, a cross-ambiguity function of two signals corresponding to the two sequences is equal to zero;
a delay coordinate of the ambiguity function is not equal to zero, that is, ***τ* ≠ 0;** or
a Doppler coordinate of the ambiguity function is not equal to zero, that is, ***ν* ≠ 0.**

It may be understood that "the first communication apparatus sends the first signal" in step 320 may be replaced with: The first communication apparatus outputs the first signal. For example, when the first communication apparatus is the apparatus having the function of the terminal, the terminal includes a radio frequency module (component) and a processing module (component). The first communication apparatus may be a processing module, and the processing module includes a chip or a chip system, for example, a system on chip (System on Chip, SoC). The first communication apparatus may perform the method in the procedure in FIG. 3, and output the first signal through an input/output (input/output, I/O) interface. The radio frequency module sends the first signal through an air interface. The radio frequency module includes a radio frequency front end or a radio frequency front end module. Alternatively, when the first communication apparatus is the apparatus having the function of the access network device, the access network device includes a CU, a DU, an RU, and the like. Further, the CU includes a CU-CP and a CU-UP. The first communication apparatus may be a CU, a DU, or the like. The first communication apparatus performs the method in the procedure in FIG. 3, and outputs the first signal. The RU may send the first signal or the like through an air interface.

In a possible implementation, when receiving the first signal, the second communication apparatus may demodulate the first signal to obtain a demodulated signal. The second communication apparatus performs channel estimation and data demodulation based on the demodulated signal of the first signal. Optionally, the first sequence in this embodiment of this application may be a DMRS sequence, and the first signal may be a DMRS signal. For example, when receiving a DMRS signal, the second communication apparatus may perform a correlation operation on the received DMRS signal and one or more preset DMRS signals; determine a channel estimation result based on the received DMRS signal and the preset DMRS signal; and further demodulate data based on the channel estimation result.

Optionally, the procedure in FIG. 3 further includes step 300: The first communication apparatus determines the cyclic shift of the root sequence.

For example, the first communication apparatus determines a cyclic shift reference point of the root sequence based on a delay-domain cyclic shift reference point and a Doppler-domain cyclic shift reference point; the first communication apparatus determines a delay-domain cyclic shift and a Doppler-domain cyclic shift based on the cyclic shift reference point of the root sequence; and the first communication apparatus determines the cyclic shift of the root sequence based on the delay-domain cyclic shift and the Doppler-domain cyclic shift.

### 1. Determine the delay-domain cyclic shift reference point.

The first communication apparatus determines an ambiguity function of the root sequence, and may determine one or more peak points of the root sequence based on the ambiguity function of the root sequence. Alternatively, the process may be described as follows: One or more peak points of the root sequence are determined based on an ambiguity function of the root sequence. The first communication apparatus determines a delay restricted area in a delay-Doppler coordinate system, where the delay restricted area includes one or more peak points of the root sequence.

For example, a horizontal axis of the delay-Doppler coordinate system represents delay domain, and a vertical axis represents Doppler domain. The delay restricted area is a rectangular area formed by a delay-domain start coordinate Δ_{T} , a delay-domain end coordinate ${min}_{ν ∈ \left\{\pm 1,\pm 2,…,\pm \left({Δ}_{F}-1\right)\right\}} \left\{{u}^{- 1}ν modP\right\}$, a Doppler-domain start coordinate **0,** and a Doppler-domain end coordinate ***MP* - 1,** where ***P*** is a maximum prime number that does not exceed the sequence length ***N, u*** represents the root sequence number, Δ_{T} represents the maximum delay spread, Δ_{F} represents the maximum Doppler spread, and an operator (·)⁻¹ represents a multiplicative inverse.

The first communication apparatus determines the delay-domain cyclic shift reference point in the one or more peak points of the root sequence included in the delay restricted area. For example, in the delay restricted area, the delay-domain cyclic shift reference point satisfies: A delay spacing between the delay-domain cyclic shift reference point and a coordinate origin in the delay-Doppler coordinate system is not greater than a delay spacing between the coordinate origin and any ambiguity function peak point other than the coordinate origin; and/or
a Doppler spacing between the delay-domain cyclic shift reference point and the coordinate origin in the delay-Doppler coordinate system is not greater than a Doppler spacing between the coordinate origin and the any ambiguity function peak point other than the coordinate origin. In a possible implementation, a set 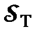 including coordinates of the delay-domain cyclic shift reference point satisfies: ${S}_{T} = \left\{\left〈τ,M⋅{u}^{- 1}τ modP\right〉\left|\begin{matrix}min \left\{\left(\pm {u}^{- 1}τ\right)modP\right\} < {min}_{n = 1 , 2 , … , τ - 1} \left\{\left(\pm {u}^{- 1}n\right) modP\right\} , \\ τ ∈ \left\{{Δ}_{T},{Δ}_{T}+1,…,{min}_{ν ∈ \left\{\pm 1,\pm 2,…,\pm \left(\left⌈{Δ}_{F}/M\right⌉-1\right)\right\}}\left\{uν modP\right\}\right\}\end{matrix}\right.\right\}$

Herein, ***P*** is the maximum prime number that does not exceed the sequence length ***N*, *M*** represents the quantity of transmission combs, ***u*** represents the root sequence number, Δ_{T} represents the maximum delay spread, Δ_{F} represents the maximum Doppler spread, $\left〈{τ}_{i}^{T}, {ν}_{i}^{T}\right〉$ represents coordinates of an ***i***^{th} delay-domain cyclic shift reference point, a value range of ***i*** is **1** ≤ ***i*** ≤ | 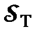 |, an operator (·)⁻¹ represents a multiplicative inverse, an operator $\left⌈⋅\right⌉$ represents rounding up, and an operator |·| represents a cardinality of the set.

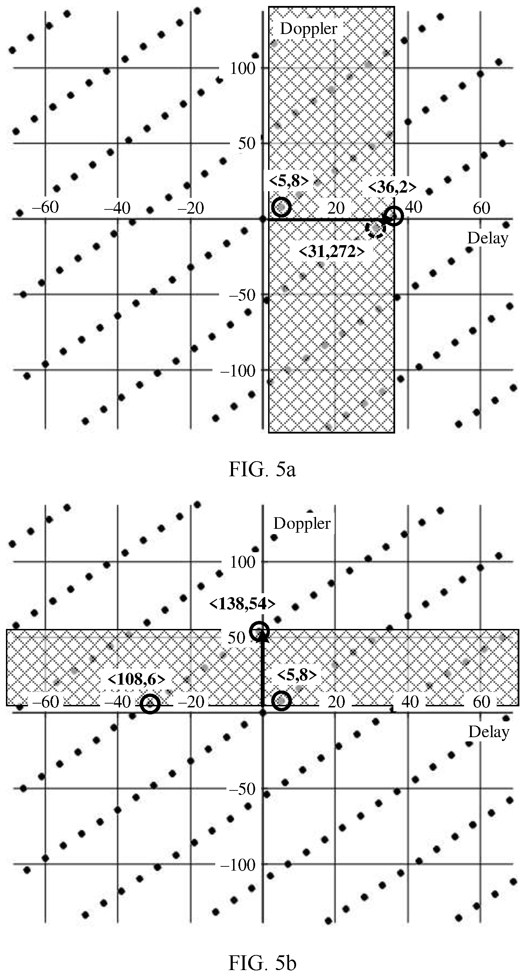

As shown in FIG. 5a, when ***N =* 144, *P* = 139, *M =* 2, *u*** = **36, Δ_{T}= 2, Δ_{F}= 3,** for one or more peak points of the root sequence, refer to "black dots" shown in FIG. 5a; for the delay restricted area, refer to a block in FIG. 5a; and in the delay restricted area, a set of determined delay-domain cyclic shift reference points is ${S}_{T} ≜ \left\{\left〈{τ}_{1}^{T}, {ν}_{1}^{T}\right〉, \left〈{τ}_{2}^{T}, {ν}_{2}^{T}\right〉, \left〈{τ}_{3}^{T}, {ν}_{3}^{T}\right〉\right\} = \left\{\left〈5,8\right〉, \left〈31,272\right〉, \left〈36,2\right〉\right\}$ .

### 2. Determine the Doppler-domain cyclic shift reference point.

The first communication apparatus determines a Doppler restricted area in the delay-Doppler coordinate system, where the Doppler restricted area includes one or more peak points of the root sequence, and the peak point of the root sequence is determined based on the ambiguity function of the root sequence.

For example, the horizontal axis of the delay-Doppler coordinate system represents delay domain, and the vertical axis represents Doppler domain. The Doppler restricted area is a rectangular area formed by a delay-domain start coordinate **0,** a delay-domain end coordinate ***P* - 1 ,** a Doppler-domain start coordinate **Δ_{F}** , and a Doppler-domain end coordinate ${min}_{τ ∈ \left\{\pm 1,\pm 2,…,\pm \left({Δ}_{T}-1\right)\right\}} \left\{M⋅uτ mod P\right\}$. Herein, ***P*** is the maximum prime number that does not exceed the sequence length ***N, M*** represents the quantity of transmission combs, ***u*** represents the root sequence number, Δ_{T} represents the maximum delay spread, Δ_{F} represents the maximum delay spread, and the operator (·)⁻¹ represents a multiplicative inverse.

The first communication apparatus determines the Doppler-domain cyclic shift reference point in the one or more peak points of the root sequence included in the Doppler restricted area. For example, in the Doppler restricted area, the Doppler-domain cyclic shift reference point satisfies: A delay spacing between the Doppler-domain cyclic shift reference point and the coordinate origin in the delay-Doppler coordinate system is not greater than the delay spacing between the coordinate origin and any ambiguity function peak point other than the coordinate origin; and/or a Doppler spacing between the Doppler-domain cyclic shift reference point and the coordinate origin in the delay-Doppler coordinate system is not greater than a Doppler spacing between the coordinate origin and the any ambiguity function peak point other than the coordinate origin.

In a possible implementation, a set 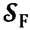 including coordinates of the Doppler-domain cyclic shift reference point satisfies: ${S}_{F} = \left\{\left〈uν mod P,M⋅ν\right〉\left|\begin{matrix}min \left\{\left(\pm uν\right)mod P\right\} < {min}_{n = 1 , 2 , … , ν - 1} \left\{\left(\pm un\right)mod P\right\} , \\ ν ∈ \left\{\left⌈{Δ}_{F}/M\right⌉,\left⌈{Δ}_{F}/M\right⌉+1, …,{min}_{τ ∈ \left\{\pm 1,\pm 2,…,\pm \left({Δ}_{T}-1\right)\right\}}\left\{{u}^{- 1}τ mod P\right\}\right\}\end{matrix}\right.\right\}$

Herein, ***P*** is the maximum prime number that does not exceed the sequence length ***N*, *M*** represents the quantity of transmission combs, ***u*** represents the root sequence number, Δ_{T} represents the maximum delay spread, **Δ_{F}** represents the maximum Doppler spread, $\left〈{τ}_{i}^{F}, {ν}_{i}^{F}\right〉$ represents coordinates of an ***i***^{th} Doppler-domain cyclic shift reference point, a value range of ***i*** is **1** ≤ ***i*** ≤ | 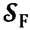 |, an operator (·)⁻¹ represents a multiplicative inverse, an operator $\left⌈⋅\right⌉$ represents rounding up, and an operator |·| represents a cardinality of the set.

As shown in FIG. 5b, when ***N* = 144, *P* = 139, *M* = 2, *u* = 36, Δ_{T}= 2, Δ_{F}= 3,** for one or more peak points of the root sequence, refer to "black dots" shown in FIG. 5b; for the Doppler restricted area, refer to a block in FIG. 5b; and in the Doppler restricted area, a set of determined Doppler-domain cyclic shift reference points is ${S}_{F} ≜ \left\{\left〈{τ}_{1}^{F}, {ν}_{1}^{F}\right〉, \left〈{τ}_{2}^{F}, {ν}_{2}^{F}\right〉, \left〈{τ}_{3}^{F}, {ν}_{3}^{F}\right〉\right\} = \left\{\left〈108,6\right〉, \left〈5,8\right〉, \left〈138,54\right〉\right\}$ .

3. Determine the cyclic shift reference point of the root sequence based on the delay-domain cyclic shift reference point and the Doppler-domain cyclic shift reference point.

For example, the first communication apparatus determines the cyclic shift reference point of the root sequence based on a quantity of cyclic shifts corresponding to the delay-domain cyclic shift reference point and a quantity of cyclic shifts corresponding to the Doppler-domain cyclic shift reference point. For example, the first communication apparatus determines, from the quantity of cyclic shifts corresponding to the delay-domain cyclic shift reference point and the quantity of cyclic shifts corresponding to the Doppler-domain cyclic shift reference point, a reference point with a largest quantity of cyclic shifts as the cyclic shift reference point of the root sequence.

3.1. Determine the quantity of cyclic shifts corresponding to the delay-domain cyclic shift reference point.

For example, the first communication apparatus determines, based on the delay-domain cyclic shift reference point, a quantity of delay-domain full cyclic shifts and a quantity of Doppler-domain full cyclic shifts, a quantity of delay-domain near-end residual cyclic shifts and a quantity of Doppler-domain near-end residual cyclic shifts, and a quantity of delay-domain far-end residual cyclic shifts and a quantity of Doppler-domain far-end residual cyclic shifts. The first communication apparatus determines a product of the quantity of delay-domain full cyclic shifts and the quantity of Doppler-domain full cyclic shifts, a product of the quantity of delay-domain near-end residual cyclic shifts and the quantity of Doppler-domain near-end residual cyclic shifts, and a product of the quantity of delay-domain far-end residual cyclic shifts and the quantity of Doppler-domain far-end residual cyclic shifts, and uses a sum of the three products as the quantity of cyclic shifts corresponding to the delay-domain cyclic shift reference point. For example, the quantity ${Ω}_{i}^{T}$ of cyclic shifts corresponding to the delay-domain cyclic shift reference point $\left〈{τ}_{i}^{T}, {ν}_{i}^{T}\right〉$ satisfies the following: ${Ω}_{i}^{T} = {k}_{i}^{T} ⋅ {l}_{i}^{T} + {\overline{k}}_{i}^{T} ⋅ {\overline{l}}_{i}^{T} + {\overline{\overline{k}}}_{i}^{T} ⋅ {\overline{\overline{l}}}_{i}^{T}$

Herein, ${k}_{i}^{T}$ represents the quantity of delay-domain full cyclic shifts, ${l}_{i}^{T}$ represents the quantity of Doppler-domain full cyclic shifts, ${\overline{k}}_{i}^{T}$ represents the quantity of delay-domain near-end residual cyclic shifts, ${\overline{l}}_{i}^{T}$ represents the quantity of Doppler-domain near-end residual cyclic shifts, ${\overline{\overline{k}}}_{i}^{T}$ represents the quantity of delay-domain far-end residual cyclic shifts, ${\overline{\overline{l}}}_{i}^{T}$ represents the quantity of Doppler-domain far-end residual cyclic shifts, and the value range of *i* is **1** ≤ ***i*** ≤ | 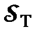 |.

In a possible implementation, the quantity ${k}_{i}^{T}$ of delay-domain full cyclic shifts satisfies the following: ${k}_{i}^{T} = \left⌊{τ}_{i}^{T}/{Δ}_{T}\right⌋$

Herein, Δ_{T} represents the maximum delay spread, $\left〈{τ}_{i}^{T}, {ν}_{i}^{T}\right〉$ represents the coordinates of the delay-domain cyclic shift reference point, and an operator $\left⌊⋅\right⌋$ represents rounding down.

In a possible implementation, the quantity ${l}_{i}^{T}$ of Doppler-domain full cyclic shifts satisfies:

Restricted coordinates $\left〈{\overline{τ}}_{i}^{T}, {\overline{ν}}_{i}^{T}\right〉$ are determined based on the coordinates $\left〈{τ}_{i}^{T}, {ν}_{i}^{T}\right〉$ of the delay-domain cyclic shift reference point, and the restricted coordinates $\left〈{\overline{τ}}_{i}^{T}, {\overline{ν}}_{i}^{T}\right〉$ satisfy: $\left\{\begin{matrix}{\overline{τ}}_{i}^{T} = {min}_{ν ∈ \left\{1,2,…,max\left\{\left⌈{Δ}_{F}/M\right⌉-1,min\left\{{ν}_{i}^{T}/M,P-{ν}_{i}^{T}/M\right\}-1\right\}\right\}} \left\{sgn\left({ν}_{i}^{T}-P/2\right)uν mod P\right\} \\ {\overline{ν}}_{i}^{T} = M ⋅ {u}^{- 1} {\overline{τ}}_{i}^{T} mod P\end{matrix}\right.$

Herein, ***P*** represents the maximum prime number that does not exceed the sequence length ***N*, *u*** represents the root sequence number, Δ_{F} represents the maximum Doppler spread, ***M*** represents the quantity of transmission combs, and the operator (·)⁻¹ represents a multiplicative inverse.

A Doppler spacing ${d}_{i}^{T}$ is determined based on the coordinates $\left〈{τ}_{i}^{T}, {ν}_{i}^{T}\right〉$ of the delay-domain cyclic shift reference point and the restricted coordinates $\left〈{\overline{τ}}_{i}^{T}, {\overline{ν}}_{i}^{T}\right〉$, and the Doppler spacing ${d}_{i}^{T}$ satisfies: ${d}_{i}^{T} = min \left\{d\left|{τ}_{i}^{T}-\left(\left⌊\frac{d / {Δ}_{F}}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\geq {\overline{τ}}_{i}^{T}-\right.\left⌊\frac{d - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}\right\}$

Herein, ***P*** represents the maximum prime number that does not exceed the sequence length ***N, M*** represents the quantity of transmission combs, Δ_{T} represents the maximum delay spread, Δ_{F} represents the maximum Doppler spread, the operator $\left⌊⋅\right⌋$ represents rounding down, and the operator $\left⌈⋅\right⌉$ represents rounding up.

The quantity ${l}_{i}^{T}$ of Doppler-domain full cyclic shifts is determined based on the Doppler spacing ${d}_{i}^{T}$, and satisfies: ${l}_{i}^{T} = \left⌊{d}_{i}^{T}/{Δ}_{F}\right⌋$

Herein, Δ_{F} represents the maximum Doppler spread, ${d}_{i}^{T}$ represents the Doppler spacing, and $\left⌊⋅\right⌋$ represents rounding down.

In a possible implementation, the quantity ${\overline{k}}_{i}^{T}$ of delay-domain near-end residual cyclic shifts satisfies: ${\overline{k}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{{l}_{i}^{T} - 1}{\left⌈min\left\{{ν}_{i}^{T},MP-{ν}_{i}^{T}\right\}/{Δ}_{F}\right⌉}\right⌋+1\right)⋅{τ}_{i}^{T}mod{Δ}_{T}\right)/{Δ}_{T}\right⌋, 0\right\}$

Herein, ***P*** represents the maximum prime number that does not exceed the sequence length ***N, M*** represents the quantity of transmission combs, Δ_{T} represents the maximum delay spread, **Δ_{F}** represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible implementation, the quantity ${\overline{l}}_{i}^{T}$ of Doppler-domain near-end residual cyclic shifts satisfies: ${\overline{l}}_{i}^{T} = {l}_{i}^{T} - \left⌈min\left\{{ν}_{i}^{T},MP-{ν}_{i}^{T}\right\}/{Δ}_{F}\right⌉ ⋅ \left⌊\frac{{l}_{i}^{T}}{\left⌈min\left\{{ν}_{i}^{T},MP-{ν}_{i}^{T}\right\}/{Δ}_{F}\right⌉}\right⌋$

Herein, ***P*** represents the maximum prime number that does not exceed the sequence length ***N, M*** represents the quantity of transmission combs, **Δ_{F}** represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible implementation, the quantity ${\overline{\overline{k}}}_{i}^{T}$ of delay-domain far-end residual cyclic shifts satisfies: ${\overline{\overline{k}}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\frac{2 {l}_{i}^{T} - \left⌊\left({d}_{i}^{T}+min\left\{{ν}_{i}^{T},MP-{ν}_{i}^{T}\right\}\right)/{Δ}_{F}\right⌋}{\left⌈min\left\{{ν}_{i}^{T},MP-{ν}_{i}^{T}\right\}/{Δ}_{F}\right⌉}+1\right)⋅{τ}_{i}^{T}mod{Δ}_{T}\right)/{Δ}_{T}\right⌋, 0\right\}$

Herein, ***P*** represents the maximum prime number that does not exceed the sequence length ***N, M*** represents the quantity of transmission combs, **Δ_{T}** represents the maximum delay spread, **Δ_{F}** represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible implementation, the quantity ${\overline{\overline{l}}}_{i}^{T}$ of Doppler-domain far-end residual cyclic shifts satisfies: ${\overline{\overline{l}}}_{i}^{T} = \left⌊\left({d}_{i}^{T}+min\left\{{ν}_{i}^{T},MP-{ν}_{i}^{T}\right\}\right)/{Δ}_{F}\right⌋ - {l}_{i}^{T} - {\overline{l}}_{i}^{T}$

Herein, ***P*** represents the maximum prime number that does not exceed the sequence length ***N, M*** represents the quantity of transmission combs, **Δ_{F}** represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, ${\overline{l}}_{i}^{T}$ represents the quantity of Doppler-domain near-end residual cyclic shifts, and the operator $\left⌊⋅\right⌋$ represents rounding down.

3.2. Determine the quantity of cyclic shifts corresponding to the Doppler-domain cyclic shift reference point.

For example, the first communication apparatus determines, based on the Doppler-domain cyclic shift reference point, the quantity of Doppler-domain full cyclic shifts and the quantity of delay-domain full cyclic shifts, the quantity of Doppler-domain near-end residual cyclic shifts and the quantity of delay-domain near-end residual cyclic shifts, and the quantity of Doppler-domain far-end residual cyclic shifts and the quantity of delay-domain far-end residual cyclic shifts. The first communication apparatus determines the product of the quantity of Doppler-domain full cyclic shifts and the quantity of delay-domain full cyclic shifts, the product of the quantity of Doppler-domain near-end residual cyclic shifts and the quantity of delay-domain near-end residual cyclic shifts, and the product of the quantity of Doppler-domain far-end residual cyclic shifts and the quantity of delay-domain far-end residual cyclic shifts, and uses the sum of the three products as the quantity of cyclic shifts corresponding to the Doppler-domain cyclic shift reference point. For example, the quantity ${Ω}_{i}^{F}$ of cyclic shifts corresponding to the Doppler-domain cyclic shift reference point $\left〈{τ}_{i}^{F}, {ν}_{i}^{F}\right〉$ satisfies the following: ${Ω}_{i}^{F} = {l}_{i}^{F} ⋅ {k}_{i}^{F} + {\overline{l}}_{i}^{F} ⋅ {\overline{k}}_{i}^{F} + {\overline{\overline{l}}}_{i}^{F} ⋅ {\overline{\overline{k}}}_{i}^{F}$

Herein, ${l}_{i}^{F}$ represents a quantity of Doppler-domain full cyclic shifts, ${k}_{i}^{F}$ represents a quantity of delay-domain full cyclic shifts, ${\overline{l}}_{i}^{F}$ represents a quantity of Doppler-domain near-end residual cyclic shifts, ${\overline{k}}_{i}^{F}$ represents a quantity of delay-domain near-end residual cyclic shifts, ${\overline{\overline{l}}}_{i}^{F}$ represents a quantity of Doppler-domain far-end residual cyclic shifts, ${\overline{\overline{k}}}_{i}^{F}$ represents a quantity of delay-domain far-end residual cyclic shifts, and the value range of ***i*** is **1** ≤ ***i*** ≤ | 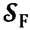 |.

In a possible implementation, the quantity ${l}_{i}^{F}$ of Doppler-domain full cyclic shifts satisfies: ${l}_{i}^{F} = \left⌊{ν}_{i}^{F}/{Δ}_{F}\right⌋$

Herein, **Δ_{F}** represents the maximum Doppler spread, $\left〈{τ}_{i}^{F}, {ν}_{i}^{F}\right〉$ represents the coordinates of the Doppler-domain cyclic shift reference point, and the operator $\left⌊⋅\right⌋$ represents rounding down.

In a possible implementation, the quantity ${k}_{i}^{F}$ of delay-domain full cyclic shifts satisfies:

Restricted coordinates $\left〈{\overline{τ}}_{i}^{F}, {\overline{ν}}_{i}^{F}\right〉$ are determined based on the coordinates $\left〈{τ}_{i}^{F}, {ν}_{i}^{F}\right〉$ of the Doppler-domain cyclic shift reference point, and satisfy: $\left\{\begin{matrix}{\overline{τ}}_{i}^{F} = u {\overline{ν}}_{i}^{F} / M mod P \\ {\overline{ν}}_{i}^{F} = {min}_{τ ∈ \left\{1,2,…,max\left\{{Δ}_{T}-1,min\left\{{τ}_{i}^{F},P-{τ}_{i}^{F}\right\}-1\right\}\right\}} \left\{M⋅sgn\left({τ}_{i}^{F}-P/2\right){u}^{- 1}τmodP\right\}\end{matrix}\right.$

Herein, ***P*** represents the maximum prime number that does not exceed the sequence length ***N, M*** represents the quantity of transmission combs, ***u*** represents the root sequence number, **Δ_{T}** represents the maximum delay spread, $\left〈{τ}_{i}^{F}, {ν}_{i}^{F}\right〉$ represents the coordinates of the Doppler-domain cyclic shift reference point, and the operator (·)⁻¹ represents a multiplicative inverse.

A delay spacing ${d}_{i}^{F}$ is determined based on the coordinates $\left〈{τ}_{i}^{F}, {ν}_{i}^{F}\right〉$ of the Doppler-domain cyclic shift reference point and the restricted coordinates $\left〈{\overline{τ}}_{i}^{F}, {\overline{ν}}_{i}^{F}\right〉$, and satisfies: ${d}_{i}^{F} = min \left\{d\left|{ν}_{i}^{F}-\left(\left⌊\frac{d / {Δ}_{T}}{\left⌈min\left\{{τ}_{i}^{F},P-{τ}_{i}^{F}\right\}/{Δ}_{T}\right⌉}\right⌋+1\right)⋅{ν}_{i}^{F} mod {Δ}_{F}\geq {\overline{ν}}_{i}^{F}-\left⌊\frac{d - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}\right.\right\}$

Herein, ***P*** represents the maximum prime number that does not exceed the sequence length ***N**,* **Δ_{T}** represents the maximum delay spread, **Δ_{F}** represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$represents the restricted coordinates, the operator $\left⌊⋅\right⌋$ represents rounding down, and the operator $\left⌈⋅\right⌉$ represents rounding up.

The quantity ${k}_{i}^{F}$ of delay-domain full cyclic shifts is determined based on the delay spacing ${d}_{i}^{F}$, and satisfies: ${k}_{i}^{F} = \left⌊{d}_{i}^{F}/{Δ}_{T}\right⌋$

Herein, **Δ_{T}** represents the maximum delay spread, ${d}_{i}^{F}$ represents the delay spacing, and the operator $\left⌊⋅\right⌋$ represents rounding down.

In a possible implementation, the quantity ${\overline{l}}_{i}^{F}$ of Doppler-domain near-end residual cyclic shifts satisfies: ${\overline{l}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{{k}_{i}^{F} - 1}{\left⌈min\left\{{τ}_{i}^{F},P-{τ}_{i}^{F}\right\}/{Δ}_{T}\right⌉}\right⌋+1\right)⋅{ν}_{i}^{F} mod {Δ}_{F}\right)/{Δ}_{F}\right⌋, 0\right\}$

Herein, ***P*** represents the maximum prime number that does not exceed the sequence length ***N,* Δ_{T}** represents the maximum delay spread, **Δ_{F}** represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{T}, {\overline{ν}}_{i}^{T}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible implementation, the quantity ${\overline{k}}_{i}^{F}$ of delay-domain near-end residual cyclic shifts satisfies: ${\overline{k}}_{i}^{F} = {k}_{i}^{F} - \left⌈min\left\{{τ}_{i}^{F},P-{τ}_{i}^{F}\right\}/{Δ}_{T}\right⌉ ⋅ \left⌊\frac{{k}_{i}^{F}}{\left⌈min\left\{{τ}_{i}^{F},P-{τ}_{i}^{F}\right\}/{Δ}_{T}\right⌉}\right⌋$

Herein, ***P*** represents the maximum prime number that does not exceed the sequence length ***N,* Δ_{T}** represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible implementation, the quantity ${\overline{\overline{l}}}_{i}^{F}$ of Doppler-domain far-end residual cyclic shifts satisfies: ${\overline{\overline{l}}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{2 {k}_{i}^{F} - \left⌊\left({d}_{i}^{F}+min\left\{{τ}_{i}^{F},P-{τ}_{i}^{F}\right\}\right)/{Δ}_{T}\right⌋}{\left⌈min\left\{{τ}_{i}^{F},P-{τ}_{i}^{F}\right\}/{Δ}_{T}\right⌉}\right⌋+1\right)⋅{ν}_{i}^{F}mod{Δ}_{F}\right)/{Δ}_{F}\right⌋, 0\right\}$

Herein, ***P*** represents the maximum prime number that does not exceed the sequence length ***N,* Δ_{T}** represents the maximum delay spread, **Δ_{F}** represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible implementation, the quantity ${\overline{\overline{k}}}_{i}^{F}$ of delay-domain far-end residual cyclic shifts satisfies: ${\overline{\overline{k}}}_{i}^{F} = \left⌊\left({d}_{i}^{F}+min\left\{{τ}_{i}^{F},P-{τ}_{i}^{F}\right\}\right)/{Δ}_{T}\right⌋ - {k}_{i}^{F} - {\overline{k}}_{i}^{F}$

Herein, ***P*** represents the maximum prime number that does not exceed the sequence length ***N,* Δ_{T}** represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, ${\overline{k}}_{i}^{F}$ represents the quantity of delay-domain near-end residual cyclic shifts, and the operator $\left⌊⋅\right⌋$ represents rounding down.

When ***N* = 144, *P* = 139, *M =* 2, *u* = 36, Δ_{T}= 2, Δ_{F}= 3**, restricted coordinates respectively corresponding to the delay-domain cyclic shift reference point and the Doppler-domain cyclic shift reference point, the quantity of delay-domain full cyclic shifts, the quantity of Doppler-domain full cyclic shifts, the quantity of delay-domain near-end residual cyclic shifts, the quantity of Doppler-domain near-end residual cyclic shifts, the quantity of delay-domain far-end residual cyclic shifts, the quantity of Doppler-domain far-end residual cyclic shifts, and a quantity of cyclic shifts corresponding to a cyclic shift reference point are shown in Table 1.

**Table 1 Quantity of cyclic shifts corresponding to a cyclic shift reference point**

| Cyclic shift reference point | Delay-domain cyclic shift reference point | | | Doppler-domain cyclic shift reference point | | |
|---|---|---|---|---|---|---|
| Reference point coordinates | <5,8> | <31,272> | <36,2> | <108,6> | <5,8> | <138,54> |
| Restricted coordinates | <31,272> | <36,2> | <103,276> | <5,8> | <138,54> | <1,224> |
| Quantity of delay-domain full cyclic shifts | 2 | 15 | 18 | 18 | 20 | 2 |
| Quantity of Doppler-domain full cyclic shifts | 20 | 2 | 2 | 2 | 2 | 18 |
| Quantity of delay-domain near-end residual cyclic shifts | 1 | 3 | 15 | 2 | 2 | 0 |
| Quantity of Doppler-domain near-end residual cyclic shifts | 2 | 0 | 0 | 0 | 1 | 2 |
| Quantity of delay-domain far-end residual cyclic shifts | 1 | 3 | 15 | 13 | 1 | 1 |
| Quantity of Doppler-domain far-end residual cyclic shifts | 1 | 2 | 0 | 0 | 0 | 2 |
| Quantity of cyclic shifts corresponding to a cyclic shift reference point | 43 | 36 | 36 | 36 | 42 | 38 |

It can be learned from Table 1 that, a quantity of cyclic shifts corresponding to the delay-domain cyclic shift reference point <5,8> is equal to 43 (**2 × 20 + 1 × 2 + 1 × 1**); and quantities of cyclic shifts corresponding to the delay-domain cyclic shift reference points <31,127> and <36,2> are both equal to 36. Similarly, quantities of cyclic shifts corresponding to the Doppler-domain cyclic shift reference points <108,6>, <5,8>, and <138,54> are respectively 36, 42, and 38.

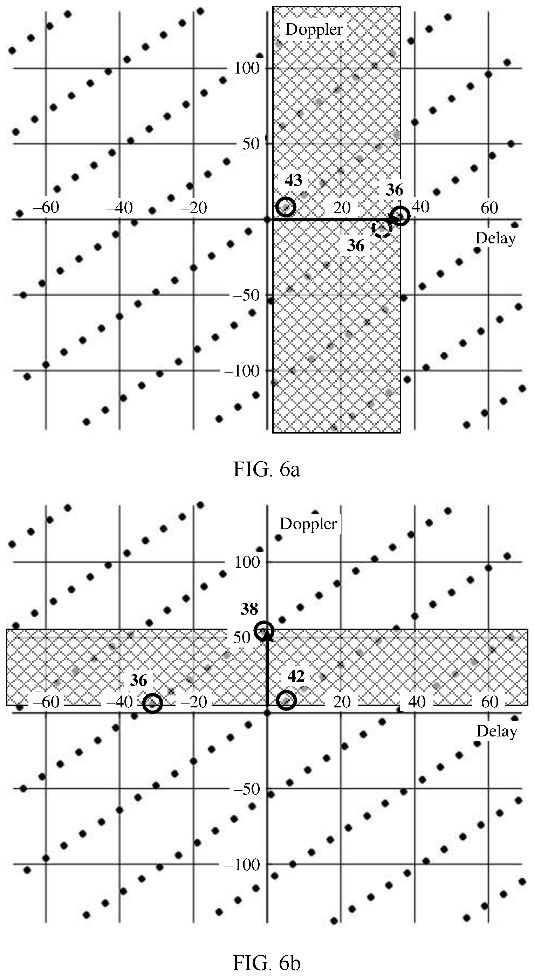

Further, the quantity of cyclic shifts corresponding to the cyclic shift reference point shown in Table 1 may be represented in the delay-Doppler coordinate system. For example, as shown in FIG. 6a, delay-domain cyclic shift reference points are $\left〈{τ}_{1}^{T}, {ν}_{1}^{T}\right〉 = \left〈5,8\right〉 , \left〈{τ}_{2}^{T}, {ν}_{2}^{T}\right〉 = \left〈31,272\right〉 , \left〈{τ}_{3}^{T}, {ν}_{3}^{T}\right〉 = \left〈36,2\right〉$ , and corresponding quantities of cyclic shifts are respectively ${Ω}_{1}^{T} = 43 , {Ω}_{2}^{T} = 36 , {Ω}_{3}^{T} = 36$ . As shown in FIG. 6b, Doppler-domain cyclic shift reference points are $\left〈{τ}_{1}^{F}, {ν}_{1}^{F}\right〉 = \left〈108,6\right〉 , \left〈{τ}_{2}^{F}, {ν}_{2}^{F}\right〉 = \left〈5,8\right〉 , \left〈{τ}_{3}^{F}, {ν}_{3}^{F}\right〉 = \left〈138,54\right〉$, and corresponding quantities of cyclic shifts are respectively ${Ω}_{1}^{F} = 36 , {Ω}_{2}^{F} = 42 , {Ω}_{3}^{F} = 38$.

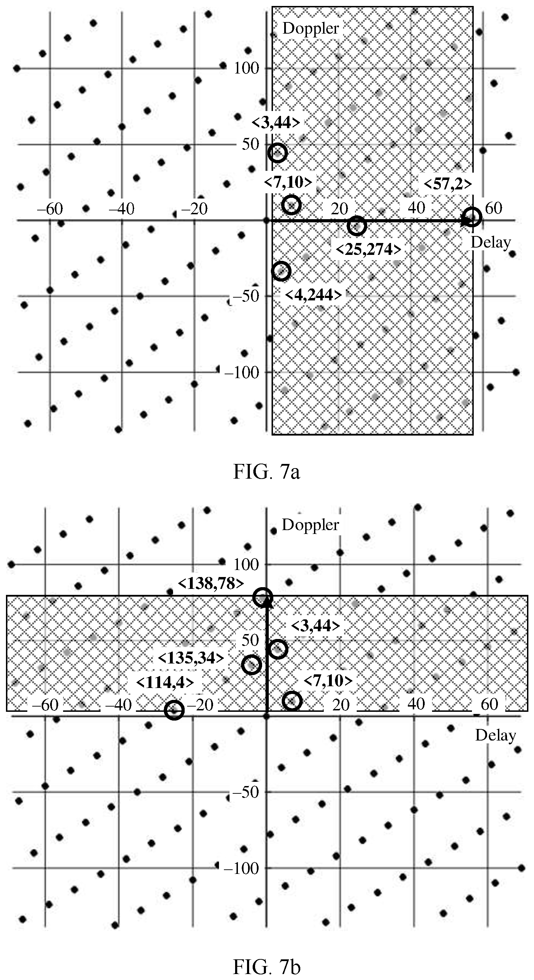

Alternatively, when ***N* = 144, *P* = 139, *M* = 2, *u* = 57, Δ_{T}= 2, Δ_{F}= 3,** as shown in FIG. 7a, delay-domain cyclic shift reference points are ${S}_{T} ≜$ $\left\{\left〈{τ}_{1}^{T}, {ν}_{1}^{T}\right〉, \left〈{τ}_{2}^{T}, {ν}_{2}^{T}\right〉, \left〈{τ}_{3}^{T}, {ν}_{3}^{T}\right〉, \left〈{τ}_{4}^{T}, {ν}_{4}^{T}\right〉, \left〈{τ}_{5}^{T}, {ν}_{5}^{T}\right〉\right\} = \left\{\left〈3,44\right〉, \left〈4,244\right〉, \left〈7,10\right〉, \left〈25,274\right〉, \left〈57,2\right〉\right\}$. As shown in FIG. 7b, Doppler-domain cyclic shift reference points are as follows: ${S}_{F} ≜ \left\{\left〈{τ}_{1}^{F}, {ν}_{1}^{F}\right〉, \left〈{τ}_{2}^{F}, {ν}_{2}^{F}\right〉, \left〈{τ}_{3}^{F}, {ν}_{3}^{F}\right〉, \left〈{τ}_{4}^{F}, {ν}_{4}^{F}\right〉, \left〈{τ}_{5}^{F}, {ν}_{5}^{F}\right〉\right\} = \left\{\left〈114,4\right〉, \left〈7,10\right〉, \left〈135,34\right〉, \left〈3,44\right〉, \left〈138,78\right〉\right\}$.

Restricted coordinates respectively corresponding to the delay-domain cyclic shift reference point and the Doppler-domain cyclic shift reference point, the quantity of delay-domain full cyclic shifts, the quantity of Doppler-domain full cyclic shifts, the quantity of delay-domain near-end residual cyclic shifts, the quantity of Doppler-domain near-end residual cyclic shifts, the quantity of delay-domain far-end residual cyclic shifts, the quantity of Doppler-domain far-end residual cyclic shifts, and a quantity of cyclic shifts corresponding to a cyclic shift reference point are shown in Table 2.

**Table 2 Quantity of cyclic shifts corresponding to a cyclic shift reference point**

| Cyclic shift reference point | Delay-domain cyclic shift reference point | | | | | Doppler-domain cyclic shift reference point | | | | |
|---|---|---|---|---|---|---|---|---|---|---|
| Reference point coordinates | <3,44> | <4,244 > | <7,10> | <25,27 4> | <57,2> | <114,4 > | <7,10> | <135,3 4> | <3,44> | <138,7 8> |
| Restricted coordinates | <4,244 > | <7,10> | <25,27 4> | <57,2> | <82,27 6> | <7,10> | <135,3 4> | <3,44> | <138,7 8> | <1,200 > |
| Quantity of delay-domain full cyclic shifts | 1 | 2 | 3 | 12 | 28 | 41 | 12 | 3 | 2 | 1 |
| Quantity of Doppler-domain full cyclic shifts | 40 | 14 | 14 | 3 | 1 | 1 | 3 | 11 | 14 | 26 |
| Quantity of delay-domain near-end residual cyclic shifts | 0 | 1 | 0 | 4 | 13 | 2 | 0 | 1 | 0 | 0 |
| Quantity of Doppler-domain near-end residual cyclic shifts | 10 | 2 | 2 | 1 | 0 | 0 | 2 | 4 | 12 | 14 |
| Quantity of delay-domain far-end residual cyclic shifts | 0 | 1 | 0 | 4 | 13 | 10 | 4 | 1 | 1 | 1 |
| Quantity of Doppler-domain far-end residual cyclic shifts | 5 | 10 | 2 | 0 | 1 | 0 | 2 | 3 | 12 | 14 |
| Quantity of cyclic shifts correspondi ng to a cyclic shift reference point | 40 | 40 | 42 | 40 | 41 | 41 | 44 | 40 | 40 | 40 |

It can be learned from Table 2 that quantities of cyclic shifts corresponding to the delay-domain cyclic shift reference points <3,44>, <4,244>, <7,10>, <25,274>, and <57,2> are respectively 40, 40, 42, 40, and 41. Quantities of cyclic shifts corresponding to the Doppler-domain cyclic shift reference points <114,4>, <7,10>, <135,34>, <3,44> and <138,78> are respectively 41, 44, 40, 40, and 40.

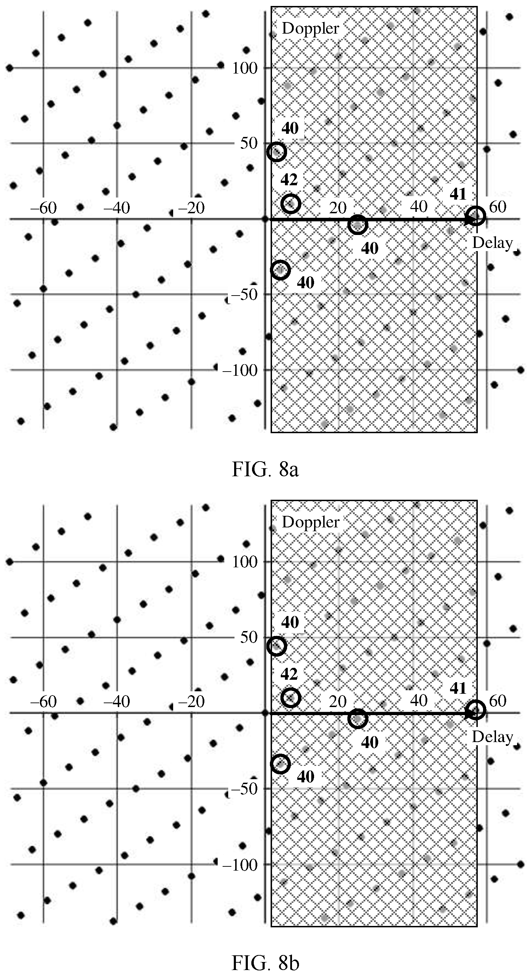

Further, the quantity of cyclic shifts corresponding to the cyclic shift reference point shown in Table 2 is represented in the delay-Doppler coordinate system. For example, as shown in FIG. 8a, delay-domain cyclic shift reference points are $\left〈{τ}_{1}^{T}, {ν}_{1}^{T}\right〉 = \left〈3,44\right〉 , \left〈{τ}_{2}^{T}, {ν}_{2}^{T}\right〉 =$ $\left〈4,244\right〉 , \left〈{τ}_{3}^{T}, {ν}_{3}^{T}\right〉 = \left〈7,10\right〉 , \left〈{τ}_{4}^{T}, {ν}_{4}^{T}\right〉 = \left〈25,274\right〉 , \left〈{τ}_{5}^{T}, {ν}_{5}^{T}\right〉 = \left〈57,2\right〉$, and corresponding quantities of cyclic shifts are respectively ${Ω}_{1}^{T} = 40 , {Ω}_{2}^{T} = 40 , {Ω}_{3}^{T} = 42 , {Ω}_{4}^{T} = 40 , {Ω}_{5}^{T} = 41$. As shown in FIG. 8b, Doppler-domain cyclic shift reference points are $\left〈{τ}_{1}^{F}, {ν}_{1}^{F}\right〉 =$ $\left〈114,4\right〉 , \left〈{τ}_{2}^{F}, {ν}_{2}^{F}\right〉 = \left〈7,10\right〉 , \left〈{τ}_{3}^{F}, {ν}_{3}^{F}\right〉 = \left〈135,34\right〉 , \left〈{τ}_{4}^{F}, {ν}_{4}^{F}\right〉 = \left〈3,44\right〉 , \left〈{τ}_{5}^{F}, {ν}_{5}^{F}\right〉 = \left〈138,78\right〉$, and corresponding quantities of cyclic shifts are respectively ${Ω}_{1}^{F} = 41 , {Ω}_{2}^{F} = 44 , {Ω}_{3}^{F} = 40 , {Ω}_{4}^{F} = 40 , {Ω}_{5}^{F} = 40$ .

It can be learned that the delay-domain cyclic shift reference point $\left〈{τ}_{2}^{F}, {ν}_{2}^{F}\right〉 = \left〈7,10\right〉$ corresponds to a largest quantity of cyclic shifts, the cyclic shift reference point of the root sequence is the Doppler-domain cyclic shift reference point $\left〈{τ}_{⋆}^{†}, {ν}_{⋆}^{†}\right〉 = \left〈{τ}_{2}^{F}, {ν}_{2}^{F}\right〉 = \left〈7,10\right〉$, and a quantity of cyclic shifts corresponding to the cyclic shift reference point of the root sequence satisfies ${Ω}_{⋆}^{†} = {Ω}_{2}^{F} = 44$.

3.3. Select, from the quantity of cyclic shifts corresponding to the delay-domain cyclic shift reference point and the quantity of cyclic shifts corresponding to the Doppler-domain cyclic shift reference point, a reference point with a largest quantity of cyclic shifts as the cyclic shift reference point of the root sequence.

It may be understood that the quantity of cyclic shifts of the cyclic shift reference point of the root sequence is the foregoing largest quantity of cyclic shifts. For example, the quantity ${Ω}_{⋆}^{†}$ of cyclic shifts corresponding to the cyclic shift reference point $\left〈{τ}_{⋆}^{†}, {ν}_{⋆}^{†}\right〉$ of the root sequence satisfies: ${Ω}_{⋆}^{†} = max \left\{{Ω}_{1}^{T},{Ω}_{2}^{T},…{Ω}_{\left|{S}_{T}\right|}^{T},{Ω}_{1}^{F},{Ω}_{2}^{F},…,{Ω}_{\left|{S}_{F}\right|}^{F}\right\}$

Herein, ${Ω}_{1}^{T} , {Ω}_{2}^{T} , … {Ω}_{\left|{S}_{T}\right|}^{T}$ represent quantities of cyclic shifts corresponding to delay-domain cyclic shift reference points, ${Ω}_{1}^{F} , {Ω}_{2}^{F} , … {Ω}_{\left|{S}_{F}\right|}^{F}$ represent quantities of cyclic shifts corresponding to Doppler-domain cyclic shift reference points, and ${Ω}_{⋆}^{†}$ represents the quantity of cyclic shifts corresponding to the cyclic shift reference point of the root sequence.

For example, in Table 1, the quantity of cyclic shifts corresponding to the delay-domain cyclic shift reference point $\left〈{τ}_{1}^{T}, {ν}_{1}^{T}\right〉 = \left〈5,8\right〉$ is the largest. The cyclic shift reference point of the root sequence is the delay-domain cyclic shift reference point $\left〈{τ}_{⋆}^{†}, {ν}_{⋆}^{†}\right〉 = \left〈{τ}_{1}^{T}, {ν}_{1}^{T}\right〉 = \left〈5,8\right〉$, and the quantity of cyclic shifts of the root sequence is ${Ω}_{⋆}^{†} = {Ω}_{1}^{T} = 43$.

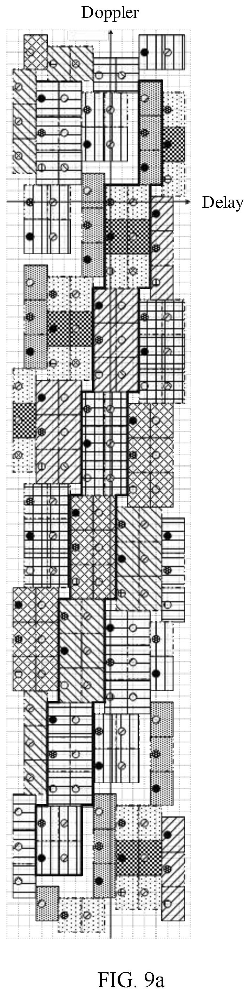

FIG. 9a is a diagram of a delay-domain cyclic shift and a Doppler-domain cyclic shift of the root sequence. It should be noted that different transmission comb indexes may not necessarily correspond to the same quantity of cyclic shifts of the root sequence. For example, for a transmission comb index **m = 0,** there are 21 cyclic shifts of the root sequence; and for a transmission comb index **m = 1,** there are 22 cyclic shifts of the root sequence. When the transmission comb index is **m = 0,** the first communication apparatus constructs 21 cyclic shifts, where a cross-ambiguity function of a first signal corresponding to the 21 cyclic shifts is equal to zero, and the 21 cyclic shifts form a zero ambiguity zone. When the transmission comb index is **m = 1,** the first communication apparatus constructs 22 cyclic shifts, where a cross-ambiguity function of a first signal corresponding to the 22 cyclic shifts is equal to zero, and the 22 cyclic shifts form a zero ambiguity zone. A cross-ambiguity function of a first signal corresponding to cyclic shifts between the transmission comb index **m = 0** and the transmission comb index **m** = **1** is also equal to zero, a zero ambiguity zone is also formed between the cyclic shifts, and there are a total of 43 cyclic shifts.

For example, in Table 2, the quantity of cyclic shifts corresponding to the Doppler-domain cyclic shift reference point $\left〈{τ}_{2}^{F}, {ν}_{2}^{F}\right〉 = \left〈7,10\right〉$ is the largest. The cyclic shift reference point of the root sequence is the Doppler-domain cyclic shift reference point $\left〈{τ}_{⋆}^{†}, {ν}_{⋆}^{†}\right〉 = \left〈{τ}_{2}^{F}, {ν}_{2}^{F}\right〉 = \left〈7,10\right〉$ , and the quantity of cyclic shifts of the root sequence is ${Ω}_{⋆}^{†} = {Ω}_{2}^{F} = 44$.

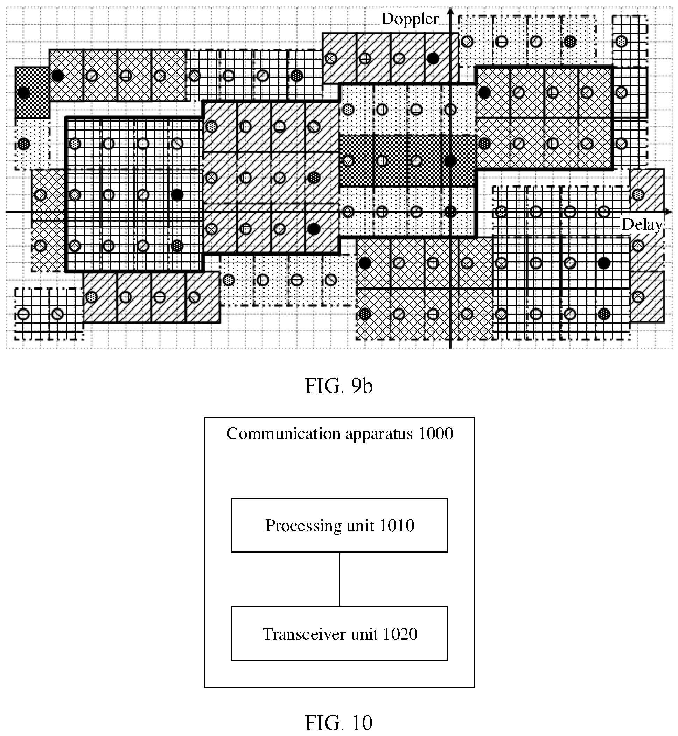

FIG. 9b is a diagram of a delay-domain cyclic shift and a Doppler-domain cyclic shift of the root sequence. It should be noted that different transmission comb indexes may not necessarily correspond to the same quantity of cyclic shifts of the root sequence. For example, for a transmission comb index **m = 0,** there are 24 cyclic shifts of the root sequence; and for a transmission comb index **m = 1,** there are 20 cyclic shifts of the root sequence. When the transmission comb index is m = **0,** the first communication apparatus constructs 24 cyclic shifts, where a cross-ambiguity function of a first signal corresponding to the 24 cyclic shifts is equal to zero, and the 24 cyclic shifts form a zero ambiguity zone. When the transmission comb index is **m = 1,** the first communication apparatus constructs 20 cyclic shifts, where a cross-ambiguity function of a first signal corresponding to the 20 cyclic shifts is equal to zero, and the 20 cyclic shifts form a zero ambiguity zone. A cross-ambiguity function of a first signal corresponding to cyclic shifts between the transmission comb index **m = 0** and the transmission comb index **m = 1** is also equal to zero, a zero ambiguity zone is also formed between the cyclic shifts, and there are a total of 44 cyclic shifts.

3.4. Determine the cyclic shift of the root sequence based on the cyclic shift reference point of the root sequence.

For example, the first communication apparatus determines a delay-domain cyclic shift and a Doppler-domain cyclic shift based on the cyclic shift reference point of the root sequence; and the first communication apparatus determines the cyclic shift of the root sequence based on *t*he delay-domain cyclic shift and the Doppler-domain cyclic shift. The foregoing process may be described as follows: The cyclic shift of the root sequence is determined based on the delay-domain cyclic shift and the Doppler-domain cyclic shift. For example, the cyclic shift of the root sequence is represented as **C_{v,m},** the delay-domain cyclic shift is represented as **τ_{v,m},** and the Doppler-domain cyclic shift is represented as **ν_{v,m}.** The cyclic shift **C_{v,m}** of the root sequence satisfies the following: ${C}_{v , m} = \left({τ}_{v , m}-u{ν}_{v , m}\right) mod P$

Herein, ***P*** is the maximum prime number that does not exceed the sequence length ***N, v*** represents the cyclic shift index of the root sequence, and **m** represents the transmission comb index.

When the cyclic shift reference point of the root sequence is the delay-domain cyclic shift reference point, a process of determining the delay-domain cyclic shift ***τ_{v,m}*** and the Doppler-domain cyclic shift ***ν_{v,m}*** satisfies:
When the cyclic shift index of the root sequence is ***v* = 0, 1, ... , |** 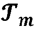 **| - 1,** and the transmission comb index is ***m* = 0,1, ... , *M* - 1,** the delay-domain cyclic shift ***τ_{v.m}*** and the Doppler-domain cyclic shift *ν_{v,m}* satisfy: $\left\{\begin{matrix}{τ}_{v , m} = k {Δ}_{T} - \left⌊\frac{l}{\left⌈min\left\{{ν}_{⋆}^{T},P-{ν}_{⋆}^{T}\right\}/{Δ}_{F}\right⌉}\right⌋ ⋅ {τ}_{⋆}^{T} mod {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Alternatively, when the cyclic shift index of the root sequence is ***v* = |** 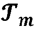 **|, |** 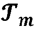 **| + 1, ... , |** 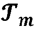 **| + |** 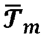 **| - 1,** and the transmission comb index is ***m* = 0, 1, *... , M -* 1,** the delay-domain cyclic shift ***τ_{v,m}*** and the Doppler-domain cyclic shift ***ν_{v,m}*** satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Alternatively, when the cyclic shift index of the root sequence is $v = \left|{T}_{m}\right| + \left|{\overline{T}}_{m}\right| , \left|{T}_{m}\right| + \left|{\overline{T}}_{m}\right| + 1 , … , \left|{T}_{m}\right| + \left|{\overline{T}}_{m}\right| + \left|{\overline{\overline{T}}}_{m}\right| - 1$ , and the transmission comb index is ***m*** = **0,1, ... , *M* - 1,** the delay-domain cyclic shift ***τ_{v,m}*** and the Doppler-domain cyclic shift ***ν_{v,m}*** satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Herein, ***P*** is the maximum prime number that does not exceed the sequence length ***N*, *M*** represents the quantity of transmission combs, Δ_{T} represents the maximum delay spread, Δ_{F} represents the maximum Doppler spread, $\left〈{τ}_{⋆}^{T}, {ν}_{⋆}^{T}\right〉$ represents coordinates of the cyclic shift reference point of the root sequence, ${k}_{⋆}^{T}$ represents a quantity of delay-domain full cyclic shifts, ${l}_{⋆}^{T}$ represents a quantity of Doppler-domain full cyclic shifts, ${\overline{k}}_{⋆}^{T}$ represents a quantity of delay-domain near-end residual cyclic shifts, ${\overline{l}}_{⋆}^{T}$ represents a quantity of Doppler-domain near-end residual cyclic shifts, ${\overline{\overline{k}}}_{⋆}^{T}$ represents a quantity of delay-domain far-end residual cyclic shifts, ${\overline{\overline{l}}}_{⋆}^{T}$ represents a quantity of Doppler-domain far-end residual cyclic shifts, an operator ***sgn***(·) represents a sign function, an operator $\left⌊⋅\right⌋$ represents rounding down, an operator $\left⌈⋅\right⌉$ represents rounding up, and an operator |·| represents a cardinality of a set. 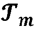 , 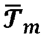 , ${\overline{\overline{T}}}_{m}$ respectively satisfy the following: ${T}_{m} = \left\{\left.\left〈k, l\right〉\right|0\leq k<{k}_{⋆}^{T},0\leq l<{l}_{⋆}^{T},m=lmodM\right\} ;$ ${\overline{T}}_{m} = \left\{\left.\left〈k, l\right〉\right|0<k\leq {\overline{k}}_{⋆}^{T},-{\overline{l}}_{⋆}^{T}\leq l<0,m=lmodM\right\} ;$ and ${\overline{T}}_{m} = \left\{\left.\left〈k, l\right〉\right|0<k\leq {\overline{\overline{k}}}_{⋆}^{T},-{\overline{l}}_{⋆}^{T}-{\overline{\overline{l}}}_{⋆}^{T}\leq l<-{\overline{l}}_{⋆}^{T},m=lmodM\right\} .$

When the cyclic shift reference point of the root sequence is the Doppler-domain cyclic shift reference point, a process of determining the delay-domain cyclic shift ***τ_{v,m}*** and the Doppler-domain cyclic shift ***ν*_{v,m}** satisfies:

When the cyclic shift index of the root sequence is ***v* = 0, 1, ... , |** 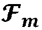 **| - 1,** and the transmission comb index is ***m* = 0,1, ... , *M* - 1,** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[\left(lM+m\right){Δ}_{F}-m-\left⌊\frac{k}{min \left\{{τ}_{⋆}^{F},P-{τ}_{⋆}^{F}\right\} / {Δ}_{T}}\right⌋⋅{ν}_{⋆}^{F}mod{Δ}_{F}\right] / M\end{matrix}\right.$

Alternatively, when the cyclic shift index of the root sequence is ***v*** = **|** 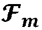 **|, |** 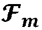 **|** + **1,** ..., | 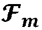 | **+ |** 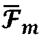 **|** - **1,** and the transmission comb index is ***m* = 0, 1, *... ,M - 1,*** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix}\right.$

Alternatively, when the cyclic shift index of the root sequence is $v = \left|{F}_{m}\right| + \left|{\overline{F}}_{m}\right| , \left|{F}_{m}\right| + \left|{\overline{F}}_{m}\right| + 1 , … , \left|{F}_{m}\right| + \left|{\overline{F}}_{m}\right| + \left|{\overline{\overline{F}}}_{m}\right| - 1$ and the transmission comb index is ***m*** = **0, 1, ..., *M* - 1,** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix}\right.$

Herein, ***P*** is the maximum prime number that does not exceed the sequence length ***N*, *M*** represents the quantity of transmission combs, **Δ_{T}** represents the maximum delay spread, **Δ_{F}** represents the maximum Doppler spread, $\left〈{τ}_{⋆}^{F}, {ν}_{⋆}^{F}\right〉$ represents coordinates of the cyclic shift reference point of the root sequence, ${k}_{⋆}^{F}$ represents a quantity of delay-domain full cyclic shifts, ${l}_{⋆}^{F}$ represents a quantity of Doppler-domain full cyclic shifts, ${\overline{k}}_{⋆}^{F}$ represents a quantity of delay-domain near-end residual cyclic shifts, ${\overline{l}}_{⋆}^{F}$ represents a quantity of Doppler-domain near-end residual cyclic shifts, ${\overline{\overline{k}}}_{⋆}^{F}$ represents a quantity of delay-domain far-end residual cyclic shifts, ${\overline{\overline{l}}}_{⋆}^{F}$ represents a quantity of Doppler-domain far-end residual cyclic shifts, an operator **sgn**(·) represents a sign function, an operator $\left⌊⋅\right⌋$ represents rounding down, an operator $\left⌈⋅\right⌉$ represents rounding up, and an operator |·| represents a cardinality of a set. 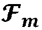 *,* 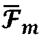 , ${\overline{\overline{F}}}_{m}$ respectively satisfy the following: ${F}_{m} = \left\{\left〈k, l\right〉\left|0\leq k<{k}_{⋆}^{F},0\leq l<{l}_{⋆}^{F},m=\left(\left⌊\frac{k}{\left⌈min\left\{{τ}_{⋆}^{F},P-{τ}_{⋆}^{F}\right\}/{Δ}_{T}\right⌉}\right⌋{l}_{⋆}^{F}+l\right)mod M\right.\right\} ;$ ${\overline{F}}_{m} = \left\{\left〈k, l\right〉\left|-{\overline{k}}_{⋆}^{F}\leq k<0,0<l\leq {\overline{l}}_{⋆}^{F},m=\left(-l\right)mod M\right.\right\} ;$ and ${\overline{\overline{F}}}_{m} = \left\{\left〈k, l\right〉\left|-{\overline{k}}_{⋆}^{F}-{\overline{\overline{k}}}_{⋆}^{F}\leq k<-{\overline{k}}_{⋆}^{F},0<l\leq {l}_{⋆}^{F},m=\left(-l\right) mod M\right.\right\} .$

It may be understood that, in the solution in this embodiment of this application, the first communication apparatus may be the apparatus having the function of the access network device. The access network device may perform the solution in this embodiment of this application, to determine one or more cyclic shifts in cyclic shifts of the root sequence, generate one or more first signals based on the one or more shifts, and send the one or more signals to the terminal. Because a cross-ambiguity function of the one or more signals is equal to zero, mutual interference between the one or more first signals can be avoided. For example, in the example in Table 1, if the quantity of cyclic shifts of the root sequence is equal to 43, indexes of the cyclic shifts of the root sequence may be 0 to 42. In this case, one or more indexes may be determined from the indexes of the 43 cyclic shifts, a specific cyclic shift corresponding to the index may be determined according to the foregoing part 3.4, and the first signal or the like is further determined. Alternatively, the first communication apparatus may be the apparatus having the function of the terminal.

The terminal may perform the solution in this embodiment of this application to determine the quantity of cyclic shifts of the root sequence. In this case, the access network device may also perform the solution in this embodiment of this application to determine the quantity of cyclic shifts of the root sequence. The access network device may determine the cyclic shift index of the root sequence based on the quantity of cyclic shifts of the root sequence. Then, the access network device configures one or more cyclic shift indexes for the terminal. For example, in the example in Table 1, if the quantity of cyclic shifts of the root sequence is 43, the access network device may select one or more indexes from indexes 0 to 42 and configure the one or more indexes for the terminal. When obtaining the cyclic shift index, the terminal determines, according to the descriptions in the foregoing part 3.4, a cyclic shift corresponding to the index, to further determine one or more first signals. The terminal sends the one or more first signals to the access network device. Because a cross-ambiguity function of the one or more first signals is equal to zero, mutual interference between the first signals can be avoided. Optionally, at least one of parameters such as the sequence length ***N*** of the root sequence, the maximum prime number ***P*** that does not exceed the sequence length ***N,*** the quantity ***M*** of transmission combs, the root sequence number ***u*,** the maximum delay spread **Δ_{T}**, or the maximum Doppler spread **Δ_{F}** may be configured by the access network device for the terminal.

It may be understood that, in embodiments of this application:
1. Appropriate modifications to the communication method provided in embodiments of this application also fall within the protection scope of embodiments of this application.
   For example, a cyclic shift method for a root sequence provided in embodiments of this application is appropriately modified, but a quantity of cyclic shifts of the root sequence determined by using a modified method is the same as a quantity of cyclic shifts of the root sequence determined by using the method in embodiments of this application. The modification also falls within the protection scope of embodiments of this application.
2. The cyclic shift sequence provided in embodiments of this application is not limited.
   For example, subsequent modifications to the cyclic shift sequence provided in embodiments of this application also fall within the protection scope of embodiments of this application. For example, a phase shift performed on the cyclic shift sequence provided in embodiments of this application does not change performance of the ambiguity function of the root sequence, and also falls within the protection scope of embodiments of this application.
3. In the descriptions of embodiments of this application, an execution sequence of different steps is not limited. In addition, the procedure in FIG. 3 may include fewer steps or more steps than those in the schematic flowchart or the text descriptions. This is not limited.
4. Various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments provided in this application, the method provided in embodiments of this application is described from respective perspectives of interaction between the first communication apparatus and the second communication apparatus. To implement functions in the method provided in embodiments of this application, the foregoing communication apparatus may include a hardware structure and/or a software module, and the foregoing functions are implemented by using a hardware structure, a software module, or a combination of a hardware structure and a software module. Whether a function in the foregoing functions is performed by using the hardware structure, the software module, or the combination of the hardware structure and the software module depends on design constraints of particular applications of the technical solutions.

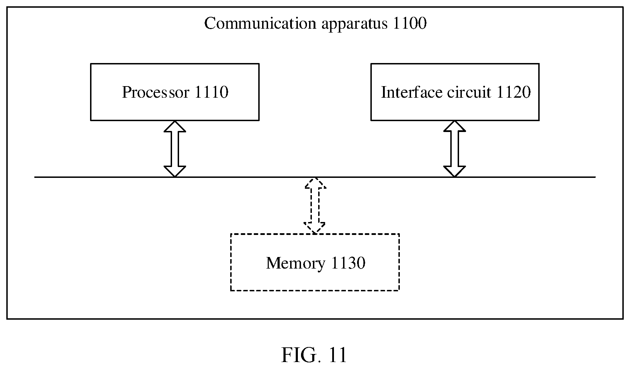

FIG. 10 and FIG. 11 are diagrams of structures of possible communication apparatuses according to embodiments of this application. The communication apparatuses may implement the functions implemented by the first communication apparatus in the foregoing method embodiments, and therefore may implement beneficial effects of the foregoing method embodiments.

As shown in FIG. 10, a communication apparatus 1000 includes a processing unit 1010 and a transceiver unit 1020. The communication apparatus 1000 is configured to implement the functions of the first communication apparatus in the method embodiment shown in FIG. 3.

Optionally, the transceiver unit 1020 may also be referred to as an output unit, an interface unit, a communication unit, or the like. In a possible implementation, the transceiver unit 1020 includes at least one of a sending unit or a receiving unit. The sending unit and the receiving unit may be integrated, or may be two independent units or the like.

When the communication apparatus 1000 is configured to implement the functions of the first communication apparatus in FIG. 3, details are as follows:

The processing unit 1010 is configured to determine a first sequence based on a cyclic shift of a root sequence, where the cyclic shift is associated with a transmission comb index. The transceiver unit 1020 is configured to output a first signal, where the first signal is obtained by performing frequency-domain comb mapping on the first sequence, and a cross-ambiguity function of the first signal is equal to zero within a range of a maximum delay spread and a maximum Doppler spread.

In a possible design, the first sequence ***s_{u,v,m}*(*n*)** determined based on the cyclic shift ***C_{v,m}*** of the root sequence satisfies: ${s}_{u , v , m} \left(n\right) = {e}^{- j \left[\frac{π un \left(n+1\right)}{P}+\frac{2 π n {C}_{v , m}}{N}\right]} , n = 0 , 1 , … , N - 1$

Herein, ***N*** represents a sequence length of the root sequence, ***P*** is a maximum prime number that does not exceed the sequence length ***N, u*** represents a root sequence number, ***u*** ∈ **{1, 2, ... , *N* - 1}, *v*** represents a cyclic shift index of the root sequence, ***m*** represents the transmission comb index, and ***n*** represents a symbol position of the first sequence.

In a possible design, the cyclic shift ***C_{v,m}*** of the root sequence is determined based on a delay-domain cyclic shift ***τ_{v,m}*** and a Doppler-domain cyclic shift ***ν*_{*v,m*,}** and satisfies: ${C}_{v , m} = \left({τ}_{v , m}-u{ν}_{v , m}\right) mod P$

Herein, ***P*** is the maximum prime number that does not exceed the sequence length ***N*, *v*** represents the cyclic shift index of the root sequence, and ***m*** represents the transmission comb index.

In a possible design, the first signal ***s̅_{u,v,m}*(*i*)** is obtained by performing frequency-domain comb mapping on the first sequence ***s_{u,v,m}*(*n*),** and satisfies: ${\overline{s}}_{u , v , m} \left(i\right) = {\sum }_{n = 0}^{N - 1} {s}_{u , v , m} \left(n\right) δ \left(i-nM+m\right) , i = 1 - M , 2 - M , … , M \left(N-1\right)$

Herein, ***N*** represents the sequence length of the root sequence, ***M*** represents a quantity of transmission combs, ***m*** represents the transmission comb index, ***m* ∈** {**0, 1, ... , *M*** - **1**}, ***δ***(***i***) represents an impulse function, ***n*** represents the symbol position of the first sequence, and ***i*** represents a subcarrier number.

In a possible design, the first signal includes ***s̅*_{*u*,v₁,m₁}(*i*)** and ***s̅*_{u,v₂,m₂}(*i*),** and a cross-ambiguity function ${A}_{{\overline{s}}_{u , {v}_{1} , {m}_{1}} {\overline{s}}_{u , {v}_{2} , {m}_{2}}} \left(τ, ν\right)$ of ***s̅_{u,v₁,m1}*(*i*)** and ***s̅*_{*u*,v₂,m₂}** is equal to zero within the range of the maximum delay spread **Δ_{T}** and the maximum Doppler spread **Δ_{F},** and satisfies: $\left|{A}_{{\overline{s}}_{u , {v}_{1} , {m}_{1}} {\overline{s}}_{u , {v}_{2} , {m}_{2}}}\left(τ, ν\right)\right| = 0 , \left({v}_{1}\neq {v}_{2}\right) ∨ \left({m}_{1}\neq {m}_{2}\right) ∨ \left(τ\neq 0\right) ∨ \left(ν\neq 0\right)$

Herein, ***u*** represents the root sequence number, ***v*₁** and ***v*₂** represent cyclic shift indexes of the root sequence, ***m*₁** and ***m*₂** represent transmission comb indexes, ***τ*** represents a delay coordinate of an ambiguity function, a value range of ***τ* is 0 ≤ *τ* ≤ Δ_{T} - 1, *ν*** represents a Doppler coordinate of the ambiguity function, a value range of ***ν* is 0 ≤ *ν* ≤ Δ_{F} - 1,** and an operator V represents a condition OR.

In a possible design, the processing unit 1010 is further configured to: determine a cyclic shift reference point of the root sequence based on a delay-domain cyclic shift reference point and a Doppler-domain cyclic shift reference point; determine the delay-domain cyclic shift and the Doppler-domain cyclic shift based on the cyclic shift reference point of the root sequence; and determine the cyclic shift of the root sequence based on the delay-domain cyclic shift and the Doppler-domain cyclic shift.

In a possible design, the cyclic shift reference point of the root sequence is the delay-domain cyclic shift reference point.

When the cyclic shift index of the root sequence is ***v* = 0, 1, ... , |** 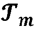 **| - 1,** and the transmission comb index is ***m* = 0, 1, ... , *M* - 1,** the delay-domain cyclic shift ***τ_{v,m}*** and the Doppler-domain cyclic shift ***ν_{v,m}*** satisfy: $\left\{\begin{matrix}{τ}_{v , m} = k {Δ}_{T} - \left⌊\frac{l}{\left⌈min\left\{{ν}_{⋆}^{T},P-{ν}_{⋆}^{T}\right\}/{Δ}_{F}\right⌉}\right⌋ {τ}_{⋆}^{T} mod {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Alternatively, when the cyclic shift index of the root sequence is ***v* = |** 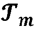 **|, |** 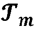 **| + 1, *... ,* |** 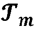 **| + |** 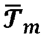 **| - 1,** and the transmission comb index is ***m* = 0, 1, *..., M -* 1,** the delay-domain cyclic shift ***τ_{v,m}*** and the Doppler-domain cyclic shift ***ν_{v,m}*** satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Alternatively, when the cyclic shift index of the root sequence is $v = \left|{T}_{m}\right| + \left|{\overline{T}}_{m}\right| , \left|{T}_{m}\right| + \left|{\overline{T}}_{m}\right| + 1 , … , \left|{T}_{m}\right| + \left|{\overline{T}}_{m}\right| + \left|{\overline{\overline{T}}}_{m}\right| - 1$ , and the transmission comb index is ***m*** = **0,1, ... , *M* - 1,** the delay-domain cyclic shift ***τ_{v,m}*** and the Doppler-domain cyclic shift ***ν_{v,m}*** satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right.$

Herein, ***P*** is the maximum prime number that does not exceed the sequence length ***N*, *M*** represents the quantity of transmission combs, Δ_{T} represents the maximum delay spread, Δ_{F} represents the maximum Doppler spread, $\left〈{τ}_{⋆}^{T}, {ν}_{⋆}^{T}\right〉$ represents coordinates of the cyclic shift reference point of the root sequence, ${k}_{⋆}^{T}$ represents a quantity of delay-domain full cyclic shifts, ${l}_{⋆}^{T}$ represents a quantity of Doppler-domain full cyclic shifts, ${\overline{k}}_{⋆}^{T}$ represents a quantity of delay-domain near-end residual cyclic shifts, ${\overline{l}}_{⋆}^{T}$ represents a quantity of Doppler-domain near-end residual cyclic shifts, ${\overline{\overline{k}}}_{⋆}^{T}$ represents a quantity of delay-domain far-end residual cyclic shifts, ${\overline{\overline{l}}}_{⋆}^{T}$ represents a quantity of Doppler-domain far-end residual cyclic shifts, an operator **sgn**(·) represents a sign function, an operator $\left⌊⋅\right⌋$ represents rounding down, an operator $\left⌈⋅\right⌉$ represents rounding up, an operator |·| represents a cardinality of a set, and 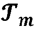 , 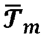 , ${\overline{\overline{T}}}_{m}$ are respectively as follows: ${T}_{m} = \left\{\left.\left〈k, l\right〉\right|0\leq k<{k}_{⋆}^{T},0\leq l<{l}_{⋆}^{T},m=lmodM\right\} ;$ ${\overline{T}}_{m} = \left\{\left.\left〈k, l\right〉\right|0<k\leq {\overline{k}}_{⋆}^{T},-{\overline{l}}_{⋆}^{T}\leq l<0,m=lmodM\right\} ;$ and ${\overline{\overline{T}}}_{m} = \left\{\left.\left〈k, l\right〉\right|0<k\leq {\overline{\overline{k}}}_{⋆}^{T},-{\overline{l}}_{⋆}^{T}-{\overline{\overline{l}}}_{⋆}^{T}\leq l<-{\overline{l}}_{⋆}^{T},m=lmodM\right\} .$

In a possible design, the cyclic shift reference point of the root sequence is the Doppler-domain cyclic shift reference point.

When the cyclic shift index of the root sequence is ***v* = 0, 1, ... , |** 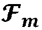 **| - 1,** and the transmission comb index is ***m* = 0, 1, ... , *M* - 1,** the delay-domain cyclic shift ***τ_{v,m}*** and the Doppler-domain cyclic shift **ν*_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[\left(lM+m\right){Δ}_{F}-m-\left⌊\frac{k}{\left⌈min\left\{{τ}_{⋆}^{F},P-{τ}_{⋆}^{F}\right\}/{Δ}_{T}\right⌉}\right⌋⋅{ν}_{⋆}^{F}mod{Δ}_{F}\right] / M\end{matrix}\right.$

Alternatively, when the cyclic shift index of the root sequence is ***v* = |** 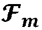 **|, |** 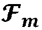 **| + 1, ..., |** 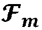 **| + |** 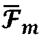 **| - 1,** and the transmission comb index is ***m* = 0, 1, *... , M -* 1,** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix}\right.$

Alternatively, when the cyclic shift index of the root sequence is $v = \left|{F}_{m}\right| + \left|{\overline{F}}_{m}\right| , \left|{F}_{m}\right| + \left|{\overline{F}}_{m}\right| + 1 , … , \left|{F}_{m}\right| + \left|{\overline{F}}_{m}\right| + \left|{\overline{\overline{F}}}_{m}\right| - 1$ , and the transmission comb index is ***m*** = **0, 1, ... , *M* - 1,** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix}\right.$

Herein, ***P*** is the maximum prime number that does not exceed the sequence length ***N*, *M*** represents the quantity of transmission combs, **Δ_{T}** represents the maximum delay spread, **Δ_{F}** represents the maximum Doppler spread, $\left〈{τ}_{⋆}^{F}, {ν}_{⋆}^{F}\right〉$ represents coordinates of the cyclic shift reference point of the root sequence, ${k}_{⋆}^{F}$ represents a quantity of delay-domain full cyclic shifts, ${l}_{⋆}^{F}$ represents a quantity of Doppler-domain full cyclic shifts, ${\overline{k}}_{⋆}^{F}$ represents a quantity of delay-domain near-end residual cyclic shifts, ${\overline{l}}_{⋆}^{F}$ represents a quantity of Doppler-domain near-end residual cyclic shifts, ${\overline{\overline{k}}}_{⋆}^{F}$ represents a quantity of delay-domain far-end residual cyclic shifts, ${\overline{\overline{l}}}_{⋆}^{F}$ represents a quantity of Doppler-domain far-end residual cyclic shifts, an operator **sgn**(·) represents a sign function, an operator $\left⌊⋅\right⌋$ represents rounding down, an operator $\left⌈⋅\right⌉$ represents rounding up, an operator |·| represents a cardinality of a set, and 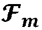 , 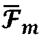 , ${\overline{\overline{F}}}_{m}$ are respectively as follows: ${F}_{m} = \left\{\left〈k, l\right〉\left|0\leq k<{k}_{⋆}^{F},0\leq l<{l}_{⋆}^{F},m=\left(\left⌊\frac{k}{\left⌈min\left\{{τ}_{⋆}^{F},P-{τ}_{⋆}^{F}\right\}/{Δ}_{T}\right⌉}\right⌋{l}_{⋆}^{F}+l\right)mod M\right.\right\} ;$ ${\overline{F}}_{m} = \left\{\left〈k, l\right〉\left|-{\overline{k}}_{⋆}^{F}\leq k<0,0<l\leq {\overline{l}}_{⋆}^{F},m=\left(-l\right)mod M\right.\right\} ;$ and ${\overline{\overline{F}}}_{m} = \left\{\left〈k, l\right〉\left|-{\overline{k}}_{⋆}^{F}-{\overline{\overline{k}}}_{⋆}^{F}\leq k<-{\overline{k}}_{⋆}^{F},0<l\leq {\overline{\overline{l}}}_{⋆}^{F},m=\left(-l\right)mod M\right.\right\} .$

In a possible design, a set 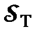 including coordinates of the delay-domain cyclic shift reference point satisfies: ${S}_{T} = \left\{\left〈τ,M⋅{u}^{- 1}τ mod P\right〉\left|\begin{matrix}min \left\{\left(\pm {u}^{- 1}τ\right) mod P\right\} < {min}_{n = 1 , 2 , … , τ - 1} \left\{\left(\pm {u}^{- 1}n\right) mod P\right\} , \\ τ ∈ \left\{{Δ}_{T},{Δ}_{T}+1, …,{min}_{ν ∈ \left\{\pm 1,\pm 2,…,\pm \left(\left⌈{Δ}_{F}/M\right⌉-1\right)\right\}}\left\{uν mod P\right\}\right\}\end{matrix}\right.\right\}$

Herein, ***P*** is the maximum prime number that does not exceed the sequence length ***N*, *M*** represents the quantity of transmission combs, ***u*** represents the root sequence number, **Δ_{T}** represents the maximum delay spread, **Δ_{F}** represents the maximum Doppler spread, $\left〈{τ}_{i}^{T}, {ν}_{i}^{T}\right〉$ represents coordinates of an ***i***^{th} delay-domain cyclic shift reference point, a value range of ***i*** is **1** ≤ ***i ≤*** | 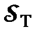 |, an operator (·)⁻¹ represents a multiplicative inverse, and the operator |·| represents a cardinality of the set.

In a possible design, a set 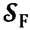 including coordinates of the Doppler-domain cyclic shift reference point satisfies: ${S}_{F} = \left\{\left〈uν mod P,M⋅ν\right〉\left|\begin{matrix}min \left\{\left(\pm uν\right) mod P\right\} < {min}_{n = 1 , 2 , … , ν - 1} \left\{\left(\pm un\right) mod P\right\} , \\ ν ∈ \left\{\left⌈{Δ}_{F}/M\right⌉,\left⌈{Δ}_{F}/M\right⌉+1, …,{min}_{τ ∈ \left\{\pm 1,\pm 2,…,\pm \left({Δ}_{T}-1\right)\right\}}\left\{{u}^{- 1}τ mod P\right\}\right\}\end{matrix}\right.\right\}$

Herein, ***P*** is the maximum prime number that does not exceed the sequence length ***N*, *M*** represents the quantity of transmission combs, ***u*** represents the root sequence number, **Δ_{T}** represents the maximum delay spread, **Δ_{F}** represents the maximum Doppler spread, $\left〈{τ}_{i}^{F}, {ν}_{i}^{F}\right〉$ represents coordinates of an ***i***^{th} Doppler-domain cyclic shift reference point, a value range of ***i*** is **1** ≤ ***i** ≤* **|** 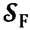 **|,** the operator (·)⁻¹ represents a multiplicative inverse, and the operator |·| represents a cardinality of the set.

In a possible design, determining the cyclic shift reference point of the root sequence based on the delay-domain cyclic shift reference point and the Doppler-domain cyclic shift reference point includes: determining the cyclic shift reference point of the root sequence based on a quantity of cyclic shifts corresponding to the delay-domain cyclic shift reference point and a quantity of cyclic shifts corresponding to the Doppler-domain cyclic shift reference point.

In a possible design, determining the cyclic shift reference point of the root sequence based on the quantity of cyclic shifts corresponding to the delay-domain cyclic shift reference point and the quantity of cyclic shifts corresponding to the Doppler-domain cyclic shift reference point includes: determining, from the quantity of cyclic shifts corresponding to the delay-domain cyclic shift reference point and the quantity of cyclic shifts corresponding to the Doppler-domain cyclic shift reference point, a reference point with a largest quantity of cyclic shifts as the cyclic shift reference point of the root sequence.

In a possible design, a quantity ${Ω}_{⋆}^{†}$ of cyclic shifts corresponding to the cyclic shift reference point $\left〈{τ}_{⋆}^{†}, {ν}_{⋆}^{†}\right〉$ of the root sequence satisfies: ${Ω}_{⋆}^{†} = max \left\{{Ω}_{1}^{T},{Ω}_{2}^{T}, … {Ω}_{\left|{S}_{T}\right|}^{T},{Ω}_{1}^{F},{Ω}_{2}^{F}, … ,{Ω}_{\left|{S}_{F}\right|}^{F}\right\}$

Herein, ${Ω}_{1}^{T} , {Ω}_{2}^{T} , … {Ω}_{\left|{S}_{T}\right|}^{T}$ represent quantities of cyclic shifts corresponding to delay-domain cyclic shift reference points, ${Ω}_{1}^{F} , {Ω}_{2}^{F} , … , {Ω}_{\left|{S}_{F}\right|}^{F}$ represent quantities of cyclic shifts corresponding to Doppler-domain cyclic shift reference points, and ${Ω}_{⋆}^{†}$ represents the quantity of cyclic shifts corresponding to the cyclic shift reference point of the root sequence.

In a possible design, a quantity ${Ω}_{i}^{T}$ of cyclic shifts corresponding to the delay-domain cyclic shift reference point $\left〈{τ}_{i}^{T}, {ν}_{i}^{T}\right〉$ satisfies: ${Ω}_{i}^{T} = {k}_{i}^{T} ⋅ {l}_{i}^{T} + {\overline{k}}_{i}^{T} ⋅ {\overline{l}}_{i}^{T} ⋅ {\overline{\overline{k}}}_{i}^{T} ⋅ {\overline{\overline{l}}}_{i}^{T}$

Herein, ${k}_{i}^{T}$ represents a quantity of delay-domain full cyclic shifts, ${l}_{i}^{T}$ represents a quantity of Doppler-domain full cyclic shifts, ${\overline{k}}_{i}^{T}$ represents a quantity of delay-domain near-end residual cyclic shifts, ${\overline{l}}_{i}^{T}$ represents a quantity of Doppler-domain near-end residual cyclic shifts, ${\overline{\overline{k}}}_{i}^{T}$ represents a quantity of delay-domain far-end residual cyclic shifts, ${\overline{\overline{l}}}_{i}^{T}$ represents a quantity of Doppler-domain far-end residual cyclic shifts, and the value range of ***i*** is **1** ≤ ***i*** ≤ | 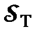 |.

In a possible design, the quantity ${k}_{i}^{T}$ of delay-domain full cyclic shifts satisfies: ${k}_{i}^{T} = \left⌊{τ}_{i}^{T}/{Δ}_{T}\right⌋$

Herein, **Δ_{T}** represents the maximum delay spread, $\left〈{τ}_{i}^{T}, {ν}_{i}^{T}\right〉$ represents the coordinates of the delay-domain cyclic shift reference point, and an operator $\left⌊⋅\right⌋$ represents rounding down.

In a possible design, the quantity ${l}_{i}^{T}$ of Doppler-domain full cyclic shifts satisfies:

Restricted coordinates $\left〈{\overline{τ}}_{i}^{T}, {\overline{ν}}_{i}^{T}\right〉$ are determined based on the coordinates $\left〈{τ}_{i}^{T}, {ν}_{i}^{T}\right〉$ of the delay-domain cyclic shift reference point, and satisfy: $\left\{\begin{matrix}{\overline{τ}}_{i}^{T} = {min}_{ν ∈ \left\{1,2,…,max\left\{\left⌈{Δ}_{F}/M\right⌉-1,min\left\{{ν}_{i}^{T}/M,P-{ν}_{i}^{T}/M\right\}-1\right\}\right\}} \left\{sgn\left({ν}_{i}^{T}-P/2\right)uν mod P\right\} \\ {\overline{ν}}_{i}^{T} = M ⋅ {u}^{- 1} {\overline{τ}}_{i}^{T} mod P\end{matrix}\right.$

Herein, ***P*** represents the maximum prime number that does not exceed the sequence length ***N, u*** represents the root sequence number, **Δ_{F}** represents the maximum Doppler spread, ***M*** represents the quantity of transmission combs, and the operator (·)⁻¹ represents a multiplicative inverse.

A Doppler spacing ${d}_{i}^{T}$ is determined based on the coordinates $\left〈{τ}_{i}^{T}, {ν}_{i}^{T}\right〉$ of the delay-domain cyclic shift reference point and the restricted coordinates $\left〈{\overline{τ}}_{i}^{T}, {\overline{ν}}_{i}^{T}\right〉$, and satisfies: ${d}_{i}^{T} = min \left\{d\left|{τ}_{i}^{T}-\left(\left⌊\frac{d / {Δ}_{F}}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\geq {\overline{τ}}_{i}^{T}-\right.\left⌊\frac{d - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}\right\}$

Herein, ***P*** represents the maximum prime number that does not exceed the sequence length ***N, M*** represents the quantity of transmission combs, **Δ_{T}** represents the maximum delay spread, **Δ_{F}** represents the maximum Doppler spread, the operator $\left⌊⋅\right⌋$ represents rounding down, and the operator $\left⌈⋅\right⌉$ represents rounding up.

The quantity ${l}_{i}^{T}$ of Doppler-domain full cyclic shifts is determined based on the Doppler spacing ${d}_{i}^{T}$, and satisfies: ${l}_{i}^{T} = \left⌊{d}_{i}^{T}/{Δ}_{F}\right⌋$

Herein, **Δ_{F}** represents the maximum Doppler spread, ${d}_{i}^{T}$ represents the Doppler spacing, and $\left⌊⋅\right⌋$ represents rounding down.

In a possible design, the quantity ${\overline{k}}_{i}^{T}$ of delay-domain near-end residual cyclic shifts satisfies: ${\overline{k}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{{l}_{i}^{T} - 1}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\right)/{Δ}_{T}\right⌋, 0\right\}$

Herein, ***P*** represents the maximum prime number that does not exceed the sequence length ***N, M*** represents the quantity of transmission combs, **Δ_{T}** represents the maximum delay spread, **Δ_{F}** represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible design, the quantity ${\overline{l}}_{i}^{T}$ of Doppler-domain near-end residual cyclic shifts satisfies: ${\overline{l}}_{i}^{T} = {l}_{i}^{T} - \left⌈min\left\{{ν}_{i}^{T},MP-{ν}_{i}^{T}\right\}/{Δ}_{F}\right⌉ ⋅ \left⌊\frac{{l}_{i}^{T}}{\left⌈min\left\{{ν}_{i}^{T},MP-{ν}_{i}^{T}\right\}/{Δ}_{F }\right⌉}\right⌋$

Herein, ***P*** represents the maximum prime number that does not exceed the sequence length ***N, M*** represents the quantity of transmission combs, **Δ_{F}** represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible design, the quantity ${\overline{\overline{k}}}_{i}^{T}$ of delay-domain far-end residual cyclic shifts satisfies: ${\overline{\overline{k}}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{2 {l}_{i}^{T} - \left⌊\left({d}_{i}^{T}+min\left\{{ν}_{i}^{T},MP-{ν}_{i}^{T}\right\}\right)/{Δ}_{F}\right⌋}{\left⌈min\left\{{ν}_{i}^{T},MP-{ν}_{i}^{T}\right\}/{Δ}_{F}\right⌉}\right⌋+1\right)⋅{τ}_{i}^{T} mod{Δ}_{T}\right)/{Δ}_{T}\right⌋, 0\right\}$

Herein, P represents the maximum prime number that does not exceed the sequence length *N, M* represents the quantity of transmission combs, Δ_{T} represents the maximum delay spread, Δ_{F} represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

In a possible design, the quantity ${\overline{\overline{l}}}_{i}^{T}$ of Doppler-domain far-end residual cyclic shifts satisfies: ${\overline{\overline{l}}}_{i}^{T} = \left⌊\left({d}_{i}^{T}+min\left\{{ν}_{i}^{T},MP-{ν}_{i}^{T}\right\}\right)/{Δ}_{F}\right⌋ - {l}_{i}^{T} - {\overline{l}}_{i}^{T}$

Herein, P represents the maximum prime number that does not exceed the sequence length *N,* M represents the quantity of transmission combs, Δ_{F} represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, ${\overline{l}}_{i}^{T}$ represents the quantity of Doppler-domain near-end residual cyclic shifts, and the operator $\left⌊⋅\right⌋$ represents rounding down.

In a possible design, a quantity ${Ω}_{i}^{F}$ of cyclic shifts corresponding to the Doppler-domain cyclic shift reference point $\left〈{τ}_{i}^{F}, {ν}_{i}^{F}\right〉$ satisfies: ${Ω}_{i}^{F} = {l}_{i}^{F} ⋅ {k}_{i}^{F} + {\overline{l}}_{i}^{F} ⋅ {\overline{k}}_{i}^{F} + {\overline{\overline{l}}}_{i}^{F} ⋅ {\overline{\overline{k}}}_{i}^{F}$

Herein, ${l}_{i}^{F}$ represents a quantity of Doppler-domain full cyclic shifts, ${k}_{i}^{F}$ represents a quantity of delay-domain full cyclic shifts, ${\overline{l}}_{i}^{F}$ represents a quantity of Doppler-domain near-end residual cyclic shifts, ${\overline{k}}_{i}^{F}$ represents a quantity of delay-domain near-end residual cyclic shifts, ${\overline{\overline{l}}}_{i}^{F}$ represents a quantity of Doppler-domain far-end residual cyclic shifts, ${\overline{\overline{k}}}_{i}^{F}$ represents a quantity of delay-domain far-end residual cyclic shifts, and the value range of i is 1 ≤ *i* ≤ | 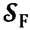 |.

In a possible design, the quantity ${l}_{i}^{F}$ of Doppler-domain full cyclic shifts satisfies: ${l}_{i}^{F} = \left⌊{ν}_{i}^{F}/{Δ}_{F}\right⌋$

Herein, Δ_{F} represents the maximum Doppler spread, $\left〈{τ}_{i}^{F}, {ν}_{i}^{F}\right〉$ represents the coordinates of the Doppler-domain cyclic shift reference point, and the operator $\left⌊⋅\right⌋$ represents rounding down.

In a possible design, the quantity ${k}_{i}^{F}$ of delay-domain full cyclic shifts satisfies:
Restricted coordinates $\left〈{\overline{τ}}_{i}^{F}, {\overline{ν}}_{i}^{F}\right〉$ are determined based on the coordinates $\left〈{τ}_{i}^{F}, {ν}_{i}^{F}\right〉$ of the Doppler-domain cyclic shift reference point, and satisfy: $\left\{\begin{matrix}{\overline{τ}}_{i}^{F} = u {\overline{ν}}_{i}^{F} / M mod P \\ {\overline{ν}}_{i}^{F} = {min}_{τ ∈ \left\{1,2,…,max\left\{{Δ}_{T}-1,min\left\{{τ}_{i}^{F},P-{τ}_{i}^{F}\right\}-1\right\}\right\}} \left\{M⋅sgn\left({τ}_{i}^{F}-P/2\right){u}^{- 1}τ mod P\right\}\end{matrix}\right.$

Herein, P represents the maximum prime number that does not exceed the sequence length *N,* M represents the quantity of transmission combs, u represents the root sequence number, Δ_{T} represents the maximum delay spread, $\left〈{τ}_{i}^{F}, {ν}_{i}^{F}\right〉$ represents the coordinates of the Doppler-domain cyclic shift reference point, and the operator (·)⁻¹ represents a multiplicative inverse.

A delay spacing ${d}_{i}^{F}$ is determined based on the coordinates $\left〈{τ}_{i}^{F}, {ν}_{i}^{F}\right〉$ of the Doppler-domain cyclic shift reference point and the restricted coordinates $\left〈{\overline{τ}}_{i}^{F}, {\overline{ν}}_{i}^{F}\right〉$, and satisfies: ${d}_{i}^{F} = min \left\{d\left|{ν}_{i}^{F}-\left(\left⌊\frac{d / {Δ}_{T}}{\left⌈min\left\{{τ}_{i}^{F},P-{τ}_{i}^{F}\right\}/{Δ}_{T}\right⌉}\right⌋+1\right)⋅{ν}_{i}^{F} mod {Δ}_{F}\geq {\overline{ν}}_{i}^{F}-\right.\left⌊\frac{d - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}\right\}$

Herein, P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$ represents the restricted coordinates, the operator $\left⌊⋅\right⌋$ represents rounding down, and the operator $\left⌈⋅\right⌉$ represents rounding up.

The quantity ${k}_{i}^{F}$ of delay-domain full cyclic shifts is determined based on the delay spacing ${d}_{i}^{F}$, and satisfies: ${k}_{i}^{F} = \left⌊{d}_{i}^{F}/{Δ}_{T}\right⌋$

Herein, Δ_{T} represents the maximum delay spread, ${d}_{i}^{F}$ represents the delay spacing, and the operator $\left⌊⋅\right⌋$ represents rounding down.

In a possible design, the quantity ${\overline{l}}_{i}^{F}$ of Doppler-domain near-end residual cyclic shifts satisfies: ${\overline{l}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{{k}_{i}^{F} - 1}{\left⌈min\left\{{τ}_{i}^{F},P-{τ}_{i}^{F}\right\}/{Δ}_{T}\right⌉}\right⌋+1\right)⋅{ν}_{i}^{F}mod{Δ}_{F}\right)/{Δ}_{F}\right⌋, 0\right\}$

Herein, P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{T}, {\overline{ν}}_{i}^{T}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible design, the quantity ${\overline{k}}_{i}^{F}$ of delay-domain near-end residual cyclic shifts satisfies: ${\overline{k}}_{i}^{F} = {k}_{i}^{F} - \left⌈min\left\{{τ}_{i}^{F},P-{τ}_{i}^{F}\right\}/{Δ}_{T}\right⌉ ⋅ \left⌊\frac{{k}_{i}^{F}}{\left⌈min\left\{{τ}_{i}^{F},P-{τ}_{i}^{F}\right\}/{Δ}_{T}\right⌉}\right⌋$

Herein, P represents the maximum prime number that does not exceed the sequence length N, Δ_{T} represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible design, the quantity ${\overline{\overline{l}}}_{i}^{F}$ of Doppler-domain far-end residual cyclic shifts satisfies: ${\overline{\overline{l}}}_{i}^{T} = max \left\{\left⌊\left({\overline{ν}}_{i}^{F}-\left⌊\frac{{d}_{i}^{F} - min \left\{{\overline{τ}}_{i}^{F},MP-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{2 {k}_{i}^{F} - \left⌊\left({d}_{i}^{F}+min\left\{{τ}_{i}^{F},P-{τ}_{i}^{F}\right\}\right)/{Δ}_{T}\right⌋}{\left⌈min\left\{{τ}_{i}^{F},P-{τ}_{i}^{F}\right\}/{Δ}_{T}\right⌉}\right⌋+1\right)⋅{ν}_{i}^{F} mod{Δ}_{F}\right)/{Δ}_{F}\right⌋, 0\right\}$

Herein, P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

In a possible design, the quantity ${\overline{\overline{k}}}_{i}^{F}$ of delay-domain far-end residual cyclic shifts satisfies: ${\overline{\overline{k}}}_{i}^{F} = \left⌊\left({d}_{i}^{F}+min\left\{{τ}_{i}^{F},P-{τ}_{i}^{F}\right\}\right)/{Δ}_{T}\right⌋ - {k}_{i}^{F} - {\overline{k}}_{i}^{F}$

Herein, P represents the maximum prime number that does not exceed the sequence length N, Δ_{T} represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, ${\overline{k}}_{i}^{F}$ represents the quantity of delay-domain near-end residual cyclic shifts, and the operator $\left⌊⋅\right⌋$ represents rounding down.

For more detailed descriptions of the processing unit 1010 and the transceiver unit 1020, refer to the descriptions in FIG. 3 in the foregoing method embodiment. Details are not described herein again.

In a possible implementation, when the access network device uses an O-RAN architecture, the processing unit 1010 may be located on a CU entity, and the transceiver unit 1020 may be located on a DU or RU entity. Optionally, when the CU entity includes a CU-CP entity, the processing unit 1010 may be located on the CU-CP entity. Alternatively, the processing unit 1010 is located on a DU entity, and the transceiver unit 1020 is located on an RU entity. Alternatively, both the processing unit 1010 and the transceiver unit 1020 are located on a DU entity, an RU entity, or the like. This is not limited.

It may be understood that, in this embodiment of this application, division into the units is an example, and is merely a logical function division. During actual implementation, another division manner may be used. In addition, functional units in this embodiment of this application may be integrated into one physical device (for example, a processor), or each functional unit may be an independent physical device, or two or more units may be integrated into one unit for implementation. The integrated unit may be implemented in a form of hardware, or implemented in a form of software functional module, or the like.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions executed by the processor 1110, or store input data required by the processor 1110 to run instructions, or store data generated after the processor 1110 runs instructions.

When the communication apparatus 1100 is configured to implement the method performed by the first communication apparatus shown in FIG. 3, the processor 1110 is configured to implement functions of the foregoing processing unit 1010, and the interface circuit 1120 is configured to implement functions of the foregoing transceiver unit 1020.

When the communication apparatus is a chip or a chip system used in a terminal, the chip or the chip system implements functions of the first communication apparatus in the foregoing method embodiment. The chip or the chip system receives, through another module (for example, a radio frequency module or an antenna) in the terminal, information sent by an access network device to the terminal; or the chip or the chip system sends information to another module (for example, a radio frequency module or an antenna) in the terminal, where the information is sent by the terminal to an access network device.

When the communication apparatus is a module used in the access network device, the module implements the functions of the first communication apparatus in the foregoing method embodiment. The module receives information from another module (for example, a radio frequency module or an antenna) in the access network device, where the information is sent by a terminal to the access network device; or the module sends information to another module (for example, a radio frequency module or an antenna) in the access network device, where the information is sent by the access network device to a terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In embodiments of this application, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC.

An embodiment of this application further provides a communication apparatus. The communication apparatus includes a processor. The processor is coupled to a memory, and the processor is configured to implement the functions of the first communication apparatus in FIG. 3. Optionally, the communication apparatus further includes the memory.

An embodiment of this application further provides a communication apparatus, including a processor. The processor is configured to implement the functions of the first communication apparatus in FIG. 3.

An embodiment of this application further provides a computer-readable storage medium. The computer-readable storage medium stores instructions, and the instructions may also be referred to as a computer program, computer program code, or the like. The instructions are run on a computer, to enable the computer to perform the functions of the first communication apparatus in FIG. 3 in the foregoing method embodiment.

An embodiment of this application further provides a computer program product, including a computer program or instructions. When the computer program or the instructions are run on a computer, the method performed by the first communication apparatus in FIG. 3 is implemented.

An embodiment of this application further provides a chip system. The chip system includes a processor. The processor is configured to execute a computer program or instructions stored in a memory, so that the functions of the first communication apparatus in FIG. 3 are implemented. Optionally, the processor is coupled to the memory.

An embodiment of this application further provides a communication system, including a first communication apparatus and a second communication apparatus. The first communication apparatus is configured to implement the functions of the first communication apparatus in FIG. 3, and the second communication apparatus is configured to implement the functions of the second communication apparatus in FIG. 3.

All or a part of the foregoing embodiments may be implemented by using software, hardware, firmware, or any combination thereof. When software is used to implement the embodiments, all or a part of the embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A communication method, comprising:
determining a first sequence based on a cyclic shift of a root sequence, wherein the cyclic shift is associated with a transmission comb index; and
outputting a first signal, wherein the first signal is obtained by performing frequency-domain comb mapping on the first sequence, and a cross-ambiguity function of the first signal is equal to zero within a range of a maximum delay spread and a maximum Doppler spread.

2. The method according to claim 1, wherein the first sequence *s_{u,v,m}*(*n*) determined based on the cyclic shift *C_{v,m}* of the root sequence satisfies: ${s}_{u , v , m} \left(n\right) = {e}^{- j \left[\frac{π un \left(n+1\right)}{P}+\frac{2 π n {C}_{v , m}}{N}\right]} , n = 0 , 1 , … , N - 1 ,$ wherein
N represents a sequence length of the root sequence, P is a maximum prime number that does not exceed the sequence length *N,* u represents a root sequence number, u ∈ {1, 2, *..., N - 1},* v represents a cyclic shift index of the root sequence, m represents the transmission comb index, and n represents a symbol position of the first sequence.

3. The method according to claim 1 or 2, wherein the cyclic shift *C_{v,m}* of the root sequence is determined based on a delay-domain cyclic shift *τ_{u,m}* and a Doppler-domain cyclic shift *ν_{v,m}*, and satisfies: ${C}_{v , m} = \left({τ}_{v , m}-u{ν}_{v , m}\right) mod P ,$ wherein
P is the maximum prime number that does not exceed the sequence length N, v represents the cyclic shift index of the root sequence, and m represents the transmission comb index.

4. The method according to any one of claims 1 to 3, wherein the first signal *s̅_{u,v,m}*(*i*) is obtained by performing frequency-domain comb mapping on the first sequence *s_{u,v,m}*(*n*), and satisfies: ${\overline{s}}_{u , v , m} \left(i\right) = {\sum }_{n = 0}^{N - 1} {s}_{u , v , m} \left(n\right) δ \left(i-nM+m\right) , i = 1 - M , 2 - M , … , M \left(N-1\right) ,$ wherein
***N*** represents the sequence length of the root sequence, **M** represents a quantity of transmission combs, **m** represents the transmission comb index, **m** ∈ {0, 1, ... , M - 1}, *δ*(*i*) represents an impulse function, **n** represents the symbol position of the first sequence, and i represents a subcarrier number.

5. The method according to any one of claims 1 to 4, wherein the first signal comprises *s̅*_{*u,v*₁*,m*₁}(i) and *s̅*_{*u*,*v*₂,*m*₂}(*i*), and a cross-ambiguity function ${A}_{{\overline{s}}_{u , {v}_{1} , {m}_{1}} , {\overline{s}}_{u , {v}_{2} , {m}_{2}}} \left(τ, ν\right)$ of *s̅*_{*u,v*₁*,m*₁}(*i*) and *s̅*_{*u*,*v*₂,*m*₂}(i) is equal to zero within the range of the maximum delay spread **Δ_{T}** and the maximum Doppler spread **Δ_{F},** and satisfies: $\left|{A}_{{\overline{s}}_{u , {v}_{1} , {m}_{1}} , {\overline{s}}_{u , {v}_{2} , {m}_{2}}}\left(τ, ν\right)\right| = 0 , \left({v}_{1}\neq {v}_{2}\right) ∨ \left({m}_{1}\neq {m}_{2}\right) ∨ \left(τ\neq 0\right) ∨ \left(ν\neq 0\right) ,$ wherein **u** represents the root sequence number, ***v*₁** and ***v*₂** represent cyclic shift indexes of the root sequence, ***m*₁** and ***m*₂** represent transmission comb indexes, ***τ*** represents a delay coordinate of an ambiguity function, a value range of ***τ*** is 0 ≤ ***τ*** ≤ Δ_{T} - 1, v represents a Doppler coordinate of the ambiguity function, a value range of **v** is **0** ≤ ***v*** ≤ **Δ_{F}** - 1, and an operator V represents a condition OR.

6. The method according to any one of claims 1 to 5, further comprising:
determining a cyclic shift reference point of the root sequence based on a delay-domain cyclic shift reference point and a Doppler-domain cyclic shift reference point;
determining the delay-domain cyclic shift and the Doppler-domain cyclic shift based on the cyclic shift reference point of the root sequence; and
determining the cyclic shift of the root sequence based on the delay-domain cyclic shift and the Doppler-domain cyclic shift.

7. The method according to claim 6, wherein the cyclic shift reference point of the root sequence is the delay-domain cyclic shift reference point; and
when the cyclic shift index of the root sequence is **v = 0,1,** ..., **|** 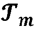 **| - 1 ,** and the transmission comb index is **m = 0, 1, ... , *M*** - 1, the delay-domain cyclic shift ***τ_{v,m}*** and the Doppler-domain cyclic shift ***ν_{v,m}*** satisfy: $\left\{\begin{matrix}{τ}_{v , m} = k {Δ}_{T} - \left⌊\frac{l}{\left⌈min\left\{{ν}_{⋆}^{T},P-{ν}_{⋆}^{T}\right\}/{Δ}_{F}\right⌉}\right⌋ ⋅ {τ}_{⋆}^{T} mod {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right. ,$ or
when the cyclic shift index of the root sequence is ***v =* |** 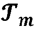 **|, |** 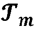 **| + 1, ... , |** 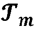 **| + |** 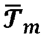 **| -** 1, and the transmission comb index is **m = 0, 1, ..., M - 1,** the delay-domain cyclic shift ***τ_{v,m}*** and the Doppler-domain cyclic shift ***ν_{v,m}*** satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right. ,$ or
when the cyclic shift index of the root sequence is $v = \left|{T}_{m}\right| + \left|{\overline{T}}_{m}\right| , \left|{T}_{m}\right| + \left|{\overline{T}}_{m}\right| + 1 , … , \left|{T}_{m}\right| + \left|{\overline{T}}_{m}\right| + \left|{\overline{\overline{T}}}_{m}\right| - 1$ , and the transmission comb index is **m** = **0, 1, ... , *M* - 1,** the delay-domain cyclic shift ***τ_{v,m}*** and the Doppler-domain cyclic shift ***ν_{v,m}*** satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right. ,$
wherein **P** is the maximum prime number that does not exceed the sequence length ***N, M*** represents the quantity of transmission combs, Δ_{T} represents the maximum delay spread, Δ_{F} represents the maximum Doppler spread, $\left〈{τ}_{⋆}^{T}, {ν}_{⋆}^{T}\right〉$ represents coordinates of the cyclic shift reference point of the root sequence, ${k}_{⋆}^{T}$ represents the quantity of delay-domain full cyclic shifts, ${l}_{⋆}^{T}$ represents the quantity of Doppler-domain full cyclic shifts, ${\overline{k}}_{⋆}^{T}$ represents the quantity of delay-domain near-end residual cyclic shifts, ${\overline{l}}_{⋆}^{T}$ represents the quantity of Doppler-domain near-end residual cyclic shifts, ${\overline{\overline{k}}}_{⋆}^{T}$ represents the quantity of delay-domain far-end residual cyclic shifts, ${\overline{\overline{l}}}_{⋆}^{T}$ represents the quantity of Doppler-domain far-end residual cyclic shifts, an operator **sgn**(·) represents a sign function, an operator $\left⌊⋅\right⌋$ represents rounding down, an operator $\left⌈⋅\right⌉$ represents rounding up, an operator |·| represents a cardinality of a set, and 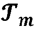 , 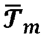 , ${\overline{\overline{T}}}_{m}$, are respectively as follows: ${T}_{m} = \left\{\left〈k, l\right〉\left|0\leq k<{k}_{⋆}^{T},0\leq l<{l}_{⋆}^{T},m=l mod M\right.\right\} ;$ ${\overline{T}}_{m} = \left\{\left〈k, l\right〉\left|0\leq k<{\overline{k}}_{⋆}^{T},-{\overline{l}}_{⋆}^{T}\leq l<0,m=l mod M\right.\right\} ;$ and ${\overline{\overline{T}}}_{m} = \left\{\left〈k, l\right〉\left|0\leq k<{\overline{\overline{k}}}_{⋆}^{T}-{\overline{l}}_{⋆}^{T}-{\overline{\overline{l}}}_{⋆}^{T}\leq l<-{\overline{l}}_{⋆}^{T},m=l mod M\right.\right\} .$

8. The method according to claim 6, wherein the cyclic shift reference point of the root sequence is the Doppler-domain cyclic shift reference point; and
when the cyclic shift index of the root sequence is ***v* = 0,1, ..., |** 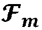 **| - 1,** and the transmission comb index is **m = 0,1,** ... , **M - 1,** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[\left(lM+m\right){Δ}_{F}-m-\left⌊\frac{k}{\left⌈min\left\{{τ}_{⋆}^{F},P-{τ}_{⋆}^{F}\right\}/{Δ}_{T}\right⌉}\right⌋⋅{ν}_{⋆}^{F}mod {Δ}_{F}\right] / M\end{matrix}\right. ,$ or
when the cyclic shift index of the root sequence is *v =* | 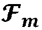 |, | 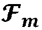 | **+ 1,** ... , | 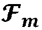 | + | 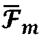 | - 1, and the transmission comb index is m = **0, 1,** ... , **M - 1,** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix}\right. ,$ or
when the cyclic shift index of the root sequence is $v = \left|{F}_{m}\right| + \left|{\overline{F}}_{m}\right| , \left|{F}_{m}\right| + \left|{\overline{F}}_{m}\right| + 1 , … , \left|{F}_{m}\right| + \left|{\overline{F}}_{m}\right| + \left|{\overline{\overline{F}}}_{m}\right| - 1$ **,** and the transmission comb index is **m = 0, 1, *...,M* - 1,** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix}\right. ,$
wherein **P** is the maximum prime number that does not exceed the sequence length ***N,* M** represents the quantity of transmission combs, Δ_{T} represents the maximum delay spread, Δ_{F} represents the maximum Doppler spread, $\left〈{τ}_{⋆}^{F}, {ν}_{⋆}^{F}\right〉$ represents coordinates of the cyclic shift reference point of the root sequence, ${k}_{⋆}^{F}$ represents the quantity of delay-domain full cyclic shifts, ${l}_{⋆}^{F}$ represents the quantity of Doppler-domain full cyclic shifts, ${\overline{k}}_{⋆}^{F}$ represents the quantity of delay-domain near-end residual cyclic shifts, ${\overline{l}}_{⋆}^{F}$ represents the quantity of Doppler-domain near-end residual cyclic shifts, ${\overline{\overline{k}}}_{⋆}^{F}$ represents the quantity of delay-domain far-end residual cyclic shifts, ${\overline{\overline{l}}}_{⋆}^{F}$ represents the quantity of Doppler-domain far-end residual cyclic shifts, an operator **sgn**(·) represents a sign function, an operator $\left⌊⋅\right⌋$ represents rounding down, an operator $\left⌈⋅\right⌉$ represents rounding up, an operator |·| represents a cardinality of a set, and 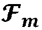 *,* 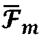 *,* ${\overline{\overline{F}}}_{m}$ are respectively as follows: ${F}_{m} = \left\{\left〈k, l\right〉\left|0\leq k<{k}_{⋆}^{F},0\leq l<{l}_{⋆}^{F},m=\left(\left⌊\frac{k}{\left⌈min\left\{{τ}_{⋆}^{F},P-{τ}_{⋆}^{F}\right\}/{Δ}_{T}\right⌉}\right⌋{l}_{⋆}^{F}+l\right)mod M\right.\right\} ;$ ${\overline{F}}_{m} = \left\{\left〈k, l\right〉\left|-{\overline{k}}_{⋆}^{F}\leq k<0,0<l\leq {\overline{l}}_{⋆}^{F},m=\left(-l\right)mod M\right.\right\} ;$ and ${\overline{\overline{F}}}_{m} = \left\{\left〈k, l\right〉\left|-{\overline{k}}_{⋆}^{F}-{\overline{\overline{k}}}_{⋆}^{F}\leq k<-{\overline{k}}_{⋆}^{F},0<l\leq {\overline{\overline{l}}}_{⋆}^{F},m=\left(-l\right)mod M\right.\right\} .$

9. The method according to any one of claims 6 to 8, wherein a set 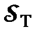 comprising coordinates of the delay-domain cyclic shift reference point satisfies: ${S}_{T} = \left\{\left〈τ,M⋅{u}^{- 1}τ modP\right〉\left|\begin{matrix}min \left\{\left(\pm {u}^{- 1}τ\right)modP\right\} < {min}_{n = 1 , 2 , … , τ - 1} \left\{\left(\pm {u}^{- 1}n\right) mod P\right\} , \\ τ ∈ \left\{{Δ}_{T},{Δ}_{T}+1,…,{min}_{ν ∈ \left\{\pm 1,\pm 2,…,\pm \left(\left⌈{Δ}_{F}/M\right⌉-1\right)\right\}}\left\{uν mod P\right\}\right\}\end{matrix}\right.\right\} ,$ wherein
**P** is the maximum prime number that does not exceed the sequence length ***N,* M** represents the quantity of transmission combs, **u** represents the root sequence number, Δ_{T} represents the maximum delay spread, Δ_{F} represents the maximum Doppler spread, $\left〈{τ}_{i}^{T}, {ν}_{i}^{T}\right〉$ represents coordinates of an ***i***^{th} delay-domain cyclic shift reference point, a value range of **i** is **1** ≤ *i* ≤ | 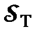 |, an operator (·)⁻¹ represents a multiplicative inverse, and the operator |·| represents a cardinality of the set.

10. The method according to any one of claims 6 to 9, wherein a set 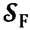 comprising coordinates of the Doppler-domain cyclic shift reference point satisfies: ${S}_{F} = \left\{\left〈uν mod P,M⋅ν\right〉\left|\begin{matrix}min \left\{\left(\pm uν\right) mod P\right\} < {min}_{n = 1 , 2 , … , ν - 1} \left\{\left(\pm un\right) mod P\right\} , \\ ν ∈ \left\{\left⌈{Δ}_{F}/M\right⌉,\left⌈{Δ}_{F}/M\right⌉+1,…,{min}_{τ ∈ \left\{\pm 1,\pm 2,…,\pm \left({Δ}_{T}-1\right)\right\}}\left\{{u}^{- 1}τ mod P\right\}\right\}\end{matrix}\right.\right\} ,$ wherein
**P** is the maximum prime number that does not exceed the sequence length *N,* M represents the quantity of transmission combs, **u** represents the root sequence number, Δ_{T} represents the maximum delay spread, Δ_{F} represents the maximum Doppler spread, $\left〈{τ}_{i}^{F}, {ν}_{i}^{F}\right〉$ represents coordinates of an ***i***^{th} Doppler-domain cyclic shift reference point, a value range of **i** is **1** ≤ ***i*** ≤ | 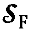 |, the operator (·)⁻¹ represents a multiplicative inverse, and the operator |·| represents a cardinality of the set.

11. The method according to any one of claims 6 to 10, wherein determining the cyclic shift reference point of the root sequence based on the delay-domain cyclic shift reference point and the Doppler-domain cyclic shift reference point comprises:
determining the cyclic shift reference point of the root sequence based on a quantity of cyclic shifts corresponding to the delay-domain cyclic shift reference point and a quantity of cyclic shifts corresponding to the Doppler-domain cyclic shift reference point.

12. The method according to claim 11, wherein determining the cyclic shift reference point of the root sequence based on the quantity of cyclic shifts corresponding to the delay-domain cyclic shift reference point and the quantity of cyclic shifts corresponding to the Doppler-domain cyclic shift reference point comprises:
determining, from the quantity of cyclic shifts corresponding to the delay-domain cyclic shift reference point and the quantity of cyclic shifts corresponding to the Doppler-domain cyclic shift reference point, a reference point with a largest quantity of cyclic shifts as the cyclic shift reference point of the root sequence.

13. The method according to claim 12, wherein a quantity ${Ω}_{⋆}^{†}$ of cyclic shifts corresponding to the cyclic shift reference point $\left〈{τ}_{⋆}^{†}, {ν}_{⋆}^{†}\right〉$ of the root sequence satisfies: ${Ω}_{⋆}^{†} = max \left\{{Ω}_{1}^{T},{Ω}_{2}^{T},…{Ω}_{\left|{S}_{T}\right|}^{T},{Ω}_{1}^{F},{Ω}_{2}^{F},…,{Ω}_{\left|{S}_{F}\right|}^{F}\right\} ,$ wherein
${Ω}_{1}^{T} , {Ω}_{2}^{T} , … {Ω}_{\left|{S}_{T}\right|}^{T}$ represent quantities of cyclic shifts corresponding to delay-domain cyclic shift reference points, ${Ω}_{1}^{F} , {Ω}_{2}^{F} , … , {Ω}_{\left|{S}_{F}\right|}^{F}$ represent quantities of cyclic shifts corresponding to Doppler-domain cyclic shift reference points, and ${Ω}_{⋆}^{†}$ represents the quantity of cyclic shifts corresponding to the cyclic shift reference point of the root sequence.

14. The method according to any one of claims 11 to 13, wherein the quantity ${Ω}_{i}^{T}$ of cyclic shifts corresponding to the delay-domain cyclic shift reference point $\left〈{τ}_{i}^{T}, {ν}_{i}^{T}\right〉$ satisfies: ${Ω}_{i}^{T} = {k}_{i}^{T} ⋅ {l}_{i}^{T} + {\overline{k}}_{i}^{T} ⋅ {\overline{l}}_{i}^{T} + {\overline{\overline{k}}}_{i}^{T} ⋅ {\overline{\overline{l}}}_{i}^{T} ,$ wherein
${k}_{i}^{T}$ represents a quantity of delay-domain full cyclic shifts, ${l}_{i}^{T}$ represents a quantity of Doppler-domain full cyclic shifts, ${\overline{k}}_{i}^{T}$ represents a quantity of delay-domain near-end residual cyclic shifts, ${\overline{l}}_{i}^{T}$ represents a quantity of Doppler-domain near-end residual cyclic shifts, *kT* represents a quantity of delay-domain far-end residual cyclic shifts, ${\overline{\overline{l}}}_{i}^{T}$ represents a quantity of Doppler-domain far-end residual cyclic shifts, and the value range of i is 1 ≤ *i* ≤ | 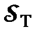 |.

15. The method according to claim 14, wherein the quantity ${k}_{i}^{T}$ of delay-domain full cyclic shifts satisfies: ${k}_{i}^{T} = \left⌊{τ}_{i}^{T}/{Δ}_{T}\right⌋ ,$ wherein
Δ_{T} represents the maximum delay spread, $\left〈{τ}_{i}^{T}, {ν}_{i}^{T}\right〉$ represents the coordinates of the delay-domain cyclic shift reference point, and the operator $\left⌊⋅\right⌋$ represents rounding down.

16. The method according to claim 14 or 15, wherein the quantity ${l}_{i}^{T}$ of Doppler-domain full cyclic shifts satisfies:
restricted coordinates $\left〈{\overline{τ}}_{i}^{T}, {\overline{ν}}_{i}^{T}\right〉$ are determined based on the coordinates $\left〈{τ}_{i}^{T}, {ν}_{i}^{T}\right〉$ of the delay-domain cyclic shift reference point, and satisfy: $\left\{\begin{matrix}{\overline{τ}}_{i}^{T} = {min}_{ν ∈ \left\{1,2,…,max\left\{\left⌈{Δ}_{F}/M\right⌉-1,min\left\{{ν}_{i}^{T}/M,P-{ν}_{i}^{T}/M\right\}-1\right\}\right\}} \left\{sgn\left({ν}_{i}^{T}-P/2\right)uν mod P\right\} \\ {\overline{ν}}_{i}^{T} = M ⋅ {u}^{- 1} {\overline{τ}}_{i}^{T} mod P\end{matrix}\right. ,$ wherein
P represents the maximum prime number that does not exceed the sequence length *N, u* represents the root sequence number, Δ_{F} represents the maximum Doppler spread, M represents the quantity of transmission combs, and the operator (·)⁻¹ represents a multiplicative inverse;
a Doppler spacing ${d}_{i}^{T}$ is determined based on the coordinates $\left〈{τ}_{i}^{T}, {ν}_{i}^{T}\right〉$ of the delay-domain cyclic shift reference point and the restricted coordinates $\left〈{\overline{τ}}_{i}^{T}, {\overline{ν}}_{i}^{T}\right〉$, and satisfies: ${d}_{i}^{T} = min \left\{d\left|{τ}_{i}^{T}-\left(\left⌊\frac{d / {Δ}_{F}}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\geq {\overline{τ}}_{i}^{T}-\right.\left⌊\frac{d - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}\right\} ,$ wherein
P represents the maximum prime number that does not exceed the sequence length *N, M* represents the quantity of transmission combs, Δ_{T} represents the maximum delay spread, Δ_{F} represents the maximum Doppler spread, the operator $\left⌊⋅\right⌋$ represents rounding down, and the operator $\left⌈⋅\right⌉$ represents rounding up; and
the quantity ${l}_{i}^{T}$ of Doppler-domain full cyclic shifts is determined based on the Doppler spacing ${d}_{i}^{T}$, and satisfies: ${l}_{i}^{T} = \left⌊{d}_{i}^{T}/{Δ}_{F}\right⌋ ,$ wherein
Δ_{F} represents the maximum Doppler spread, ${d}_{i}^{T}$ represents the Doppler spacing, and $\left⌊⋅\right⌋$ represents rounding down.

17. The method according to any one of claims 14 to 16, wherein the quantity ${\overline{k}}_{i}^{T}$ of delay-domain near-end residual cyclic shifts satisfies: ${\overline{k}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{{l}_{i}^{T} - 1}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\right)/{Δ}_{T}\right⌋, 0\right\} ,$ wherein
P represents the maximum prime number that does not exceed the sequence length *N,* M represents the quantity of transmission combs, Δ_{T} represents the maximum delay spread, Δ_{F} represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

18. The method according to any one of claims 14 to 17, wherein the quantity ${\overline{l}}_{i}^{T}$ of Doppler-domain near-end residual cyclic shifts satisfies: ${\overline{l}}_{i}^{T} = {l}_{i}^{T} - \left⌈min\left\{{ν}_{i}^{T},MP-{ν}_{i}^{T}\right\}/{Δ}_{F}\right⌉ ⋅ \left⌊\frac{{l}_{i}^{T}}{\left⌈min\left\{{ν}_{i}^{T},MP-{ν}_{i}^{T}\right\}/{Δ}_{F}\right⌉}\right⌋ ,$ wherein
P represents the maximum prime number that does not exceed the sequence length *N,* M represents the quantity of transmission combs, Δ_{F} represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

19. The method according to any one of claims 14 to 18, wherein the quantity ${\overline{\overline{k}}}_{i}^{T}$ of delay-domain far-end residual cyclic shifts satisfies: ${\overline{\overline{k}}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{2 {l}_{i}^{T} - \left⌊\left({d}_{i}^{T}+min\left\{{ν}_{i}^{T},MP-{ν}_{i}^{T}\right\}/{Δ}_{F}\right)\right⌋}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\right)/{Δ}_{T}\right⌋, 0\right\} ,$ wherein
P represents the maximum prime number that does not exceed the sequence length *N, M* represents the quantity of transmission combs, Δ_{T} represents the maximum delay spread, Δ_{F} represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

20. The method according to any one of claims 14 to 19, wherein the quantity ${\overline{\overline{l}}}_{i}^{T}$ of Doppler-domain far-end residual cyclic shifts satisfies: ${\overline{\overline{l}}}_{i}^{T} = \left⌊\left({d}_{i}^{T}+min\left\{{ν}_{i}^{T},MP-{ν}_{i}^{T}\right\}\right)/{Δ}_{F}\right⌋ - {l}_{i}^{T} - {\overline{l}}_{i}^{T} ,$ wherein
P represents the maximum prime number that does not exceed the sequence length *N,* M represents the quantity of transmission combs, Δ_{F} represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, ${\overline{l}}_{i}^{T}$ represents the quantity of Doppler-domain near-end residual cyclic shifts, and the operator $\left⌊⋅\right⌋$ represents rounding down.

21. The method according to any one of claims 11 to 20, wherein the quantity ${Ω}_{i}^{F}$ of cyclic shifts corresponding to the Doppler-domain cyclic shift reference point $\left〈{τ}_{i}^{F}, {ν}_{i}^{F}\right〉$ satisfies: ${Ω}_{i}^{F} = {l}_{i}^{F} ⋅ {k}_{i}^{F} + {\overline{l}}_{i}^{F} ⋅ {\overline{k}}_{i}^{F} + {\overline{\overline{l}}}_{i}^{F} ⋅ {\overline{\overline{k}}}_{i}^{F} ,$ wherein
represents a quantity of Doppler-domain full cyclic shifts, ${k}_{i}^{F}$ represents a quantity of delay-domain full cyclic shifts, ${\overline{l}}_{i}^{F}$ represents a quantity of Doppler-domain near-end residual cyclic shifts, ${\overline{k}}_{i}^{F}$ represents a quantity of delay-domain near-end residual cyclic shifts, ${\overline{\overline{l}}}_{i}^{F}$ represents a quantity of Doppler-domain far-end residual cyclic shifts, ${\overline{\overline{k}}}_{i}^{F}$ represents a quantity of delay-domain far-end residual cyclic shifts, and the value range of i is 1 ≤ *i* ≤ | 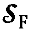 |.

22. The method according to claim 21, wherein the quantity ${l}_{i}^{F}$ of Doppler-domain full cyclic shifts satisfies: ${l}_{i}^{F} = \left⌊{ν}_{i}^{F}/{Δ}_{F}\right⌋ ,$ wherein
Δ_{F} represents the maximum Doppler spread, $\left〈{τ}_{i}^{F}, {ν}_{i}^{F}\right〉$ represents the coordinates of the Doppler-domain cyclic shift reference point, and the operator $\left⌊⋅\right⌋$ represents rounding down.

23. The method according to claim 21 or 22, wherein the quantity ${k}_{i}^{F}$ of delay-domain full cyclic shifts satisfies:
restricted coordinates $\left〈{\overline{τ}}_{i}^{F}, {\overline{ν}}_{i}^{F}\right〉$ are determined based on the coordinates $\left〈{τ}_{i}^{F}, {ν}_{i}^{F}\right〉$ of the Doppler-domain cyclic shift reference point, and satisfy: $\left\{\begin{matrix}{\overline{τ}}_{i}^{F} = u {\overline{ν}}_{i}^{F} - M mod P \\ {\overline{ν}}_{i}^{F} = {min}_{τ ∈ \left\{1,2,…,max\left\{{Δ}_{T}-1,min\left\{{τ}_{i}^{F},P-{τ}_{i}^{F}-\right\}-1\right\}\right\}} \left\{M⋅sgn\left({τ}_{i}^{F}-P/2\right){u}^{- 1}τ modP\right\}\end{matrix},\right.$ wherein
P represents the maximum prime number that does not exceed the sequence length *N,* M represents the quantity of transmission combs, u represents the root sequence number, Δ_{T} represents the maximum delay spread, $\left〈{τ}_{i}^{F}, {ν}_{i}^{F}\right〉$ represents the coordinates of the Doppler-domain cyclic shift reference point, and the operator (·)⁻¹ represents a multiplicative inverse;
a delay spacing ${d}_{i}^{F}$ is determined based on the coordinates $\left〈{τ}_{i}^{F}, {ν}_{i}^{F}\right〉$ of the Doppler-domain cyclic shift reference point and the restricted coordinates $\left〈{\overline{τ}}_{i}^{F}, {\overline{ν}}_{i}^{F}\right〉$, and satisfies: ${d}_{i}^{F} = m in \left\{d\left|{ν}_{i}^{F}-\left(\left⌊\frac{d / {Δ}_{T}}{\left⌈min\left\{{τ}_{i}^{F},P-{τ}_{i}^{F}\right\}/{Δ}_{T}\right⌉}\right⌋+1\right)\right.⋅{ν}_{i}^{F} mod {Δ}_{F}\geq {\overline{ν}}_{i}^{F}-\left⌊\frac{d - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}\right\} ,$ wherein
P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$ represents the restricted coordinates, the operator $\left⌊⋅\right⌋$ represents rounding down, and the operator $\left⌈⋅\right⌉$ represents rounding up; and
the quantity ${k}_{i}^{F}$ of delay-domain full cyclic shifts is determined based on the delay spacing ${d}_{i}^{F}$, and satisfies: ${k}_{i}^{F} = \left⌊{d}_{i}^{F}/{Δ}_{T}\right⌋ ,$ wherein
Δ_{T} represents the maximum delay spread, ${d}_{i}^{F}$ represents the delay spacing, and the operator $\left⌊⋅\right⌋$ represents rounding down.

24. The method according to any one of claims 21 to 23, wherein the quantity ${\overline{l}}_{i}^{F}$ of Doppler-domain near-end residual cyclic shifts satisfies: ${\overline{l}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{{k}_{i}^{F} - 1}{\left⌈min\left\{{τ}_{i}^{F},P-{τ}_{i}^{F}\right\}/{Δ}_{T}\right⌉}\right⌋+1\right)⋅{ν}_{i}^{F} mod{Δ}_{F}\right)/{Δ}_{F}\right⌋, 0\right\} ,$ wherein
P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{T}, {\overline{ν}}_{i}^{T}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

25. The method according to any one of claims 21 to 24, wherein the quantity ${\overline{k}}_{i}^{F}$ of delay-domain near-end residual cyclic shifts satisfies: ${\overline{k}}_{i}^{F} = {k}_{i}^{F} - \left⌈min\left\{{τ}_{i}^{F},P-{τ}_{i}^{F}\right\}/{Δ}_{T}\right⌉ ⋅ \left⌊\frac{{k}_{i}^{F}}{\left⌈min\left\{{τ}_{i}^{F},P-{τ}_{i}^{F}\right\}/{Δ}_{T}\right⌉}\right⌋ ,$ wherein
P represents the maximum prime number that does not exceed the sequence length N, Δ_{T} represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

26. The method according to any one of claims 21 to 25, wherein the quantity ${\overline{\overline{l}}}_{i}^{F}$ of Doppler-domain far-end residual cyclic shifts satisfies: ${\overline{\overline{l}}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{2 {k}_{i}^{F} - \left⌊\left({d}_{i}^{F}+min\left\{{τ}_{i}^{F},P-{τ}_{i}^{F}\right\}\right)/{Δ}_{T}\right⌋}{\left⌈min\left\{{τ}_{i}^{F},P-{τ}_{i}^{F}\right\}/{Δ}_{T}\right⌉}\right⌋+1\right)⋅{ν}_{i}^{F} mod {Δ}_{F}\right)/{Δ}_{F}\right⌋, 0\right\} ,$ wherein
P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

27. The method according to any one of claims 21 to 26, wherein the quantity ${\overline{\overline{k}}}_{i}^{F}$ of delay-domain far-end residual cyclic shifts satisfies: ${\overline{\overline{k}}}_{i}^{F} = \left⌊\left({d}_{i}^{F}+min\left\{{τ}_{i}^{F},P-{τ}_{i}^{F}\right\}\right)/{Δ}_{T}\right⌋ - {k}_{i}^{F} - {\overline{k}}_{i}^{F} , wherein$ wherein P represents the maximum prime number that does not exceed the sequence length N, Δ_{T} represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, ${\overline{k}}_{i}^{F}$ represents the quantity of delay-domain near-end residual cyclic shifts, and the operator $\left⌊⋅\right⌋$ represents rounding down.

28. A communication apparatus, comprising:
a processing unit, configured to determine a first sequence based on a cyclic shift of a root sequence, wherein the cyclic shift is associated with a transmission comb index; and
a transceiver unit, configured to output a first signal, wherein the first signal is obtained by performing frequency-domain comb mapping on the first sequence, and a cross-ambiguity function of the first signal is equal to zero within a range of a maximum delay spread and a maximum Doppler spread.

29. The apparatus according to claim 28, wherein the first sequence ***s_{u,v,m}***(***n***) determined based on the cyclic shift *C_{v,m}* of the root sequence satisfies: ${s}_{u , v , m} \left(n\right) = {e}^{- j \left[\frac{π un \left(n+1\right)}{P}+\frac{2 π n {C}_{v , m}}{N}\right]} , n = 0 , 1 , … , N - 1 ,$ wherein
**N** represents a sequence length of the root sequence, **P** is a maximum prime number that does not exceed the sequence length ***N,* u** represents a root sequence number, **u** ∈ **{1, 2,** ..., ***N* - 1},** v represents a cyclic shift index of the root sequence, **m** represents the transmission comb index, and **n** represents a symbol position of the first sequence.

30. The apparatus according to claim 28 or 29, wherein the cyclic shift *C_{v,m}* of the root sequence is determined based on a delay-domain cyclic shift ***τ_{v,m}*** and a Doppler-domain cyclic shift *ν_{v,m}* and satisfies: ${C}_{v , m} = \left({τ}_{v , m}-u{ν}_{v , m}\right) mod P ,$ wherein
**P** is the maximum prime number that does not exceed the sequence length ***N, v*** represents the cyclic shift index of the root sequence, and m represents the transmission comb index.

31. The apparatus according to any one of claims 28 to 30, wherein the first signal ***s̅_{u,v,m}*(*i*)** is obtained by performing frequency-domain comb mapping on the first sequence ***s_{u,v,m}*(*n*),** and satisfies: ${\overline{s}}_{u , v , m} \left(i\right) = {\sum }_{n = 0}^{N - 1} {s}_{u , v , m} \left(n\right) δ \left(i-nM+m\right) , i = 1 - M , 2 - M , … , M \left(N-1\right) ,$ wherein
N represents the sequence length of the root sequence, **M** represents a quantity of transmission combs, **m** represents the transmission comb index, **m ∈ {0, 1, ... , M - 1},** *δ*(*i*) represents an impulse function, **n** represents the symbol position **of the first** sequence, and *i* represents a subcarrier number.

32. The apparatus according to any one of claims 28 to 31, wherein the first signal comprises *s̅*_{*u,v*₁*,m*₁}(*i*) and *s̅*_{*u,v*₂*,m*₂}*(i),* and a cross-ambiguity function ${A}_{{\overline{s}}_{u , {v}_{1} , {m}_{1}} , {\overline{s}}_{u , {v}_{2} , {m}_{2}}} \left(τ, ν\right)$ of *s̅*_{*u,v*₁*,m*₁}*(i)* and *s̅*_{*u*,*v*₂,*m*₂} (i) is equal to zero within the range of the maximum delay spread Δ_{T} and the maximum Doppler spread Δ_{F}, and satisfies: $\left|{A}_{{\overline{s}}_{u , {v}_{1} , {m}_{1}} , {\overline{s}}_{u , {v}_{2} , {m}_{2}}}\left(τ, ν\right)\right| = 0 , \left({v}_{1}\neq {v}_{2}\right) ∨ \left({m}_{1}\neq {m}_{2}\right) ∨ \left(τ\neq 0\right) ∨ \left(ν\neq 0\right) ,$ wherein
**u** represents the root sequence number, ***v*₁** and ***v*₂** represent cyclic shift indexes of the root sequence, ***m*₁** and ***m*₂** represent the transmission comb indexes, ***τ*** represents a delay coordinate of an ambiguity function, a value range of ***τ*** is 0 ≤ *τ* ≤ Δ_{T} - **1,** v represents a Doppler coordinate of the ambiguity function, a value range of **v** is **0** ≤ ***ν*** ≤ Δ_{F} **- 1,** and an operator V represents a condition OR.

33. The apparatus according to any one of claims 28 to 32, wherein the processing unit is further configured to:
determine a cyclic shift reference point of the root sequence based on a delay-domain cyclic shift reference point and a Doppler-domain cyclic shift reference point;
determine the delay-domain cyclic shift and the Doppler-domain cyclic shift based on the cyclic shift reference point of the root sequence; and
determine the cyclic shift of the root sequence based on the delay-domain cyclic shift and the Doppler-domain cyclic shift.

34. The apparatus according to claim 33, wherein the cyclic shift reference point of the root sequence is the delay-domain cyclic shift reference point; and
when the cyclic shift index of the root sequence is *v* = **0,1,** ..., | 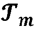 | - 1, and the transmission comb index is m = 0, 1, ... , *M* - 1, the delay-domain cyclic shift ***τ_{v,m}*** and the Doppler-domain cyclic shift ***ν_{v,m}*** satisfy: $\left\{\begin{matrix}{τ}_{v , m} = k {Δ}_{T} - \left⌊\frac{l}{\left⌈min\left\{{ν}_{⋆}^{T},P-{ν}_{⋆}^{T}\right\}/{Δ}_{F}\right⌉}\right⌋ ⋅ {τ}_{⋆}^{T} mod {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right. ,$ or
when the cyclic shift index of the root sequence is *v =* | 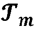 |, | 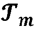 | + 1, ... , | 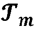 | + | 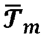 | - 1, and the transmission comb index is m = **0, 1,** ... , M - 1, the delay-domain cyclic shift *τ_{v,m}* and the Doppler-domain cyclic shift ***ν_{v,m}*** satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right. ,$ or
when the cyclic shift index of the root sequence is $v = \left|{T}_{m}\right| + \left|{\overline{T}}_{m}\right| , \left|{T}_{m}\right| + \left|{\overline{T}}_{m}\right| + 1 , … , \left|{T}_{m}\right| + \left|{\overline{T}}_{m}\right| + \left|{\overline{\overline{T}}}_{m}\right| - 1$ , and the transmission comb index is m = 0,1, *... , M* - 1, the delay-domain cyclic shift ***τ_{v,m}*** and the Doppler-domain cyclic shift ***ν_{v,m}*** satisfy: $\left\{\begin{matrix}{τ}_{v , m} = {τ}_{⋆}^{T} - k {Δ}_{T} \\ {ν}_{v , m} = sgn \left({ν}_{⋆}^{T}-P/2\right) ⋅ \left[\left(lM+m\right){Δ}_{F}-m\right] / M\end{matrix}\right. ,$
wherein **P** is the maximum prime number that does not exceed the sequence length *N,* M represents the quantity of transmission combs, Δ_{T} represents the maximum delay spread, Δ_{F} represents the maximum Doppler spread, $\left〈{τ}_{⋆}^{T}, {ν}_{⋆}^{T}\right〉$ represents coordinates of the cyclic shift reference point of the root sequence, ${k}_{⋆}^{T}$ represents the quantity of delay-domain full cyclic shifts, ${l}_{⋆}^{T}$ represents the quantity of Doppler-domain full cyclic shifts, ${\overline{k}}_{⋆}^{T}$ represents the quantity of delay-domain near-end residual cyclic shifts, ${\overline{l}}_{⋆}^{T}$ represents the quantity of Doppler-domain near-end residual cyclic shifts, ${\overline{\overline{k}}}_{⋆}^{T}$ represents the quantity of delay-domain far-end residual cyclic shifts, ${\overline{\overline{l}}}_{⋆}^{T}$ represents the quantity of Doppler-domain far-end residual cyclic shifts, an operator **sgn**(·) represents a sign function, an operator $\left⌊⋅\right⌋$ represents rounding down, an operator $\left⌈⋅\right⌉$ represents rounding up, an operator |·| represents a cardinality of a set, and 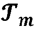 **,** 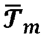 **,** ${\overline{\overline{T}}}_{m}$ are respectively as follows: ${T}_{m} = \left\{\left.\left〈k, l\right〉\right|0\leq k<{k}_{⋆}^{T},0\leq l<{l}_{⋆}^{T},m=lmodM\right\} ;$ ${\overline{T}}_{m} = \left\{\left.\left〈k, l\right〉\right|0<k\leq {\overline{k}}_{⋆}^{T},-{\overline{l}}_{⋆}^{T}\leq l<0,m=lmodM\right\} ;$ and ${\overline{\overline{T}}}_{m} = \left\{\left.\left〈k, l\right〉\right|0<k\leq {\overline{\overline{k}}}_{⋆}^{T},-{\overline{l}}_{⋆}^{T}-{\overline{\overline{l}}}_{⋆}^{T}\leq l<-{\overline{l}}_{⋆}^{T},m=lmodM\right\} .$

35. The apparatus according to claim 33, wherein the cyclic shift reference point of the root sequence is the Doppler-domain cyclic shift reference point; and
when the cyclic shift index of the root sequence is ***v* = 0,1, ..., |** 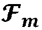 **| - 1,** and the transmission comb index is **m = 0,1, ... , M - 1,** the delay-domain cyclic shift ***τ_{v,m}*** and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[\left(lM+m\right){Δ}_{F}-m-\left⌊\frac{k}{\left⌈min\left\{{τ}_{⋆}^{F},P-{τ}_{⋆}^{F}\right\}/{Δ}_{T}\right⌉}\right⌋⋅{ν}_{⋆}^{F}mod{Δ}_{F}\right] / M\end{matrix},\right.$ or
when the cyclic shift index of the root sequence is *v =* | 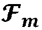 |, | 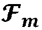 | + 1, ... , | 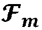 | + | 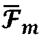 | - 1, and the transmission comb index is m = **0, 1,** ..., M - 1, the delay-domain cyclic shift *τ_{v,m}* and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix},\right.$ or
when the cyclic shift index of the root sequence is $v = \left|{F}_{m}\right| + \left|{\overline{F}}_{m}\right| , \left|{F}_{m}\right| + \left|{\overline{F}}_{m}\right| + 1 , … , \left|{F}_{m}\right| + \left|{\overline{F}}_{m}\right| + \left|{\overline{\overline{F}}}_{m}\right| - 1$ , and the transmission comb index is m = **0, 1,** *...,M* - 1, the delay-domain cyclic shift *τ_{v,m}* and the Doppler-domain cyclic shift ***ν_{v,m}*** satisfy: $\left\{\begin{matrix}{τ}_{v , m} = sgn \left({τ}_{⋆}^{F}-P/2\right) ⋅ k {Δ}_{T} \\ {ν}_{v , m} = \left[{ν}_{⋆}^{F}-\left(lM+m\right){Δ}_{F}+m\right] / M\end{matrix},\right.$
wherein P is the maximum prime number that does not exceed the sequence length *N,* M represents the quantity of transmission combs, Δ_{T} represents the maximum delay spread, Δ_{F} represents the maximum Doppler spread, $\left〈{τ}_{⋆}^{F}, {ν}_{⋆}^{F}\right〉$ represents coordinates of the cyclic shift reference point of the root sequence, ${k}_{⋆}^{F}$ represents the quantity of delay-domain full cyclic shifts, ${l}_{⋆}^{F}$ represents the quantity of Doppler-domain full cyclic shifts, ${\overline{k}}_{⋆}^{F}$ represents the quantity of delay-domain near-end residual cyclic shifts, ${\overline{l}}_{⋆}^{F}$ represents the quantity of Doppler-domain near-end residual cyclic shifts, ${\overline{\overline{k}}}_{⋆}^{F}$ represents the quantity of delay-domain far-end residual cyclic shifts, ${\overline{\overline{l}}}_{⋆}^{F}$ represents the quantity of Doppler-domain far-end residual cyclic shifts, an operator **sgn**(·) represents a sign function, an operator $\left⌊⋅\right⌋$ represents rounding down, an operator $\left⌈⋅\right⌉$ represents rounding up, an operator |·| represents a cardinality of a set, and 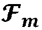 , 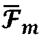 , ${\overline{\overline{F}}}_{m}$ are respectively as follows: ${F}_{m} = \left\{\left〈k, l\right〉\left|0\leq k<{k}_{⋆}^{F},0\leq l<{l}_{⋆}^{F},m=\left(\left⌊\frac{k}{\left⌈min\left\{{τ}_{⋆}^{F},P-{τ}_{⋆}^{F}\right\}/{Δ}_{T}\right⌉}\right⌋{l}_{⋆}^{F}+l\right)mod M\right.\right\} ;$ ${\overline{F}}_{m} = \left\{\left〈k, l\right〉\left|-{\overline{k}}_{⋆}^{F}\leq k<0,0<l\leq {\overline{l}}_{⋆}^{F},m=\left(-l\right)mod M\right.\right\} ;$ and ${\overline{\overline{F}}}_{m} = \left\{\left〈k, l\right〉\left|-{\overline{k}}_{⋆}^{F}-{\overline{\overline{k}}}_{⋆}^{F}\leq k<-{\overline{k}}_{⋆}^{F},0<l\leq {\overline{\overline{l}}}_{⋆}^{F},m=\left(-l\right)mod M\right.\right\} .$

36. The apparatus according to any one of claims 33 to 35, wherein a set 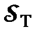 comprising coordinates of the delay-domain cyclic shift reference point satisfies: ${S}_{T} = \left\{\left〈τ,M⋅{u}^{- 1}τ mod P\right〉\left|\begin{matrix}min \left\{\left(\pm {u}^{- 1}τ\right)mod P\right\} < {min}_{n = 1 , 2 , … , τ - 1} \left\{\left(\pm {u}^{- 1}n\right)mod P\right\} , \\ τ ∈ \left\{{Δ}_{T},{Δ}_{T}+1,…,{min}_{ν ∈ \left\{\pm 1,\pm 2,…,\pm \left(\left⌈{Δ}_{F}/M\right⌉-1\right)\right\}}\left\{uv mod P\right\}\right\}\end{matrix}\right.\right\} ,$ wherein
P is the maximum prime number that does not exceed the sequence length *N, M* represents the quantity of transmission combs, u represents the root sequence number, Δ_{T} represents the maximum delay spread, Δ_{F} represents the maximum Doppler spread, $\left〈{τ}_{i}^{T}, {ν}_{i}^{T}\right〉$ represents coordinates of an ***i***^{th} delay-domain cyclic shift reference point, a value range of i is 1 ≤ *i* ≤ | 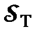 |, an operator (·)⁻¹ represents a multiplicative inverse, and the operator |·| represents a cardinality of the set.

37. The apparatus according to any one of claims 33 to 36, wherein a set 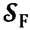 comprising coordinates of the Doppler-domain cyclic shift reference point satisfies: ${S}_{F} = \left\{\left〈uνmodP,M⋅ν\right〉\left|\begin{matrix}min \left\{\left(\pm uν\right)modP\right\} < {min}_{n = 1 , 2 , … , ν - 1} \left\{\left(\pm un\right)modP\right\} , \\ ν ∈ \left\{\left⌈{Δ}_{F}/M\right⌉,\left⌈{Δ}_{F}/M\right⌉+1,…,{min}_{τ ∈ \left\{\pm 1,\pm 2,…,\pm \left({Δ}_{T}-1\right)\right\}}\left\{{u}^{- 1}τmodP\right\}\right\}\end{matrix}\right.\right\} ,$ wherein
P is the maximum prime number that does not exceed the sequence length *N,* M represents the quantity of transmission combs, u represents the root sequence number, Δ_{T} represents the maximum delay spread, Δ_{F} represents the maximum Doppler spread, $\left〈{τ}_{i}^{F}, {ν}_{i}^{F}\right〉$ represents coordinates of an ***i***^{th} Doppler-domain cyclic shift reference point, a value range of i is 1 ≤ *i* ≤ | 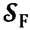 |, the operator (·)⁻¹ represents a multiplicative inverse, and the operator |·| represents a cardinality of the set.

38. The apparatus according to any one of claims 33 to 37, wherein determining the cyclic shift reference point of the root sequence based on the delay-domain cyclic shift reference point and the Doppler-domain cyclic shift reference point comprises:
determining the cyclic shift reference point of the root sequence based on a quantity of cyclic shifts corresponding to the delay-domain cyclic shift reference point and a quantity of cyclic shifts corresponding to the Doppler-domain cyclic shift reference point.

39. The apparatus according to claim 38, wherein determining the cyclic shift reference point of the root sequence based on the quantity of cyclic shifts corresponding to the delay-domain cyclic shift reference point and the quantity of cyclic shifts corresponding to the Doppler-domain cyclic shift reference point comprises:
determining, from the quantity of cyclic shifts corresponding to the delay-domain cyclic shift reference point and the quantity of cyclic shifts corresponding to the Doppler-domain cyclic shift reference point, a reference point with a largest quantity of cyclic shifts as the cyclic shift reference point of the root sequence.

40. The apparatus according to claim 39, wherein a quantity ${Ω}_{⋆}^{†}$ of cyclic shifts corresponding to the cyclic shift reference point $\left〈{τ}_{⋆}^{†}, {ν}_{⋆}^{†}\right〉$ of the root sequence satisfies: ${Ω}_{⋆}^{†} = max \left\{{Ω}_{1}^{T},{Ω}_{2}^{T},…{Ω}_{\left|{S}_{T}\right|}^{T},{Ω}_{1}^{F},{Ω}_{2}^{F},…,{Ω}_{\left|{S}_{F}\right|}^{F}\right\} ,$ wherein
${Ω}_{1}^{T} , {Ω}_{2}^{T} , … {Ω}_{\left|{S}_{T}\right|}^{T}$ represent quantities of cyclic shifts corresponding to delay-domain cyclic shift reference points, ${Ω}_{1}^{F} , {Ω}_{2}^{F} , … , {Ω}_{\left|{S}_{F}\right|}^{F}$ represent quantities of cyclic shifts corresponding to Doppler-domain cyclic shift reference points, and ${Ω}_{⋆}^{†}$ represents the quantity of cyclic shifts corresponding to the cyclic shift reference point of the root sequence.

41. The apparatus according to any one of claims 38 to 40, wherein the quantity ${Ω}_{i}^{T}$ of cyclic shifts corresponding to the delay-domain cyclic shift reference point $\left〈{τ}_{i}^{T}, {ν}_{i}^{T}\right〉$ satisfies: ${Ω}_{i}^{T} = {k}_{i}^{T} ⋅ {l}_{i}^{T} + {\overline{k}}_{i}^{T} ⋅ {\overline{l}}_{i}^{T} + {\overline{\overline{k}}}_{i}^{T} ⋅ {\overline{\overline{l}}}_{i}^{T} ,$ wherein
${k}_{i}^{T}$ represents a quantity of delay-domain full cyclic shifts, ${l}_{i}^{T}$ represents a quantity of Doppler-domain full cyclic shifts, ${\overline{k}}_{i}^{T}$ represents a quantity of delay-domain near-end residual cyclic shifts, ${\overline{l}}_{i}^{T}$ represents a quantity of Doppler-domain near-end residual cyclic shifts, ${\overline{\overline{k}}}_{i}^{T}$ represents a quantity of delay-domain far-end residual cyclic shifts, ${\overline{\overline{l}}}_{i}^{T}$ represents a quantity of Doppler-domain far-end residual cyclic shifts, and the value range of i is 1 ≤ *i* ≤ | 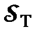 |.

42. The apparatus according to claim 41, wherein the quantity ${k}_{i}^{T}$ of delay-domain full cyclic shifts satisfies: ${k}_{i}^{T} = \left⌊{τ}_{i}^{T}/{Δ}_{T}\right⌋ ,$ wherein
Δ_{T} represents the maximum delay spread, $\left〈{τ}_{i}^{T}, {ν}_{i}^{T}\right〉$ represents the coordinates of the delay-domain cyclic shift reference point, and the operator $\left⌊⋅\right⌋$ represents rounding down.

43. The apparatus according to claim 41 or 42, wherein the quantity ${l}_{i}^{T}$ of Doppler-domain full cyclic shifts satisfies:
restricted coordinates $\left〈{\overline{τ}}_{i}^{T}, {\overline{ν}}_{i}^{T}\right〉$ are determined based on the coordinates $\left〈{τ}_{i}^{T}, {ν}_{i}^{T}\right〉$ of the delay-domain cyclic shift reference point, and satisfy: $\left\{\begin{matrix}{\overline{τ}}_{i}^{T} = {min}_{ν ∈ \left\{1,2,…,max\left\{\left⌈{Δ}_{F}/M\right⌉-1,min\left\{{ν}_{i}^{T}/M,P-{ν}_{i}^{T}/M\right\}-1\right\}\right\}} \left\{sgn\left({ν}_{i}^{T}-P/2\right)uν mod P\right\} \\ {\overline{ν}}_{i}^{T} = M ⋅ {u}^{- 1} {\overline{τ}}_{i}^{T} mod P\end{matrix}\right. ,$ wherein
P represents the maximum prime number that does not exceed the sequence length *N,* u represents the root sequence number, Δ_{F} represents the maximum Doppler spread, M represents the quantity of transmission combs, and the operator (·)⁻¹ represents a multiplicative inverse;
a Doppler spacing ${d}_{i}^{T}$ is determined based on the coordinates $\left〈{τ}_{i}^{T}, {ν}_{i}^{T}\right〉$ of the delay-domain cyclic shift reference point and the restricted coordinates $\left〈{\overline{τ}}_{i}^{T}, {\overline{ν}}_{i}^{T}\right〉$, and satisfies: ${d}_{i}^{T} = min \left\{d\left|{τ}_{i}^{T}-\left(\left⌊\frac{d / {Δ}_{F}}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\geq {\overline{τ}}_{i}^{T}-\right.\left⌊\frac{d - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}\right\} ,$ wherein
P represents the maximum prime number that does not exceed the sequence length *N,* M represents the quantity of transmission combs, Δ_{T} represents the maximum delay spread, Δ_{F} represents the maximum Doppler spread, the operator $\left⌊⋅\right⌋$ represents rounding down, and the operator $\left⌈⋅\right⌉$ represents rounding up; and
the quantity ${l}_{i}^{T}$ of Doppler-domain full cyclic shifts is determined based on the Doppler spacing ${d}_{i}^{T}$, and satisfies: ${l}_{i}^{T} = \left⌊{d}_{i}^{T}/{Δ}_{F}\right⌋ ,$ wherein
Δ_{F} represents the maximum Doppler spread, ${d}_{i}^{T}$ represents the Doppler spacing, and $\left⌊⋅\right⌋$ represents rounding down.

44. The apparatus according to any one of claims 41 to 43, wherein the quantity ${\overline{k}}_{i}^{T}$ of delay-domain near-end residual cyclic shifts satisfies: ${\overline{k}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{{l}_{i}^{T} - 1}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\right)/{Δ}_{T}\right⌋, 0\right\} ,$ wherein
P represents the maximum prime number that does not exceed the sequence length *N, M* represents the quantity of transmission combs, Δ_{T} represents the maximum delay spread, Δ_{F} represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

45. The apparatus according to any one of claims 41 to 44, wherein the quantity ${\overline{l}}_{i}^{T}$ of Doppler-domain near-end residual cyclic shifts satisfies: ${\overline{l}}_{i}^{T} = {l}_{i}^{T} - \left⌈min\left\{{ν}_{i}^{T},MP-{ν}_{i}^{T}\right\}/{Δ}_{F}\right⌉ ⋅ \left⌊\frac{{l}_{i}^{T}}{\left⌈min\left\{{ν}_{i}^{T},MP-{ν}_{i}^{T}\right\}/{Δ}_{F}\right⌉}\right⌋ ,$ wherein
P represents the maximum prime number that does not exceed the sequence length *N, M* represents the quantity of transmission combs, Δ_{F} represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

46. The apparatus according to any one of claims 41 to 45, wherein the quantity ${\overline{\overline{k}}}_{i}^{T}$ of delay-domain far-end residual cyclic shifts satisfies: ${\overline{\overline{k}}}_{i}^{T} = max \left\{\left⌊\left({\overline{τ}}_{i}^{T}-\left⌊\frac{{d}_{i}^{T} - min \left\{{\overline{ν}}_{i}^{T},MP-{\overline{ν}}_{i}^{T}\right\}}{min \left\{{ν}_{i}^{T},MP-{ν}_{i}^{T}\right\}}\right⌋⋅{τ}_{i}^{T}+\left(\left⌊\frac{2 {l}_{i}^{T} - \left⌊\left({d}_{i}^{T}+min\left\{{ν}_{i}^{T},MP-{ν}_{i}^{T}\right\}\right)/{Δ}_{F}\right⌋}{\left⌈min\left\{{ν}_{i}^{T},MP-{ν}_{i}^{T}\right\}/{Δ}_{F}\right⌉}\right⌋+1\right)⋅{τ}_{i}^{T} mod {Δ}_{T}\right)/{Δ}_{T}\right⌋, 0\right\} ,$ wherein
P represents the maximum prime number that does not exceed the sequence length *N, M* represents the quantity of transmission combs, Δ_{T} represents the maximum delay spread, Δ_{F} represents the maximum Doppler spread, $\left〈{τ}_{i}^{T}, {ν}_{i}^{T}\right〉$ represents the coordinates of the delay-domain cyclic shift reference point, $\left〈{\overline{τ}}_{i}^{T}, {\overline{ν}}_{i}^{T}\right〉$ represents the restricted coordinates, ${l}_{i}^{T}$ represents the quantity of Doppler-domain full cyclic shifts, the operator $\left⌊⋅\right⌋$ represents rounding down, and the operator $\left⌈⋅\right⌉$ represents rounding up.

47. The apparatus according to any one of claims 41 to 46, wherein the quantity ${\overline{\overline{l}}}_{i}^{T}$ of Doppler-domain far-end residual cyclic shifts satisfies: ${\overline{\overline{l}}}_{i}^{T} = \left⌊\left({d}_{i}^{T}+min\left\{{ν}_{i}^{T},MP-{ν}_{i}^{T}\right\}\right)/{Δ}_{F}\right⌋ - {l}_{i}^{T} - {\overline{l}}_{i}^{T} ,$ wherein
P represents the maximum prime number that does not exceed the sequence length *N,* M represents the quantity of transmission combs, Δ_{F} represents the maximum Doppler spread, $\left〈{τ}_{i}^{T}, {ν}_{i}^{T}\right〉$ represents the coordinates of the delay-domain cyclic shift reference point, ${l}_{i}^{T}$ represents the quantity of Doppler-domain full cyclic shifts, ${\overline{l}}_{i}^{T}$ represents the quantity of Doppler-domain near-end residual cyclic shifts, and the operator $\left⌊⋅\right⌋$ represents rounding down.

48. The apparatus according to any one of claims 38 to 47, wherein the quantity ${Ω}_{i}^{F}$ of cyclic shifts corresponding to the Doppler-domain cyclic shift reference point $\left〈{τ}_{i}^{F}, {ν}_{i}^{F}\right〉$ satisfies: ${Ω}_{i}^{F} = {l}_{i}^{F} ⋅ {k}_{i}^{F} + {\overline{l}}_{i}^{F} ⋅ {\overline{k}}_{i}^{F} + {\overline{\overline{l}}}_{i}^{F} ⋅ {\overline{\overline{k}}}_{i}^{F} ,$ wherein
${l}_{i}^{F}$ represents a quantity of Doppler-domain full cyclic shifts, ${k}_{i}^{F}$ represents a quantity of delay-domain full cyclic shifts, ${\overline{l}}_{i}^{F}$ represents a quantity of Doppler-domain near-end residual cyclic shifts, ${\overline{k}}_{i}^{F}$ represents a quantity of delay-domain near-end residual cyclic shifts, ${\overline{\overline{l}}}_{i}^{F}$ represents a quantity of Doppler-domain far-end residual cyclic shifts, ${\overline{\overline{k}}}_{i}^{F}$ represents a quantity of delay-domain far-end residual cyclic shifts, and the value range of i is 1 ≤ i ≤ | 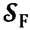 |.

49. The apparatus according to claim 48, wherein the quantity ${l}_{i}^{F}$ of Doppler-domain full cyclic shifts satisfies: ${l}_{i}^{F} = \left⌊{ν}_{i}^{F}/{Δ}_{F}\right⌋ ,$ wherein Δ_{F} represents the maximum Doppler spread, $\left〈{τ}_{i}^{F}, {ν}_{i}^{F}\right〉$ represents the coordinates of the Doppler-domain cyclic shift reference point, and the operator $\left⌊⋅\right⌋$ represents rounding down.

50. The apparatus according to claim 48 or 49, wherein the quantity ${k}_{i}^{F}$ of delay-domain full cyclic shifts satisfies:
restricted coordinates $\left〈{\overline{τ}}_{i}^{F}, {\overline{ν}}_{i}^{F}\right〉$ are determined based on the coordinates $\left〈{τ}_{i}^{F}, {ν}_{i}^{F}\right〉$ of the Doppler-domain cyclic shift reference point, and satisfy: $\left\{\begin{matrix}{\overline{τ}}_{i}^{F} = u {\overline{ν}}_{i}^{F} / M mod P \\ {\overline{ν}}_{i}^{F} = {min}_{τ ∈ \left\{1,2,…,max\left\{{Δ}_{T}-1,min\left\{{τ}_{i}^{F},P-{τ}_{i}^{F}\right\}-1\right\}\right\}} \left\{M⋅sgn\left({τ}_{i}^{F}-P/2\right){u}^{- 1}τ mod P\right\}\end{matrix}\right. ,$ wherein
P represents the maximum prime number that does not exceed the sequence length *N,* M represents the quantity of transmission combs, u represents the root sequence number, Δ_{T} represents the maximum delay spread, $\left〈{τ}_{i}^{F}, {ν}_{i}^{F}\right〉$ represents the coordinates of the Doppler-domain cyclic shift reference point, and the operator (·)⁻¹ represents a multiplicative inverse;
a delay spacing ${d}_{i}^{F}$ is determined based on the coordinates $\left〈{τ}_{i}^{F}, {ν}_{i}^{F}\right〉$ of the Doppler-domain cyclic shift reference point and the restricted coordinates $\left〈{\overline{τ}}_{i}^{F}, {\overline{ν}}_{i}^{F}\right〉$, and satisfies: ${d}_{i}^{F} = min \left\{d\left|{ν}_{i}^{F}-\left(\left⌊\frac{d / {Δ}_{T}}{\left⌈min\left\{{τ}_{i}^{F},P-{τ}_{i}^{F}\right\}/{Δ}_{T}\right⌉}\right⌋+1\right)⋅{ν}_{i}^{F} mod {Δ}_{F}\geq {\overline{ν}}_{i}^{F}-\left⌊\frac{d - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}\right.\right\} ,$ wherein
P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$ represents the restricted coordinates, the operator $\left⌊⋅\right⌋$ represents rounding down, and the operator $\left⌈⋅\right⌉$ represents rounding up; and
the quantity ${k}_{i}^{F}$ of delay-domain full cyclic shifts is determined based on the delay spacing ${d}_{i}^{F}$, and satisfies: ${k}_{i}^{F} = \left⌊{d}_{i}^{F}/{Δ}_{T}\right⌋ ,$ wherein
Δ_{T} represents the maximum delay spread, ${d}_{i}^{F}$ represents the delay spacing, and the operator $\left⌊⋅\right⌋$ represents rounding down.

51. The apparatus according to any one of claims 48 to 50, wherein the quantity ${\overline{l}}_{i}^{F}$ of Doppler-domain near-end residual cyclic shifts satisfies: ${\overline{l}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{{k}_{i}^{F} - 1}{\left⌈min\left\{{τ}_{i}^{F},P-{τ}_{i}^{F}\right\}/{Δ}_{T}\right⌉}\right⌋+1\right)⋅{ν}_{i}^{F} mod {Δ}_{F}\right)/{Δ}_{F}\right⌋, 0\right\} ,$ wherein
P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{T}, {\overline{ν}}_{i}^{T}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

52. The apparatus according to any one of claims 48 to 51, wherein the quantity ${\overline{k}}_{i}^{F}$ of delay-domain near-end residual cyclic shifts satisfies: ${\overline{k}}_{i}^{F} = {k}_{i}^{F} - \left⌈min\left\{{τ}_{i}^{F},P-{τ}_{i}^{F}\right\}/{Δ}_{T}\right⌉ ⋅ \left⌊\frac{{k}_{i}^{F}}{\left⌈min\left\{{τ}_{i}^{F},P-{τ}_{i}^{F}\right\}/{Δ}_{T}\right⌉}\right⌋ ,$ wherein
P represents the maximum prime number that does not exceed the sequence length N, Δ_{T} represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

53. The apparatus according to any one of claims 48 to 52, wherein the quantity ${\overline{\overline{l}}}_{i}^{F}$ of Doppler-domain far-end residual cyclic shifts satisfies: ${\overline{\overline{l}}}_{i}^{F} = max \left\{\left⌊\left({\overline{ν}}_{i}^{F}-\left⌊\frac{{d}_{i}^{F} - min \left\{{\overline{τ}}_{i}^{F},P-{\overline{τ}}_{i}^{F}\right\}}{min \left\{{τ}_{i}^{F},P-{τ}_{i}^{F}\right\}}\right⌋⋅{ν}_{i}^{F}+\left(\left⌊\frac{2 {k}_{i}^{F} - \left⌊\left({d}_{i}^{F}+min\left\{{τ}_{i}^{F},P-{τ}_{i}^{F}\right\}\right)/{Δ}_{T}\right⌋}{\left⌈min\left\{{τ}_{i}^{F},P-{τ}_{i}^{F}\right\}/{Δ}_{T}\right⌉}\right⌋+1\right)⋅{ν}_{i}^{F}mod{Δ}_{F}\right)/{Δ}_{F}\right⌋, 0\right\} ,$ wherein
P represents the maximum prime number that does not exceed the sequence length N, Δ_{T} represents the maximum delay spread, Δ_{F} represents the maximum Doppler spread, $\left〈{τ}_{i}^{F}, {ν}_{i}^{F}\right〉$ represents the coordinates of the Doppler-domain cyclic shift reference point, $\left〈{\overline{τ}}_{i}^{F}, {\overline{ν}}_{i}^{F}\right〉$ represents the restricted coordinates, ${k}_{i}^{F}$ represents the quantity of delay-domain full cyclic shifts, the operator $\left⌊⋅\right⌋$ represents rounding down, and the operator $\left⌈⋅\right⌉$ represents rounding up.

54. The apparatus according to any one of claims 48 to 53, wherein the quantity ${\overline{\overline{k}}}_{i}^{F}$ of delay-domain far-end residual cyclic shifts satisfies: ${\overline{\overline{k}}}_{i}^{F} = \left⌊\left({d}_{i}^{F}+min\left\{{τ}_{i}^{F},P-{τ}_{i}^{F}\right\}\right)/{Δ}_{T}\right⌋ - {k}_{i}^{F} - {\overline{k}}_{i}^{F} ,$ wherein
P represents the maximum prime number that does not exceed the sequence length N, Δ_{T} represents the maximum delay spread, $\left〈{τ}_{i}^{F}, {ν}_{i}^{F}\right〉$ represents the coordinates of the Doppler-domain cyclic shift reference point, ${k}_{i}^{F}$ represents the quantity of delay-domain full cyclic shifts, ${\overline{k}}_{i}^{F}$ represents the quantity of delay-domain near-end residual cyclic shifts, and the operator $\left⌊⋅\right⌋$ represents rounding down.

55. A communication apparatus, comprising a module, a unit, or a means (means) configured to implement the method according to any one of claims 1 to 27, wherein the module, the unit, or the means is capable of being implemented by software, hardware, or a combination of software and hardware.

56. A communication apparatus, comprising a processor, wherein the processor is configured to implement the method according to any one of claims 1 to 27.

57. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 27 through a logic circuit or by executing code instructions.

58. A computer-readable storage medium, wherein the computer-readable storage medium stores instructions, and the instructions are run on a computer, to enable the computer to perform the method according to any one of claims 1 to 27.

59. A computer program product, comprising a computer program or instructions, wherein when the computer program or the instructions are run by a communication apparatus, the method according to any one of claims 1 to 27 is performed.

60. A chip system, comprising a processor, wherein the processor is configured to execute a computer program or instructions stored in a memory, to enable the chip system to implement the method according to any one of claims 1 to 27.
